# EUROPEAN PATENT APPLICATION

(11) **EP 4 600 539 A1**
(43) Date of publication of application: **13.08.2025**
(21) Application number: 23929342.6
(22) Date of filing: 30.03.2023
(51) Int. Cl.: F16M 11/06, F16M 11/18, G03B 17/56

(54) **HANDHELD GIMBAL DEVICE AND PHOTOGRAPHING ASSEMBLY**

(71) Applicant: SZ Shanzhi Technology Co., Ltd., Shenzhen, Guangdong 518000 (CN)
(72) Inventor: XUE, Guanghuai, Shenzhen, Guangdong 518000 (CN); PEI, Menghui, Shenzhen, Guangdong 518000 (CN); SU, Ruitao, Shenzhen, Guangdong 518000 (CN); DUAN, Yitong, Shenzhen, Guangdong 518000 (CN); GUO, Shanguang, Shenzhen, Guangdong 518000 (CN); OUYANG, Lei, Shenzhen, Guangdong 518000 (CN); ZHANG, Ge, Shenzhen, Guangdong 518000 (CN); CHEN, Cheng, Shenzhen, Guangdong 518000 (CN); JIN, Zhenyu, Shenzhen, Guangdong 518000 (CN)
(74) Representative: Goddar, Heinz J.
(86) International application number: PCT/CN2023/085252
(87) International publication number: WO 2024/197747

(57) **Abstract**

A handheld gimbal device (100) and a photographing assembly (200). The handheld gimbal device (100) includes a handle (11), a display unit (12), and a gimbal (13). The handle (11) includes a mount surface (14). The display unit (12) is rotatably arranged at the mount surface (14) such that the display unit (12) is able to reversibly switch between a first state and a second state. The display unit (12) includes a display surface (14). A rotation axis of the display unit (12) is perpendicular to the display surface (14). The display surface (15) faces away from the mount surface (14) in both the first state and the second state. A dimension of the display unit (12) in the first state along a lateral direction of the handle (11) is smaller than the dimension of the display unit (12) in the second state along the lateral direction of the handle (11). The gimbal (13) is arranged at the handle (11).

## Description

### TECHNICAL FIELD

The present disclosure generally relates to the field of photographing technologies, and, more particularly, to a handheld gimbal device and a photographing assembly.

### BACKGROUND

Handheld gimbal devices are generally small in size and easy to carry. They can be equipped with small photographing devices, such as photographing lenses, smart phones, etc. In existing technologies, a handheld gimbal device generally includes a handle, a display unit fixed on the handle, and some operation buttons, etc. However, because of the size limitation of the handheld gimbal device itself, the user experience is poor.

### SUMMARY

To solve the problem that the size of the handheld gimbal device in the existing technologies is small, resulting in poor user experience, the embodiments of the present disclosure provide a handheld gimbal device and a photographing assembly.

A handheld gimbal device of embodiments of the disclosure includes:
a handle including a mount surface;
a display unit rotatably arranged at the mount surface such that the display unit is able to reversibly switch between a first state and a second state, where: the display unit includes a display surface, a rotation axis of the display unit is perpendicular to the display surface, the display surface faces away from the mount surface in both the first state and the second state, and a dimension of the display unit in the first state along a lateral direction of the handle is smaller than the dimension of the display unit in the second state along the lateral direction of the handle; and
a gimbal arranged at the handle.

A handheld gimbal device of embodiments of the disclosure includes:
a handle including a mount surface;
a display unit arranged at the mount surface, where: the display unit has a first state and a second stage; the display unit is movable such that the display unit is able to reversibly switch between the first state and the second state; and a dimension of the display unit in the first state along a lateral direction of the handle is smaller than the dimension of the display unit in the second state along the lateral direction of the handle; and the display surface of the display unit faces away from the mount surface in the first state and the second state; and
a gimbal arranged at the handle.

A handheld gimbal device of embodiments of the disclosure includes:
a handle including a mount surface;
a display unit arranged at the mount surface, where: the display unit has a first state and a second data; the display unit is configured to be movable such that it is able to reversibly switch between a first state and a second state; and a dimension of the display unit in the first state along a lateral direction of the handle is smaller than the dimension of the display unit in the second state along the lateral direction of the handle ;
a gimbal arranged at the handle; and
a controller configured to control the switch of the operation state of the handheld gimbal device in response to the display unit switching between the first state and the second state.

A handheld gimbal device of embodiments of the disclosure includes:
a handle including a mount surface and a first interactive apparatus for receiving user instructions;
a display unit rotatably arranged at the mount surface such that the display unit is able to reversibly switch between a first state and a second state, where: the display unit includes a display surface, a rotation axis of the display unit is perpendicular to the display surface, the display surface faces away from the mount surface in both the first state and the second state, and a distance between a lower edge of the display unit in the first state and the first interactive apparatus is smaller than the distance between the lower edge of the display unit in the second state and the first interactive apparatus; and
a gimbal arranged at the handle.

A photographing assembly of embodiments of the disclosure includes:
a handheld gimbal device provided by any one of the above embodiments, and a photographing module, where the photographing module is arranged at the gimbal.
**In** the above-mentioned handheld gimbal device and photographing assembly, the display unit may be movable, which may reduce the influence of the handle size on the display unit size, such that the display unit is able to provide a larger picture or display more content, thereby improving the user experience. Or during the movement of the display unit, more operating space may be provided for the interactive apparatus, thereby facilitating user operation.

The above and/or additional aspects and advantages of the present disclosure will be illustrated in following description, and part will become apparent from the following description or understood through practice of the present disclosure.

### BRIEF DESCRIPTION OF THE DRAWINGS

The above and/or additional aspects and advantages of the present disclosure will become apparent and easily understood from the description of the embodiments in conjunction with the following drawings.
FIG. 1 to FIG. 27 are schematic structural diagrams of a handheld gimbal device consistent with embodiments of the present disclosure.
FIG. 28 and FIG. 29 are schematic diagrams showing positions of a first magnet and a second magnet consistent with embodiments of the present disclosure.
FIG. 30 is a cross-sectional view of a display unit and an adapter structure consistent with embodiments of the present disclosure.
FIG. 31 and FIG. 32 are schematic diagram showing directions of magnetic poles of a third magnet and a fourth magnet consistent with embodiments of the present disclosure.
FIG. 33 and FIG. 34 are schematic diagrams showing positions of a ring magnet and a yoke pair, consistent with embodiments of the present disclosure.
FIG. 35 and FIG. 36 are schematic diagrams showing positions of a fifth magnet and a sixth magnet, consistent with embodiments of the present disclosure.
FIG. 37 and FIG. 38 are schematic diagrams showing positions of a seventh magnet and an eighth magnet, consistent with embodiments of the present disclosure.
FIG. 39 is a schematic partial structural diagram of a handle consistent with embodiments of the present disclosure.
FIG. 40 to FIG. 42 are cross-sectional views of an adapter structure consistent with embodiments of the present disclosure.
FIG. 43 is another cross-sectional view of a display unit and an adapter structure consistent with embodiments of the present disclosure.
FIG. 44 is a cross-sectional view of a display unit, an adapter structure, and a flexible cable, consistent with embodiments of the present disclosure.
FIG. 45 to FIG. 51 are schematic structural diagrams of a connection rod consistent with embodiments of the present disclosure.
FIG. 52 is a schematic structural diagram of a flexible cable before folding, consistent with embodiments of the present disclosure.
FIG. 53 is a schematic structural diagram of a flexible cable after folding, consistent with embodiments of the present disclosure.
FIG. 54 is a schematic structural diagram of a flexible cable after bending, consistent with embodiments of the present disclosure.
FIG. 55 is a schematic structural diagram of a flexible cable with a protective layer consistent with embodiments of the present disclosure.
FIG. 56 is a schematic partial structural diagram of a handheld gimbal device consistent with embodiments of the present disclosure.
FIG. 57 to FIG. 60 are exploded views of a handheld gimbal device consistent with embodiments of the present disclosure.
FIG. 61 is a schematic diagram showing a handheld gimbal device switching photographing modes consistent with embodiments of the present disclosure.
FIG. 62 is a schematic diagram of a second interactive module of a handheld gimbal device consistent with embodiments of the present disclosure.
FIG. 63 to FIG. 65 are schematic diagrams showing a handheld gimbal device switching photographing modes in a recording state consistent with embodiments of the present disclosure.
FIG. 66 is a schematic diagram showing a handheld gimbal device switching on/off modes consistent with embodiments of the present disclosure.

Reference numerals:

handheld gimbal device - 100, handle - 11, display unit - 12, gimbal - 13, mount surface - 14, display surface - 15, photographing module - 16, display unit frame - 17, adapter structure - 18, base - 19, pressure cover - 20, fixation plate - 21, first axis - 22, base body - 23, second axis - 24, first member - 25, second member - 26, first magnet - 27, second magnet - 28, shaft - 29, third magnet - 30, fourth magnet - 31, third sub-magnet - 32, fourth sub-magnet - 33, fourth inner magnetic pole - 34 , fourth outer magnetic pole - 35, third inner magnetic pole - 36, third outer magnetic pole - 37, annular magnet - 38, yoke pair - 39, yoke - 40, pole shoe - 41, fifth magnet - 42, sixth magnet - 43, seventh magnet 44, limit structure - 45, first guide member - 46, second guide member - 47, travel guide groove - 48, telescopic component - 50, protrusion - 51, first side - 52, second side - 53, telescopic member- 54, sleeve - 55, cam - 56, mount member - 57, limit member - 58, limit component - 59, first convex-concave structure - 60, elastic member - 61, second convex-concave structure - 62, operation module - 63, connection rod mechanism - 64, connection plate - 65, track plate - 66, first guide column - 67, limit guide groove - 68, crank - 69, transmission structure - 70, track groove - 71, second guide column 72, gear - 73, rack - 74, bracket - 76, accommodation groove - 77, operation member - 78, first shaft assembly - 79, second shaft assembly - 80, third shaft assembly - 81, rotation shaft - 82, flexible cable - 83, circuit board - 84, first end member - 85, connection member - 86, second end component - 87, cable - 88, first section - 89, connection section - 90, second section - 91, protective layer - 92, upper cover - 93, bottom cover - 94, accommodation space - 95, heating element - 96, first heat dissipation element - 97, grip member - 98, second heat dissipation element - 99, shield cover - 101, back shell - 102, metal plate - 103, graphite sheet - 104, folding structure - 105, fixed screen - 108, rotatable screen - 109, position sensor - 110, first interactive apparatus - 111, second interactive apparatus - 112, photographing assembly - 200.

### DETAILED DESCRIPTION OF THE EMBODIMENTS

The technical solution in the embodiments of the present disclosure will be clearly and completely described below in conjunction with the drawings in the embodiments of the present disclosure. Obviously, the described embodiments are part of the embodiments of the present application, not all of the embodiments. Based on the embodiments in the present disclosure, all other embodiments obtained by those skilled in the art without creative work are within the scope and protection of the present disclosure.

In the description of the present disclosure, it should be understood that the terms "center," "longitudinal," "lateral," "length," "width," "thickness," "up," "down," "front," "back," "left," "right," "vertical," "horizontal," "top," "bottom," "inside," "outside," "clockwise," "counterclockwise" and the like indicate positions or positional relationships based on the positions or positional relationships shown in the accompanying drawings, and are only for the convenience of describing the present disclosure and simplifying the description, rather than indicating or implying that the device or element referred to must have a specific orientation, be constructed and operated in a specific orientation, and therefore cannot be understood as a limitation on the present disclosure. **In** addition, the terms "first" and "second" are only used for descriptive purposes, and cannot be understood as indicating or implying relative importance or implicitly indicating the number of technical features indicated. Therefore, the features defined as "first" and "second" may explicitly or implicitly include one or more of the features.

In the description of the present disclosure, the meaning of "multiple" is two or more, unless otherwise clearly and specifically defined. In the description of the present disclosure, it should be noted that, unless otherwise clearly specified and limited, the terms "installed" or "connected" should be understood in a broad sense. For example, it can be a fixed connection, a detachable connection, or an integral connection. It can be a mechanical connection or an electrical connection. It can be directly connected or indirectly connected through an intermediate medium, and it can be the internal connection of two elements or the interaction relationship between two elements. For those ordinarily skilled in the art, the specific meanings of the above terms in the present disclosure can be understood according to the specific circumstances.

In the present disclosure, unless otherwise clearly specified and limited, the first feature "above" or "below" the second feature can include the first and second features directly contacting, and can also include the first and second features not directly contacting but contacting through another feature between them. Moreover, the first feature "above" or "on" the second feature include the first feature directly above and obliquely above the second feature, or simply indicate that the first feature is higher in level than the second feature. The first feature "below," "under," or "beneath" the second feature include the first feature directly below and obliquely below the second feature, or simply indicate that the first feature is less in level than the second feature.

The above disclosure provides many different implementations or examples for realizing different structures of the present disclosure. To simplify the disclosure of the disclosure, the parts and settings of specific examples are described above. Of course, they are only examples, and the purpose is not to limit the disclosure. In addition, the disclosure can repeat reference numbers and/or reference letters in different examples, and this repetition is for the purpose of simplification and clarity, which itself does not indicate the relationship between the various embodiments and/or settings discussed. In addition, the various specific processes and material examples provided by the disclosure, but those of ordinary skill in the art can be aware of the disclosure of other processes and/or the use of other materials.

In existing technologies, a handheld gimbal device includes a display unit fixed on a handle. Because of the limitation of the horizontal size of the handle, the size of the display unit is limited and generally cannot be made larger, resulting in a poor user experience.

Based on this, the present disclosure provides a handheld gimbal device 100. The handheld gimbal device 100 includes a handle 11, a display unit 12, and a gimbal 13. The handle 11 is provided with a mount surface 14, the display unit 12 is arranged at the handle 11, and the display unit 12 has a first state and a second state. The display unit 12 is configured to be movable to reversibly switch between the first state and the second state. The horizontal dimension of the display unit 12 along the handle 11 in the first state is smaller than the horizontal dimension along the handle 11 in the second state. In the first state and the second state, the display surface 15 of the display unit 12 faces away from the mount surface 14. The gimbal 13 is arranged at the handle 11.

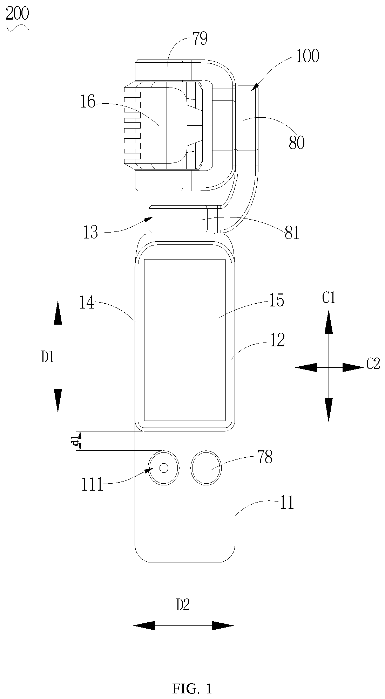

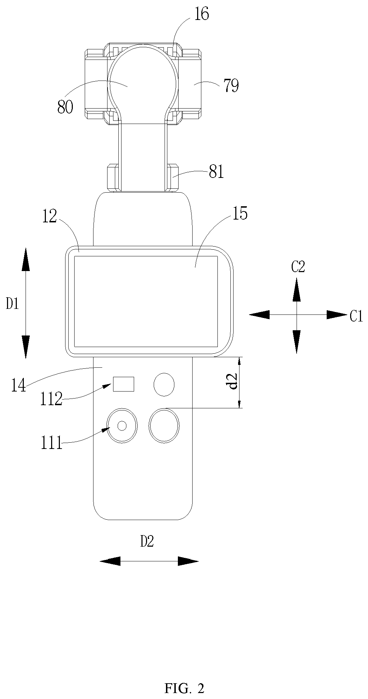

The lateral direction of the handle 11 refers to the left-right direction when the user holds the handle 11. In FIG. 1 and FIG. 2, the length direction of the handle 11 is the D1 direction, and the width direction is the D2 direction. The D2 direction may also be the lateral direction of the handle 11, and the D1 direction may also be the vertical direction of the handle. The length direction of the display unit 12 is the C1 direction, and the width direction is the C2 direction.

It should be noted that the "movement" may mean that the entire display unit 12 moves relative to the handle 11, or that a part of the display unit 12 moves relative to the handle 11 while the other part is fixed relative to the handle 11. In the first state and the second state, the display surface 15 of the display unit 12 faces away from the mount surface 14, which means that the display surface 15 and the mount surface 14 are located at opposite sides of the main body of the display unit 12. The "display surface" may be a working surface of the display unit 12 in a working state where the display screen is able to be viewed.

In the above-mentioned handheld gimbal device 100, the display unit 12 may be movable to change the horizontal size of the display unit 12 on the handle 11, thereby reducing the influence of the size of the handle 11 on the size of the display unit 12. Therefore, the handheld gimbal device 100 may have a smaller volume, and may be switched to a larger horizontal size on the handle 11 according to actual needs to display more content horizontally or enlarge the original smaller picture frame as a whole to a larger display picture frame. For example, in existing technologies, to display more content, the screen is set smaller because of the limitation of the handle and the size of the display unit, which makes it difficult for users to see the details. In the present disclosure, when the display unit 12 is switched to the second state, the frame may be automatically enlarged to fill the display unit. The second state may be understood as switching from the small banner screen to a large banner screen, such that the screen size is larger and the user is able to see it more clearly. As another example, in existing technologies, to enlarge the frame as much as possible, the photographing range is small and the display content is limited due to the size of the handle and the display unit. In the present disclosure, by switching the display unit 12 to the second state, a larger display range in the lateral direction may be achieved, and more photographing content in the lateral direction may be presented, which is conducive to realizing the horizontal tracking and other functions of the handheld gimbal device 100. Further, since the display unit 12 is movable, the influence of the size of the handle 11 on the size of the display unit 12 may be reduced, such that the display unit 12 may be made larger, which may improve the defects of the traditional display unit being small and weak in interaction, and improve the user experience. Therefore, the above-mentioned handheld gimbal device 100 may be more flexible and convenient to use, and the user may be more comfortable to watch, which is conducive to improving the user experience.

In one embodiment, the handle 11 may be a column. In the embodiment shown in FIG. 1, the handle 11 is in the shape of a square column. In other embodiments, the handle 11 may also be in other shapes, not limited to a column shape. In one embodiment, the mount surface 14 may be the surface of the handle 11 facing the user.

The display unit 12 may include, but is not limited to, an OLED display unit, an LCD display unit, or an LED display unit. The display unit 12 may also be a display unit 12 with or without a touch function. The movement mode of the display unit 12 may include, but is not limited to, rotation, folding, telescopic translation, or a combination of the above movements.

When the display unit 12 is on, the display surface 15 of the display unit 12 may display information, including but not limited to, parameters of the handheld gimbal device 100, images captured by the photographing module 16 on the gimbal 13, virtual buttons, photographing modes, or other content. The display unit 12 may have the first state and the second state. The display unit 12 may be configured to be movable to switch between the first state and the second state. In the first state and the second state, the display surface 15 of the display unit 12 may face away from the mount surface 14. In one embodiment, in both the first state and the second state, the display surface 15 of the display unit 12 may face the user, such that the user is able to receive the content displayed on the display surface 15 in a timely manner.

Since the display unit 12 may be movable, the influence of the size of the handle 11 on the size of the display unit 12 may be reduced. In one embodiment as shown in FIG. 1, the handle 11 is in the shape of a square column, and the display unit 12 is in the shape of a rectangle and may be made longer. In the first state, the display unit 12 may be in a vertical screen state, and the length direction of the display unit 12 may be along the length direction of the handle 11. At this time, the display unit 12 may completely overlap with the handle 11, as shown in FIG. 1, to reduce the space occupied by the handheld gimbal device 100. In the second state, the display unit 12 may be in a horizontal screen state, and the length direction of the display unit 12 may be perpendicular to the length direction of the handle 11, that is, the length direction of the display unit 12 may be along the lateral direction of the handle 12, as shown in FIG. 2. By comparison, it may be seen that when the display unit 12 switches between the first state and the second state, its size along the lateral direction of the handle 11 may change.

The gimbal 13 may be disposed at the top of the handle 11. The gimbal 13 may include but is not limited to a single-axis gimbal, a two-axis gimbal, or a three-axis gimbal. The photographing module 16 may be installed on the gimbal 13. The photographing module 16 may be electrically coupled to the display unit 12, and the electrical coupling method may be direct coupling or indirect coupling. The picture photographed by the photographing module 16 may be displayed on the display unit 12.

In some embodiments, the gimbal 13 may be electrically coupled to the display unit 12, and the electrical coupling method may be direct coupling or indirect coupling, such that the parameters of the gimbal 13 may be displayed or the gimbal 13 may be controlled by the display unit 12.

In some embodiments, the display unit 12 may have a length dimension and a width dimension that may be smaller than the length dimension. In the first state, the width direction of the display unit 12 may be set along the lateral direction of the handle 11. And, in the second state, the length direction of the display unit 12 may be set along the lateral direction of the handle 11. In this way, the display unit 12 may be set to have different length dimensions and width dimensions, such that the length dimension may be designed to be larger and the display unit 12 may display more content or present a larger picture in the second state.

Specifically, in one embodiment, the display unit 12 may be square. In FIG. 1 and FIG. 2, the length dimension of the display unit 12 is the dimension along the length direction C1, and the width dimension is the dimension along the width direction C2. In the second state, the length direction of the display unit 12 may be arranged along the lateral direction of the handle 11, such that the display unit 12 displays more content in the lateral direction of the handle 11. It should be noted that the display unit 12 may be rectangular, elliptical or other regular or irregular shapes in various embodiments, and the present disclosure does not limit this.

In some embodiments, in the first state, the periphery of the display unit 12 may be flush with the periphery of the mount surface 14, or the display unit 12 may be located inside the mount surface 14; in the second state, the display unit 12 may extend out of the mount surface 14 along two ends of the lateral direction of the handle 11. In this way, in the first state, the structure of the handheld gimbal device 100 may be more compact, and in the second state, the display unit 12 may be unfolded to display more content or present a larger picture.

Specifically, in FIG. 1, in the first state, the periphery of the display unit 12 is flush with the periphery of the mount surface 14. In other embodiments, the display unit 12 may be located inside the mount surface 14. That is, in the first state, the display unit 12 may have no protruding member relative to the mount surface 14, and in the first state, the space occupied by the handheld gimbal device 100 may be reduced.

In the second state, the display unit 12 may extend out from the mount surface 14 along the two ends of the handle 11 in the lateral direction. Therefore, in the second state, the display unit 12 may have a larger size along the lateral direction of the handle 11 and may display more content.

In some embodiments, in the first state, the length direction of the display unit 12 may be along the length direction of the handle 11, and, in the second state, the length direction of the display unit 12 may form an angle greater than zero with the length direction of the handle 11.

In this way, in the first state, the structure of the handheld gimbal device 100 may be more compact, and in the second state, the display unit 12 may be unfolded to display more content or present a larger picture.

Specifically, as shown in FIG. 1, in the first state, the length direction of the display unit 12 is along the length direction of the handle 11, the width of the display unit 12 is substantially the same as the width of the handle 11, the display unit 12 may completely overlap with the handle 11, and the display unit 12 is arranged vertically. That is, the first state is that the display unit 12 is in a vertical screen state, making the structure of the handheld gimbal device 100 more compact and reducing the space occupied by the handheld gimbal device 100. In other embodiments, in the first state, the width of the display unit 12 may also be greater than or less than the width of the handle 11.

As shown in FIG. 2, in the second state, the angle formed between the length direction of the display unit 12 and the length direction of the handle 11 is 90 degrees, that is, the length direction of the display unit 12 is perpendicular to the length direction of the handle 11, and the display unit 12 is arranged horizontally. That is, the second state is a state that the display unit 12 is in a horizontal screen state. Compared with the display unit 12 arranged vertically, the display unit 12 arranged horizontally may increase the viewing angle range, display more content, or enlarge the small banner image on the original vertical screen to the converted horizontal screen so as to fill the horizontal screen, such that the user may watch more clearly and comfortably, which is more in line with the user's habit of watching the content displayed by the display unit 12 and improves the user experience.

It may be understood that in other embodiments, in the second state, the angle formed between the length direction of the display unit 12 and the length direction of the handle 11 may also be other values, which is not limited to 90 degrees. For example, the angle may be 30 degrees, 45 degrees, or 60 degrees, which is not specifically limited.

In some embodiments, the display unit 12 may be rotatably arranged at the mount surface 14 of the handle 11, or may be folded on the mount surface 14 of the handle 11, or may be retracted on the mount surface 14 of the handle 11. In this way, the movement mode of the display unit 12 may be flexible.

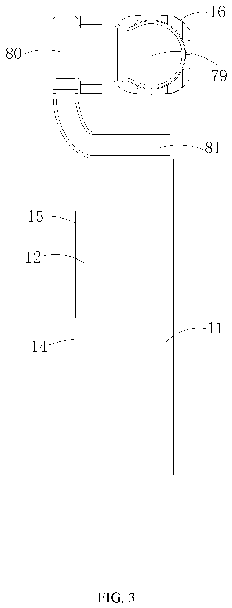

As shown in FIG. 1 to FIG. 3, in one embodiment, the handheld gimbal device 100 includes a handle 11, a display unit 12 and a gimbal 13. The handle 11 is provided with a mount surface 14. The display unit 12 is rotatably arranged at the mount surface 14 such that the display unit 12 may be reversibly switched between the first state and the second state. The display unit 12 is provided with a display surface 15. The rotation axis of the display unit 12 is perpendicular to the display surface 15. In the first state and the second state, the display surface 15 faces away from the mount surface 14. The dimension of the display unit 12 in the first state along the lateral direction of the handle 11 is smaller than the dimension of the display unit 12 in the second state along the lateral direction of the handle 11. The gimbal 13 is arranged at the handle 11.

In the above-mentioned handheld gimbal device 100, the display unit 12 may be rotatably arranged at the mount surface 14, which may reduce the influence of the size of the handle 11 on the size of the display unit 12, such that the display unit 12 may provide a larger picture or display more content, thereby improving the user experience.

Specifically, the display unit 12 may be rotated to change the horizontal size of the display unit 12 on the handle 11, to reduce the influence of the size of the handle 11 on the size of the display unit 12, such that the handheld gimbal device 100 may have a smaller volume, and may be switched to have a larger horizontal size on the handle 11 according to actual needs to display more content in the lateral direction or enlarge the original smaller picture frame as a whole to a larger display picture frame. For example, in existing technologies, to display more content, the screen is set smaller because of the limitation of the handle and the size of the display unit, which makes it difficult for users to see the details. In the present disclosure, when the display unit 12 is switched to the second state, the frame may be automatically enlarged to fill the display unit. The second state may be understood as switching from the small banner screen to a large banner screen, such that the screen size is larger and the user is able to see it more clearly. As another example, in existing technologies, to enlarge the frame as much as possible, the photographing range is small and the display content is limited due to the size of the handle and the display unit. In the present disclosure, by switching the display unit 12 to the second state, a larger display range in the lateral direction may be achieved, and more photographing content in the lateral direction may be presented, which is conducive to realizing the horizontal tracking and other functions of the handheld gimbal device 100. Further, since the display unit 12 is movable, the influence of the size of the handle 11 on the size of the display unit 12 may be reduced, such that the display unit 12 may be made larger, which may improve the defects of the traditional display unit being small and weak in interaction, and improve the user experience. Therefore, the above-mentioned handheld gimbal device 100 may be more flexible and convenient to use, and the user may be more comfortable to watch, which is conducive to improving the user experience.

In FIG. 1 and FIG. 2, the display unit 12 is a square display unit. It may be understood that in other embodiments, the shape of the display unit 12 is not limited to a square, but may also be other shapes, as long as the horizontal dimension of the display unit 12 along the handle 11 in the first state is smaller than the horizontal dimension along the handle 11 in the second state.

Since the display unit 12 is able to rotate, the influence of the size of the handle 11 on the size of the display unit 12 may be reduced. Specifically, in FIG. 1, the handle 11 is in the shape of a square column, and the display unit 12 is in the shape of a rectangle and may be made longer. In the first state, the horizontal dimension of the display unit 12 along the handle 11 in the first state is the width of the display unit 12. The display unit 12 may be in a portrait state, and the length direction of the display unit 12 is along the length direction of the handle 11. At this time, the display unit 12 may completely overlap with the handle 11, as shown in FIG. 1, to reduce the space occupied by the handheld gimbal device 100. In the second state, the horizontal dimension of the display unit 12 along the handle 11 in the second state is the length of the display unit. The display unit 12 may be in a landscape state, and the length direction of the display unit 12 is perpendicular to the length direction of the handle 11, that is, the length direction of the display unit 12 is along the lateral direction of the handle 12, as shown in FIG. 2. By comparison, it may be seen that when the display unit 12 switches between the first state and the second state, its dimension along the lateral direction of the handle 11 changes.

Specifically, when the display unit 12 is rotatably arranged at the handle 11, the display unit 12 may swing around one end of the display unit 12, or rotate around the middle position of the display unit 12, or rotate around a structural member outside the display unit 12, which is not specifically limited here. In the embodiment shown in FIG. 2, the display unit 12 rotates around the middle position of the display unit 12, and may be rotated from the first state to the second state, or from the second state to the first state.

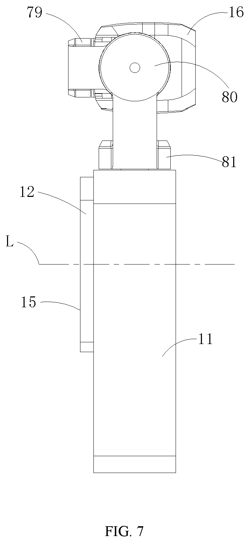

In some embodiments, as shown in FIG. 7, the display unit 12 is rotatably arranged at the handle 11, and the rotation axis L of the display unit 12 is perpendicular to the display surface 15.

In this way, the movement mode of the display unit 12 is simple.

Specifically, the rotation axis of the display unit 12 is perpendicular to the display surface 15. When the display unit 12 switches back and forth between the first state and the second state, it may be only necessary to (manually or electrically) drive the display unit 12 to rotate around the rotation axis, without flipping or other operations. The movement mode of the display unit 12 may be simple, which greatly facilitates the user to adjust the state of the display unit 12. Moreover, in the first state and the second state, the display surface 15 faces away from the mount surface 14. In the power-on state, the user may always view the content displayed on the display surface 15, which improves the user's experience.

In some embodiments, the movement stroke of the display unit 12 (when the display unit 12 is rotated and arranged at the mount surface 14, the movement stroke is the rotation stroke) may include a first movement stage from the first state to a critical position, and a second movement stage from the critical position to the second state. In response to the display unit 12 switching from the first state to the second state, the display unit 12 may automatically reach the second state after passing the critical position. In response to the display unit 12 switching from the second state to the first state, the display unit 12 may automatically reach the first state after passing the critical position.

In this way, the movement stroke of the display unit 12 may be divided into two movement stages.

Specifically, in one embodiment, during the process of manually operating the display unit 12 to switch from the first state to the second state, the user may switch the display unit 12 from the first state to the critical position, such that the display unit 12 passes through the first movement stage. After reaching the critical position, the user may release the display unit 12, and the display unit 12 may automatically reach the second state from the critical position. In the process of manually operating the display unit 12 to switch from the second state to the first state, the user may switch the display unit 12 from the second state to the critical position, such that the display unit 12 passes through the second movement stage. After reaching the critical position, the user may let go of the display unit 12, and the display unit 12 may automatically reach the first state from the critical position. In this way, the semi-automatic drive of the display unit 12 may be realized, which may save manpower, simplify the operation, and improve the user experience. In the process of electrically operating the display unit 12 to switch from the first state to the second state, the drive apparatus (not shown) may drive the display unit 12 to switch from the first state to the critical position, such that the display unit 12 passes through the first movement stage. After reaching the critical position, the drive apparatus may stop driving the display unit 12, and the display unit 12 may automatically reach the second state from the critical position. During the process of switching the display unit 12 from the second state to the first state by electric operation, the drive apparatus may drive the display unit 12 to switch from the second state to the critical position, such that the display unit 12 passes through the second movement stage. After reaching the critical position, the drive apparatus may stop driving the display unit 12, and the display unit 12 may automatically reach the first state from the critical position, which may save power and improve the endurance of the handheld gimbal device 100.

In some embodiments, the display unit 12 may be connected to the handle 11 through an adapter structure 18, and the adapter structure 18 may enable the display unit 12 to automatically and reversibly reach the first state or the second state.

In this way, the state switching of the display unit 12 may be convenient.

Specifically, the adapter structure 18 may connect the display unit 12 and the handle 11. The adapter structure 18 may enable the display unit 12 to automatically and reversibly reach the first state or the second state, that is, the adapter structure 18 may enable the display unit 12 to automatically reach the first state from the second state, or reach the second state from the first state. The switching of the state of the display unit 12 driven by the adapter structure 18 may be triggered by the user or the handheld gimbal device 100, which is not specifically limited here.

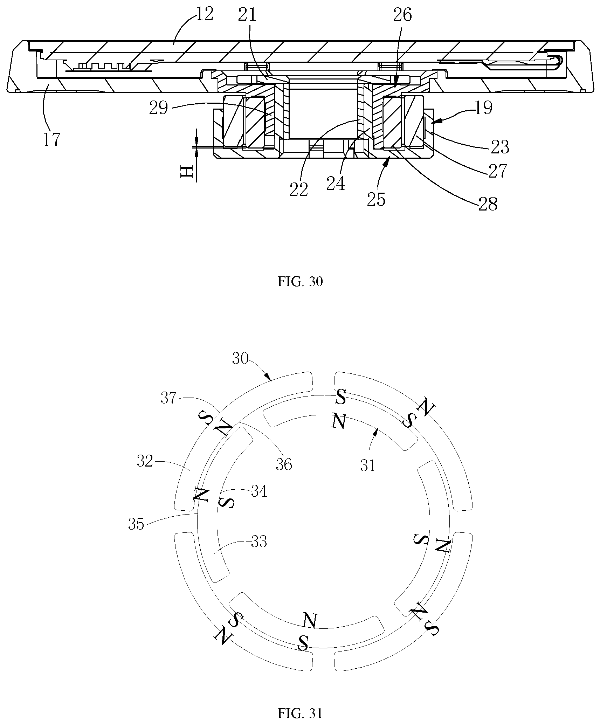

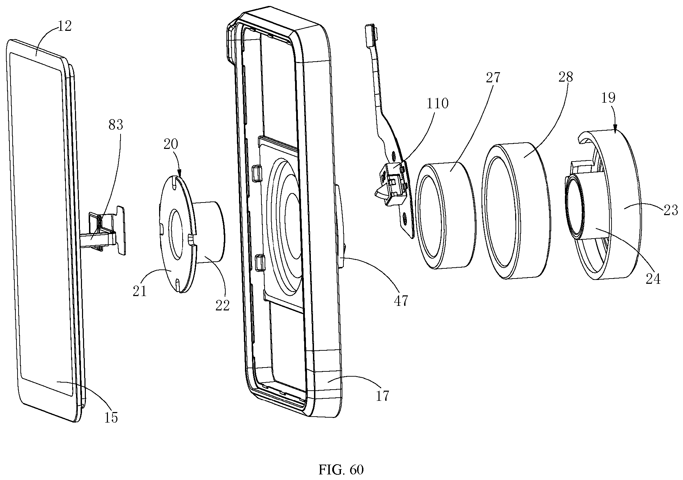

As shown in FIG. 30 and FIG. 60, the adapter structure 18 includes a base 19 and a pressure cover 20. The pressure cover 20 includes a fixed plate 21 and a first shaft 22. The first shaft 22 is connected to the fixed plate 21. The fixed plate 21 is fixed in the display unit frame 17, and the first shaft 22 passes through the display unit frame 17. The base 19 includes a base body 23 and a second shaft 24. The base body 23 may be fixed on the handle 11. The second shaft 24 is connected to the base body 23. The second shaft 24 may be sleeved on the outside of the first shaft 22, and the first shaft 22 and the second shaft 24 are rotatably connected.

In some embodiments, the adapter structure 18 may include a first member 25 and a second member 26 that are rotatably engaged with each other. The first member 25 may be connected to the handle 11, and the second member 26 may be connected to the display unit 12. The direction of the force between the first member 25 and the second member 26 may be configured to change during the movement of the display unit 12. Therefore, when the display unit 12 switches from the first state to the second state, in the first movement stage, the first member 25 applies movement resistance to the second member 26 in the first movement stage, and the first member 25 may apply a driving force to the second member 26 in the second movement stage. When the display unit 12 switches from the second state to the first state, in the second movement stage, the first member 25 may apply movement resistance to the second member 26, and in the first movement stage, the first member 25 may apply a driving force to the second member 26.

In this way, the state switching of the display unit 12 may be controlled by the first member 25 and the second member 26.

Specifically, during the movement of the display unit 12, the direction of the acting force between the first member 25 and the second member 26 may change. Therefore, when the display unit 12 switches from the first state to the second state, in the second movement stage, the first member 25 may apply a driving force to the second member 26 such that the display unit 12 may automatically reach the second state after passing the critical position; and when the display unit 12 switches from the second state to the first state, in the first movement stage, the first member 25 may apply a driving force to the second member 26 such that the display unit 12 may automatically reach the first state after passing the critical position.

In FIG. 30 and FIG. 60, the first member 25 further includes a base 19, and the second member 26 further includes a pressure cover 20.

In some embodiments, the force between the first member 25 and the second member 26 may be a magnetic force.

In this way, the cost and structural complexity of the handheld gimbal device 100 may be reduced.

Specifically, by using magnetic force as a driving force or a movement resistance, the switching of the force between the first member 25 and the second member 26 between the driving force and the movement resistance may be realized, by configuring the first member 25 and the second member 26 based on the principle that like poles repel and opposite poles attract, without the need to design a complex structure to achieve this, and the cost of the handheld gimbal device 100 may also be reduced.

In some embodiments, the first member 25 and the second member 26 may rotate relative to each other. The first member 25 includes a first magnet 27, the second member 26 includes a second magnet 28. The first magnet 27 and the second magnet 28 are arranged opposite to each other, and a repulsive force is generated between the first magnet 27 and the second magnet 28. The critical position is the angle when the magnetization direction of the first magnet 27 and the magnetization direction of the second magnet 28 are along the same straight line.

In this way, the display unit 12 may automatically reach the second state or the first state after passing the critical position through the first magnet 27 and the second magnet 28.

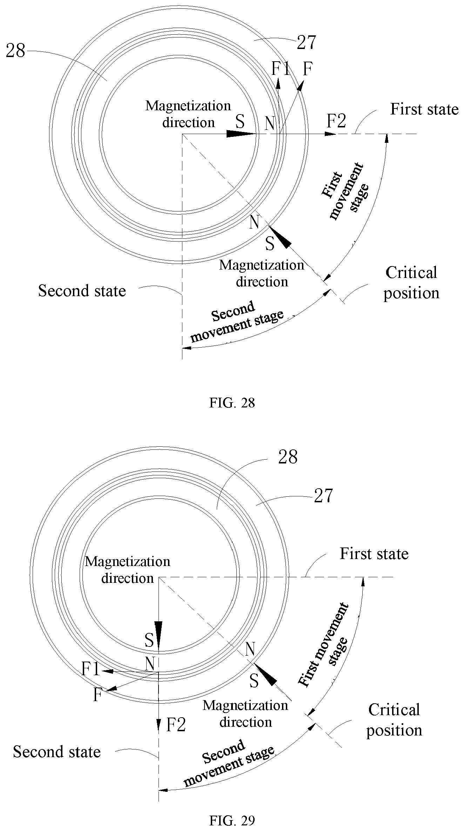

Specifically, as shown in FIG. 28 to FIG. 29, the critical position is the angle when the magnetization direction of the first magnet 27 and the magnetization direction of the second magnet 28 are along the same straight line. At the critical position, the force between the first magnet 27 and the second magnet 28 is only radial. Initially, the magnetization direction of the first magnet 27 is offset from the magnetization direction of the second magnet 28, and the offset angle is the largest. Applying a magnetic field to the magnet along the magnetic field orientation direction such that the magnet reaches a technical saturation state is called magnetization, and the magnetization direction is the above-mentioned orientation direction.

In some embodiments, as shown in FIG. 28 to FIG. 29, in the first movement stage, the magnetization direction of the first magnet 27 is staggered with the magnetization direction of the second magnet 28, and the first magnet 27 applies movement resistance or a driving force to the second magnet 28. In the second movement stage, the magnetization direction of the first magnet 27 is staggered with the magnetization direction of the second magnet 28, and the first magnet 27 applies a driving force or movement resistance to the second magnet 28.

In this way, the interaction between the first magnet 27 and the second magnet 28 may be used to form a driving force or movement resistance.

When the display unit 12 switches from the first state to the second state, in the first movement stage, the magnetization direction of the first magnet 27 is staggered with the magnetization direction of the second magnet 28, and the repulsive force of the first magnet 27 on the second magnet 28 causes the first magnet 27 to apply movement resistance to the second magnet 28. When the display unit 12 switches from the second state to the first state, in the first movement stage, the magnetization direction of the first magnet 27 is staggered with the magnetization direction of the second magnet 28, and the repulsion force of the first magnet 27 on the second magnet 28 causes the first magnet 27 to apply a driving force to the second magnet 28.

When the display unit 12 switches from the second state to the first state, in the second movement stage, the magnetization direction of the first magnet 27 is staggered with the magnetization direction of the second magnet 28, and the repulsion force of the first magnet 27 on the second magnet 28 causes the first magnet 27 to apply a movement resistance to the second magnet 28. When the display unit 12 switches from the first state to the second state, in the second movement stage, the magnetization direction of the first magnet 27 is staggered with the magnetization direction of the second magnet 28, and the repulsion force of the first magnet 27 on the second magnet 28 causes the first magnet 27 to apply a driving force to the second magnet 28.

In the first state, as shown in FIG. 28, the second magnet 28 is subjected to the repulsive force F of the first magnet 27, and the repulsive force F has repulsive components F2 and F1 in the radial and tangential directions of the second magnet 28, respectively, and the repulsive component F1 in the tangential direction mainly affects the rotation of the second magnet 28. When the display unit 12 switches from the first state to the second state, that is, the second magnet 28 rotates from the position corresponding to the first state shown in FIG. 28 to the position corresponding to the second state, in the first movement stage, the first magnet 27 forms a movement resistance to the repulsive component F1 of the second magnet 28. When the display unit 12 is in the critical position, the force between the first magnet 27 and the second magnet 28 is radial. In the second movement stage, after the display unit 12 passes the critical position, as shown in FIG. 29, the magnetization direction of the first magnet 27 and the magnetization direction of the second magnet 28 are re-staggered, and the repulsive force F1 in the tangential direction changes compared with the first movement stage, that is, the direction of the interaction torque between the first magnet 27 and the second magnet 28 changes, and the first magnet 27 forms a driving force on the repulsive force F1 of the second magnet 28, thereby enabling the display unit 12 to automatically reach the second state.

In the second state, as shown in FIG. 29, the second magnet 28 is subjected to the repulsive force F of the first magnet 27, and the repulsive force F has repulsive components F2 and F1 in the radial and tangential directions of the second magnet 28, respectively. The repulsive force F1 in the tangential direction mainly affects the rotation of the second magnet 28, and the repulsive force F1 in the second state is opposite to the repulsive force F1 in the first state, and the magnitude may be equal. When the display unit 12 switches from the second state to the first state, in the second movement stage, the repulsive force F1 of the first magnet 27 forms a movement resistance to the repulsive force F1 of the second magnet 28. When the display unit 12 is at the critical position, the magnetization direction of the first magnet 27 and the magnetization direction of the second magnet 28 are along the same straight line, and the force between the first magnet 27 and the second magnet 28 is radial. In the first movement stage, after the display unit 12 passes the critical position, as shown in FIG. 28, the magnetization direction of the first magnet 27 and the magnetization direction of the second magnet 28 are staggered again, and the repulsive component force F1 in the tangential direction changes compared with the second movement stage, that is, the direction of the interaction torque between the first magnet 27 and the second magnet 28 changes, and the repulsive component force F1 of the first magnet 27 on the second magnet 28 forms a driving force, thereby enabling the display unit 12 to automatically reach the first state. It should be noted that the force analysis shown in FIG. 28 and FIG. 29 only shows the force situation of the first magnet 27 and the second magnet 28 on one side, and the other side may also be subject to the same repulsive torque. In addition, the direction of the force F shown in FIG. 28 and FIG. 29 is only used to roughly indicate the force angle of the point, used to explain this embodiment, and cannot accurately represent the actual force angle at that point.

In some embodiments, as shown in FIG. 28 and FIG. 29, the first magnet 27 is in a circular ring shape, and the second magnet 28 is in a circular ring shape. The first magnet 27 is sleeved on the outside of the second magnet 28, or the second magnet 28 is sleeved on the outside of the first magnet 27.

In this way, the space utilization rate of the handheld gimbal device 100 may be improved.

It should be noted that in other embodiments, the first member 25 and the second member 26 may not be set as a rotating connection mode, but may be set as a phase slip connection mode.

Specifically, the second magnet 28 may be fixed on the display unit 12, the first magnet 27 may be fixed on the handle 11, and the display unit 12 may be rotatably connected to the handle 11. In FIG. 28, the first magnet 27 is sleeved on the outside of the second magnet 28. In other embodiments, the second magnet 28 may be sleeved on the outside of the first magnet 27. By sleeve-tying the circular ring magnets with each other, the internal space of the handheld gimbal device 100 may be fully utilized, thereby improving the space utilization rate.

In FIG. 30, the first magnet 27 is disposed in the base 23, and the second magnet 28 is arranged at the outer periphery of the shaft 29 on the display unit frame 17. The shaft 29 may be sleeved on the outer side of the second shaft 24.

In some embodiments, as shown in FIG. 30, the first magnet 27 and the second magnet 28 are at least partially staggered along the axial direction of the adapter structure 18.

In this way, it is ensured that the display unit 12 will not produce axial movement during the rotation process.

Specifically, the first magnet 27 and the second magnet 28 are at least partially staggered in the axial direction of the adapter structure 18, such that there is a certain height difference H between the first magnet 27 and the second magnet 28 in the axial direction of the adapter structure 18, ensuring that the first magnet 27 and the first magnet 27 may generate an axial repulsive force, ensuring that the display unit 12 will not produce axial movement during the rotation process. The specific size of the height difference H may be determined according to actual needs and is not specifically limited here.

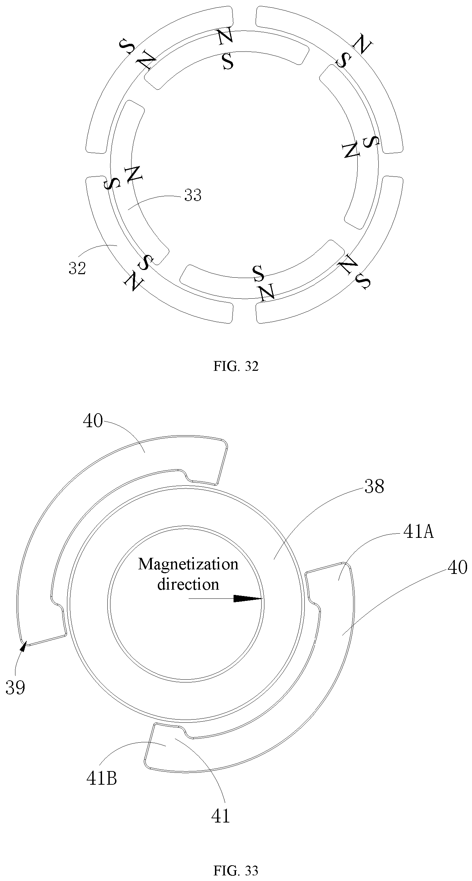

In some embodiments, as shown in FIG. 31 and FIG. 32, the first member 25 and the second member 26 may rotate relative to each other. The first member 25 includes a third magnet 30, the second member 26 includes a fourth magnet 31. The third magnet 30 and the fourth magnet 31 are arranged oppositely, and the critical position is the angle when the magnetization direction of the third magnet 30 and the magnetization direction of the fourth magnet 31 are along the same straight line. The third magnet 30 includes a plurality of third sub-magnets 32, and the plurality of third sub-magnets 32 are arranged at intervals along the circumferential direction. The fourth magnet 31 includes a plurality of fourth sub-magnets 33, and the plurality of fourth sub-magnets 33 are arranged at intervals along the circumferential direction.

In this way, the display unit 12 may automatically reach the second state or the first state after passing the critical position through the plurality of third sub-magnets 32 and the plurality of fourth sub-magnets 33.

Specifically, the critical position is the angle when the magnetization direction of the third magnet 30 and the magnetization direction of the fourth magnet 31 are along the same straight line. Initially, the magnetization direction of the third magnet 30 is staggered with the magnetization direction of the fourth magnet 31. Specifically, the magnetization direction of the plurality of third sub-magnets 32 is staggered with the magnetization direction of the plurality of fourth sub-magnet 33.

When the display unit 12 switches from the first state to the second state, in the first movement stage, the angle between the magnetization direction of the plurality of third sub-magnets 32 and the magnetization direction of the plurality of fourth sub-magnets 33 gradually decreases, and the repulsion force of the plurality of third sub-magnets 32 on the plurality of fourth sub-magnets 33 forms a movement resistance. When the display unit 12 is at the critical position, the magnetization direction of the plurality of third sub-magnets 32 and the magnetization direction of the plurality of fourth sub-magnets 33 are along the same straight line. In the second movement stage, after the display unit 12 passes the critical position, at this time, the magnetization direction of the plurality of third sub-magnets 32 and the magnetization direction of the plurality of fourth sub-magnets 33 are staggered again, and the repulsion force of the plurality of third sub-magnets 32 on the plurality of fourth sub-magnets 33 forms a driving force, thereby enabling the display unit 12 to automatically reach the second state.

When the display unit 12 switches from the second state to the first state, in the second movement stage, the angle between the magnetization direction of the plurality of third sub-magnets 32 and the magnetization direction of the plurality of fourth sub-magnets 33 gradually decreases, and the repulsion force of the plurality of third sub-magnets 32 on the plurality of fourth sub-magnets 33 forms a movement resistance. When the display unit 12 is at the critical position, the magnetization direction of the plurality of third sub-magnets 32 and the magnetization direction of the plurality of fourth sub-magnets 33 are along the same straight line. In the first movement stage, after the display unit 12 passes the critical position, the magnetization direction of the plurality of third sub-magnets 32 and the magnetization direction of the plurality of fourth sub-magnets 33 are re-staggered, and the repulsion force of the plurality of third sub-magnets 32 on the plurality of fourth sub-magnets 33 forms a driving force, thereby enabling the display unit 12 to automatically reach the first state.

The plurality of third sub-magnets 32 and the plurality of fourth sub-magnets 33 are arranged at intervals along the circumferential direction, such that the force between the third magnet 30 and the fourth magnet 31 may be dispersed, and the display unit 12 may rotate more smoothly.

The magnetization method of a magnet may be multiple single-sided monopole. Or the magnet may be made into two whole magnetic rings, and the magnetization method may be single-sided four-pole. The magnetic pole angle may not be evenly divided, or may be a single-sided 2n (n≥2) pole.

In some embodiments, in the first movement stage, the magnetization direction of the plurality of third sub-magnets 32 is staggered from the magnetization direction of the plurality of fourth sub-magnets 33, and the plurality of third sub-magnets 32 applies a movement resistance or a driving force to the plurality of fourth sub-magnets 33. In the second movement stage, the magnetization direction of the plurality of third sub-magnets 32 is staggered from the magnetization direction of the plurality of fourth sub-magnets 33, and the plurality of third sub-magnets 32 applies a driving force or a movement resistance to the plurality of fourth sub-magnets 33.

In this way, the interaction between the plurality of third sub-magnets 32 and the plurality of fourth sub-magnets 33 may be used to form a driving force or a movement resistance.

When the display unit 12 is switched from the first state to the second state, in the first movement stage, the magnetization direction of the plurality of third sub-magnets 32 is staggered with the magnetization direction of the plurality of fourth sub-magnets 33, and the repulsion force of the plurality of third sub-magnets 32 on the plurality of fourth sub-magnets 33 causes the plurality of third sub-magnets 32 to apply a movement resistance to the plurality of fourth sub-magnets 33. When the display unit 12 is switched from the second state to the first state, in the first movement stage, the magnetization direction of the plurality of third sub-magnets 32 is staggered with the magnetization direction of the plurality of fourth sub-magnets 33, and the repulsion force of the plurality of third sub-magnets 32 on the plurality of fourth sub-magnets 33 causes the plurality of third sub-magnets 32 to apply a driving force to the plurality of fourth sub-magnets 33.

When the display unit 12 is switched from the second state to the first state, in the second movement stage, the magnetization direction of the plurality of third sub-magnets 32 is staggered with the magnetization direction of the plurality of fourth sub-magnets 33, and the repulsion force of the plurality of third sub-magnets 32 on the plurality of fourth sub-magnets 33 causes the plurality of third sub-magnets 32 to apply a movement resistance to the plurality of fourth sub-magnets 33. When the display unit 12 switches from the first state to the second state, in the second movement stage, the magnetization direction of the plurality of third sub-magnets 32 is offset from the magnetization direction of the plurality of fourth sub-magnets 33, and the repulsive force of the plurality of third sub-magnets 32 on the plurality of fourth sub-magnets 33 causes the plurality of third sub-magnets 32 to apply a driving force to the plurality of fourth sub-magnets 33.

In some embodiments, the magnetic poles of two adjacent third sub-magnets 32 are in opposite directions, and the magnetic poles of two adjacent fourth sub-magnets 33 are in opposite directions.

In this way, the first member 25 applies a movement resistance or a driving force to the second member 26.

Specifically, as shown in FIG. 31 and FIG. 32, the plurality of fourth sub-magnets 33 is located in the space formed by the plurality of third sub-magnets 32. The plurality of fourth sub-magnets 33 includes two magnetic poles, which are a fourth inner magnetic pole 34 and a fourth outer magnetic pole 35 radially opposite to each other along the adapter structure 18. In two fourth sub-magnets 33 adjacent to each other in the circumferential direction of the adapter structure 18, the fourth inner magnetic pole 34 of a part of the plurality of fourth sub-magnets 33 is opposite to the fourth inner magnetic pole 34 of the others of the plurality of fourth sub-magnets 33, and the fourth outer magnetic pole 35 of a part of the plurality of fourth sub-magnets 33 is opposite to the fourth outer magnetic pole 35 of the other part of the plurality of fourth sub-magnets 33.

The plurality of third sub-magnets 32 includes two magnetic poles, which are a third inner magnetic pole 36 and a third outer magnetic pole 37 radially opposite to each other along the adapter structure 18. In two third sub-magnets 32 adjacent to each other in the circumferential direction of the adapter structure 18, the direction of the third inner magnetic pole 36 of a part of the plurality of third sub-magnets 32 is opposite to the direction of the third inner magnetic pole 36 of the other part of the plurality of third sub-magnets 32, and the direction of the third outer magnetic pole 37 of a part of the plurality of third sub-magnets 32 is opposite to the direction of the third outer magnetic pole 37 of the other part of the plurality of third sub-magnets 32.

When the display unit 12 rotates for 90 degrees clockwise (the fourth magnet 31 also rotates for 90 degrees clockwise) from the position shown in FIG. 31 (for example, the first state) to the position shown in FIG. 32 (for example, the second state), in the first movement stage, the repulsive force generated by the plurality of third sub-magnets 32 on the plurality of fourth sub-magnets 33 forms a movement resistance. When the magnetization direction of the plurality of third sub-magnets 32 is in the same straight line as the magnetization direction of the plurality of fourth sub-magnets 33, the display unit 12 reaches the critical position. After passing the critical position, in the second movement stage, the repulsive force generated by the plurality of third sub-magnets 32 on the plurality of fourth sub-magnets 33 forms a driving force, and the display unit 12 may automatically reach the second state. As an example, FIG. 31 and FIG. 32 show the magnetic pole directions of the fourth inner magnetic pole 34, the fourth outer magnetic pole 35, the third inner magnetic pole 36, and the third outer magnetic pole 37.

In some embodiments, as shown in FIG. 33 to FIG. 34, the first member 25 and the second member 26 may rotate relative to each other, and one of the first member 25 and the second member 26 is provided with a circular ring magnet 38, and the other is provided with a yoke pair 39, and the yoke pair 39 is arranged at the outer side of the magnet along the circumferential direction of the adapter structure 18.

In this way, the interaction between the circular ring magnet 38 and the yoke 40 enables the display unit 12 to automatically reach the second state or the first state after passing the critical position.

Specifically, in the embodiment of FIG. 33, the yoke pair 39 is arranged at the first member 25, and the circular ring magnet 38 is arranged at the second member 26. In other embodiments, the yoke pair 39 may be provided at the second member 26, and the circular ring magnet 38 may be provided at the first member 25.

In some embodiments, the yoke pair 39 may include two yokes 40, each of which is provided with a pole shoe 41 at each of two ends, and the two pole shoes 41 on one yoke 40 correspond to the first state and the second state, respectively. The critical position is the middle angle between the first state and the second state.

As shown in FIG. 33, the two pole shoes 41 are respectively located at the two ends of the yoke 40 along the circumferential direction of the adapter structure 18. The two yokes 40 are spaced apart along the circumferential direction of the adapter structure 18, and the circular ring magnet 38 is located in the space surrounded by the two yokes 40.

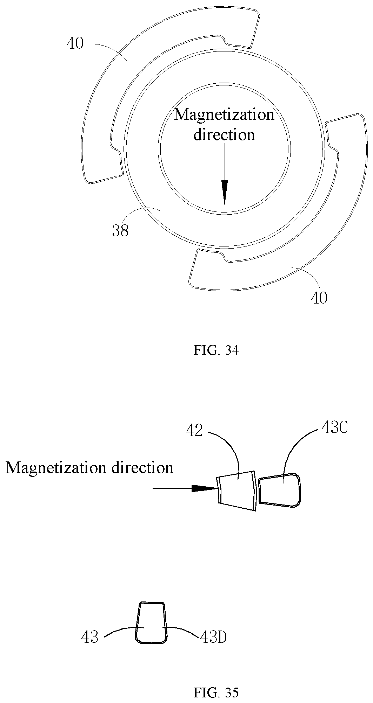

In one embodiment, as shown in FIG. 33 and FIG. 34, the yoke 40 has a pole shoe 41A and a pole shoe 41B. Initially, the display unit 12 is in the first state, and the magnetization direction of the annular magnet 38 is in the same straight line as the pole shoe 41A of the yoke 40. When the display unit 12 switches from the first state (clockwise in FIG. 31) to the second state, in the first movement stage, the attraction of the pole shoe 41A of the yoke 40 on the annular magnet 38 forms a movement resistance, and the attraction of the pole shoe 41B of the yoke 40 on the annular magnet 38 forms a driving force. Because the pole shoe 41A is closer to the magnetization direction of the annular magnet 38, the attraction of the pole shoe 41A on the annular magnet 38 is greater than the attraction of the pole shoe 41B on the annular magnet 38, and the force of the yoke on the annular magnet 38 is a movement resistance. When the display unit 12 is in the critical position, the magnetization direction of the annular magnet 38 is an intermediate angle between the first state and the second state. In the second movement stage, after the display unit 12 passes the critical position, at this time, the magnetization direction of the annular magnet 38 is closer to the pole shoe 41B than the pole shoe 41A, and the force of the yoke iron 39 on the annular magnet 38 is the driving force, thereby enabling the display unit 12 to automatically reach the second state, as shown in FIG. 34.

When the display unit 12 switches from the second state (counterclockwise in FIG. 34) to the first state, in the second movement stage, the attraction of the pole shoe 41B of the yoke 40 to the annular magnet 38 forms a movement resistance, and the attraction of the pole shoe 41A of the yoke 40 to the annular magnet 38 forms a driving force. Because the pole shoe 41B is closer to the magnetization direction of the annular magnet 38, the attraction of the pole shoe 41B to the annular magnet 38 is greater than the attraction of the pole shoe 41A to the annular magnet 38, and the force of the yoke on the annular magnet 38 is a movement resistance. When the display unit 12 is at the critical position, the magnetization direction of the annular magnet 38 is the middle angle between the first state and the second state. In the first movement stage, after the display unit 12 passes the critical position, at this time, the magnetization direction of the annular magnet 38 is closer to the pole shoe 41A than the pole shoe 41B, and the force of the yoke on the annular magnet 38 is a driving force, such that the display unit 12 may automatically reach the first state, as shown in FIG. 33.

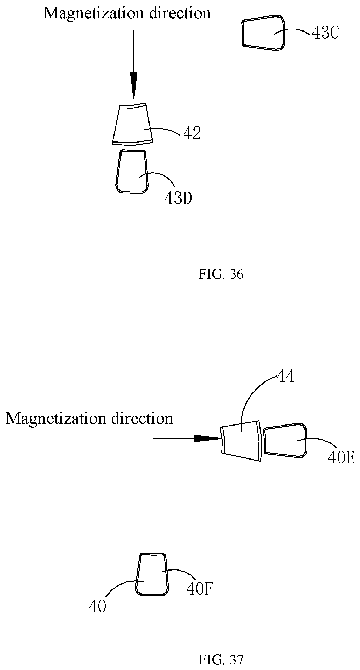

In some embodiments, as shown in FIG. 35 and FIG. 36, the first member 25 and the second member 26 is able to rotate relative to each other. A fifth magnet 42 is provided at one of the first member 25 or the second member 26, and a sixth magnet 43 is provided at the other, which is respectively located at two ends of the movement stroke, and an attraction is generated between the fifth magnet 42 and the sixth magnet 43.

In this way, the display unit 12 may automatically reach the second state or the first state after passing the critical position through the interaction between the fifth magnet 42 and the sixth magnet 43.

Specifically, in one embodiment shown in FIG. 35, the second member 26 is provided with a fifth magnet 42, and the first member 25 is provided with two sixth magnets 43. In other embodiments, the first member 25 is provided with a fifth magnet 42, and the second member 26 is provided with two sixth magnets 43.

The two sixth magnets 43 are arranged at intervals along the circumferential direction of the adapter structure 18. The two sixth magnets 43 correspond to the first state and the second state respectively, and the critical position is the middle angle between the first state and the second state.

In one embodiment, as shown in FIG. 35 and FIG. 36, initially, the display unit 12 is in the first state, the fifth magnet 42 is aligned with the sixth magnet 43C, and the fifth magnet 42 and the sixth magnet 43D attract each other. When the display unit 12 switches from the first state (clockwise in FIG. 35) to the second state, in the first movement stage, the attraction force of the sixth magnet 43C on the fifth magnet 43 forms a movement resistance, and the attraction force of the sixth magnet 43D on the fifth magnet 42 forms a driving force. Because the sixth magnet 43C is closer to the fifth magnet 42, the attraction force of the sixth magnet 43C on the fifth magnet 42 is greater than the attraction force of the sixth magnet 43D on the fifth magnet 42, and the force of the first member 25 on the second member 26 is a movement resistance. When the display unit 12 is in the critical position, the magnetization direction of the fifth magnet 42 is an intermediate angle between the first state and the second state. In the second movement stage, after the display unit 12 passes the critical position, the fifth magnet 42 is closer to the sixth magnet 43D than the sixth magnet 43C, and the force of the first member 25 on the second member 26 is a driving force, such that the display unit 12 is able to automatically reach the second state, as shown in FIG. 36.

When the display unit 12 switches from the second state (counterclockwise in FIG. 36) to the first state, in the second movement stage, the attraction force of the sixth magnet 43D on the fifth magnet 42 forms a movement resistance, and the attraction force of the sixth magnet 43C on the fifth magnet 42 forms a driving force. Because the sixth magnet 43D is closer to the fifth magnet 42, the attraction force of the sixth magnet 43D on the fifth magnet 42 is greater than the attraction force of the sixth magnet 43C on the fifth magnet 42, and the force of the first member 25 on the second member 26 is a movement resistance. When the display unit 12 is in the critical position, the magnetization direction of the fifth magnet 42 is the middle angle between the first state and the second state. In the second movement stage, after the display unit 12 passes the critical position, the fifth magnet 42 is closer to the sixth magnet 43C than the sixth magnet 43D, and the force of the first member 25 on the second member 26 is a driving force, so that the display unit 12 is able to automatically reach the second state, as shown in FIG. 35.

In some embodiments, as shown in FIG. 37 to FIG. 38, the first member 25 and the second member 26 is able to rotate relative to each other, and one of the first member 25 or the second member 26 is provided with a seventh magnet 44, and the other is provided with yokes 40 located at two ends of the movement stroke, and the seventh magnet 44 generates an attraction force on the yokes 40.

In this way, the display unit 12 may automatically reach the second state or the first state after passing the critical position through the interaction between the seventh magnet 44 and the yokes 40.

Specifically, in one embodiment of FIG. 37, two yokes 40 are provided at the first member 25, and the seventh magnet 44 is provided at the second member 26. In other embodiments, two yokes 40 may be provided at the second member 26, and the seventh magnet 44 may be provided at the first member 25. The seventh magnet 44 is located in the space surrounded by the two yokes 40.

The two yokes 40 are arranged at intervals along the circumferential direction of the adapter structure 18. The two yokes 40 correspond to the first state and the second state respectively. The critical position is the middle angle between the first state and the second state.

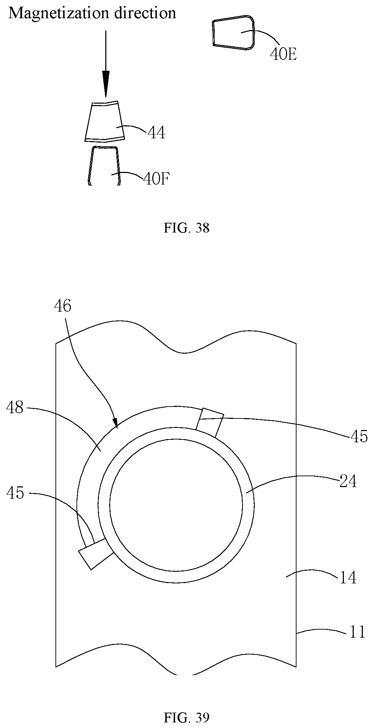

In one embodiment, as shown in FIG. 37 and FIG. 38, initially, the display unit 12 is in the first state, the seventh magnet 44 is aligned with the yoke 40E, and the seventh magnet 44 and the yoke 40E attract each other. When the display unit 12 switches from the first state (clockwise in FIG. 37) to the second state, in the first movement stage, the attraction force of the yoke 40E on the seventh magnet 44 forms a movement resistance, and the attraction force of the yoke 40F on the seventh magnet 44 forms a driving force, but because the yoke 40E is closer to the seventh magnet 44, the attraction force of the yoke 40E on the seventh magnet 44 is greater than the attraction force of the yoke 40F on the seventh magnet 44, and the force of the first member 25 on the second member 26 is a movement resistance. When the display unit 12 is at the critical position, the magnetization direction of the seventh magnet 44 is the middle angle between the first state and the second state. In the second movement stage, after the display unit 12 passes the critical position, the seventh magnet 44 is closer to the yoke 40F than the yoke 40E, and the force of the first member 25 on the second member 26 is the driving force, thereby enabling the display unit 12 to automatically reach the second state, as shown in FIG. 38.

When the display unit 12 switches from the second state (counterclockwise in FIG. 38) to the first state, in the second movement stage, the attraction force of the yoke 40F on the seventh magnet 44 forms a movement resistance, and the attraction force of the yoke 40E on the seventh magnet 44 forms a driving force. However, since the yoke 40F is closer to the seventh magnet 44, the attraction force of the yoke 40F on the seventh magnet 44 is greater than the attraction force of the yoke 40E on the seventh magnet 44, and the force of the first member 25 on the second member 26 is a movement resistance. When the display unit 12 is at the critical position, the magnetization direction of the seventh magnet 44 is the middle angle between the first state and the second state. In the first movement stage, after the display unit 12 passes the critical position, at this time, the seventh magnet 44 is closer to the yoke 40E than the yoke 40F, and the force of the first member 25 on the second member 26 is a driving force, such that the display unit 12 is able to automatically reach the second state, as shown in FIG. 37.

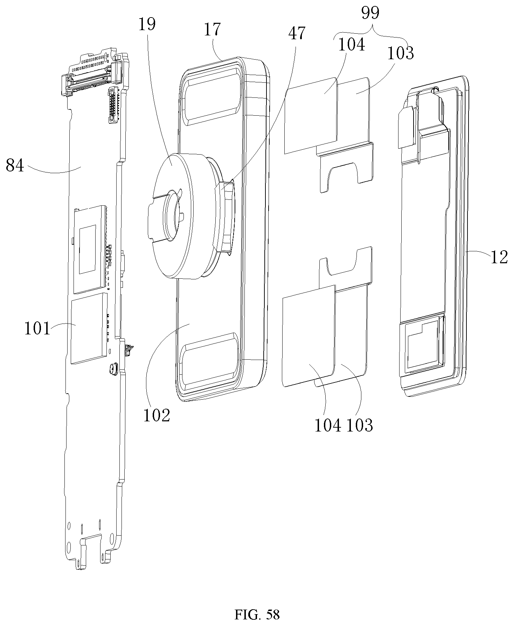

In some embodiments, as shown in FIG. 39 and FIG. 58, the handheld gimbal device 100 includes a limit structure 4545 located at two ends of the movement stroke (when the display unit 12 is rotatably arranged at the handle 11, the movement stroke is the rotation stroke).

In this way, the movement stroke of the display unit 12 is limited.

Specifically, when the display unit 12 switches from the first state to the second state, the display unit 12 moves from one end of the movement stroke to the other end of the movement stroke, and is limited by the limit structure 4545 at the other end, such that the display unit 12 is positioned and maintained after the movement is in place, and the displacement is avoided.

When the display unit 12 switches from the second state to the first state, the display unit 12 moves from the other end of the movement stroke to one end of the movement stroke, and is limited by the limit structure 4545 at one end, such that the display unit 12 is positioned and maintained after the movement is in place, and the displacement is avoided.

In some embodiments, as shown in FIG. 39 and FIG. 58, the handle 11 or the first member 25 is provided with a first guide member 46, the display unit 12 or the second member 26 is provided with a second guide member 47. The first guide member 46 and the second guide member 47 are engaged with each other for guiding, and the limit structure 4545 includes limit members located at two ends of the first guide member 46 or the second guide member 47.

In this way, the limit members at the first guide member 46 and the second guide member 47 may be used to limit the display unit 12.

Specifically, in one embodiment, the handle 11 is provided with a first guide member 46, and the display unit 12 is provided with a second guide member 47. The first guide member 46 includes a travel guide groove 48, and the travel guide groove 48 is provided at the mount surface 14. The second guide member 47 is a protrusion provided at the fixed plate. The second guide member 47 passes through the display unit frame 17 and extends into the travel guide groove 48. The travel guide groove 48 extends along the circumferential direction of the adapter structure. The travel guide groove 48 limits the movement of the display unit, and the two ends of the travel guide groove 48 form limit members.

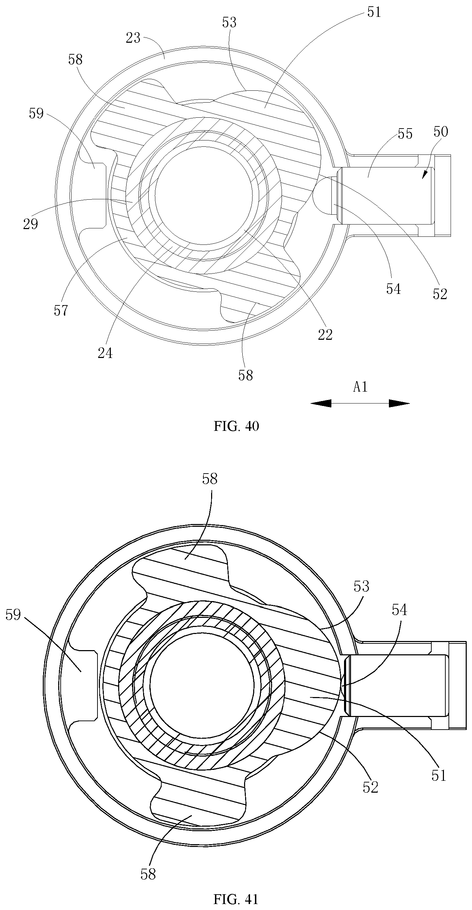

Different from the above-mentioned many embodiments with magnetic interaction, in some other embodiments, as shown in FIG. 40, the first member 25 includes a telescopic component 50. During the movement of the display unit 12, the second member 26 is configured to compress the telescopic component 50 when driven by an external force. After passing the critical position, when the external force disappears, the telescopic component 50 is configured to automatically rebound and extend, thereby driving the second member 26.

In this way, the state of the display unit 12 may be switched by changing the direction of the force of the telescopic component 50 on the second member 26.

Specifically, the direction of the force of the telescopic component 50 on the second member 26 may change during the movement of the display unit 12. Therefore, when the display unit 12 switches from the first state to the second state, in the first movement stage, the telescopic component 50 applies a movement resistance to the second member 26, and in the second movement stage, the telescopic component 50 applies a driving force to the second member 26. When the display unit 12 switches from the second state to the first state, in the second movement stage, the telescopic component 50 applies a movement resistance to the second member 26, and in the first movement stage, the telescopic component 50 applies a driving force to the second member 26.

In some embodiments, as shown in FIG. 40 to FIG. 42, the first member 25 and the second member 26 are able to rotate relative to each other. The second member 26 is provided with a protrusion 51, and the protrusion 51 is provided with a first side 52 and a second side 53 located at two sides of its vertex respectively. The telescopic component 50 is provided with a telescopic member 54. In the first movement stage, the first side 52 contacts the telescopic member 54 and the second member 26 compresses the telescopic member 54 during the rotation process. In the second movement stage, the second side 53 contacts the telescopic member 54, and the telescopic member 54 drives the second member 26 to rotate under the action of the rebound force.

In this way, the state of the display unit 12 may be switched by the interaction between the telescopic member 54 and the protrusion 51.

Specifically, the protrusion 51 may be an arc-shaped protrusion or a conical protrusion, and the protrusion 51 may be provided with a first side 52 and a second side 53 located at two sides of the vertex of the protrusion 51. The critical position may be the position where the telescopic member 54 reaches the vertex of the protrusion 51.

In the first movement stage, the first side 52 contacts the telescopic member 54. In the first movement stage when the display unit 12 switches from the first state to the second state, the protrusion 51 gradually compresses the telescopic member 54, causing the telescopic member 54 to gradually retract into the telescopic component 50. The pressure (acting force) applied by the telescopic member 54 to the protrusion 51 gradually increases, and then the first member 25 applies a movement resistance to the second member 26. When the display unit 12 passes the critical position, in the second movement stage, the second side 53 contacts the telescopic member 54, and the telescopic member 54 extends out of the telescopic component 50 under the action of the rebound force, driving the second member 26 to rotate, and then the display unit 12 automatically reaches the second state.

In some embodiments, as shown in FIG. 40 to FIG. 42, the telescopic direction of the telescopic member 54 is the radial direction A1 of the adapter structure 18.

In this way, the force in the radial direction A1 of the adapter structure 18 may be used to switch the state of the display unit 12.

Specifically, the telescopic direction of the telescopic member 54 is the radial direction A1 of the adapter structure 18, the rotation axis of the display unit 12 is along the axial direction A1 of the adapter structure 18, and the direction of the force applied by the telescopic member 54 to the protrusion 51 is always toward the rotation axis direction of the display unit 12. The display unit 12 is switched by the force of the telescopic member 54 on the protrusion 51 along the radial direction A1 of the adapter structure 18.

In some embodiments, the telescopic component 50 may include the telescopic member 54 and an elastic member (not shown). The telescopic member 54 may be connected to the elastic member, and the elastic member may be used to provide a rebound force for the telescopic member 54 in the radial direction of the adapter structure 18.

In this way, the elastic member may be used to provide a rebound force for the telescopic member 54 along the radial direction of the adapter structure 18.

Specifically, the telescopic component 50 may also include a sleeve 55. One end of the sleeve 55 may be open and the other end may be closed. One end of the telescopic member 54 and the elastic member may be accommodated in the sleeve 55, one end of the elastic member may abut against the inner wall of the closed end of the sleeve 55, the telescopic member 54 may be passed through the open end of the sleeve 55, and the other end of the telescopic member 54 may contact the protrusion 51. The length direction of the elastic member may be along the radial direction of the transition structure 18, such that the elastic member is able to provide a rebound force for the telescopic member 54 in the radial direction of the transition structure 18. In one embodiment, the elastic member may include a spring.

In some embodiments, as shown in FIG. 40 to FIG. 42, the second member 26 includes a cam 56. The cam 56 includes a mount member 57, and a protrusion 51 and two limit members 58 provided at the mount member 57. The mount member 57 is rotatably connected to the first member 25, and the first member 25 is provided with a limit component 59, and the limit component 59 is located between the two limit members 58 to limit the rotation stroke of the second member 26.

In this way, the cam 56 and the limit component 59 may be used to limit the movement stroke of the display unit 12 and switch the state of the display unit 12.

Specifically, as shown in FIG. 40, the protrusion 51 and the two limit members 58 are arranged at the side wall of the mount member 57 along the circumferential direction of the mount member 57. The adapter structure 18 includes an annular base 23, and the limit component 59 is arranged at the inner wall of the base 23. The limit component 59 and the protrusion 51 are respectively located at the opposite sides of the connection line of the two limit members 58.

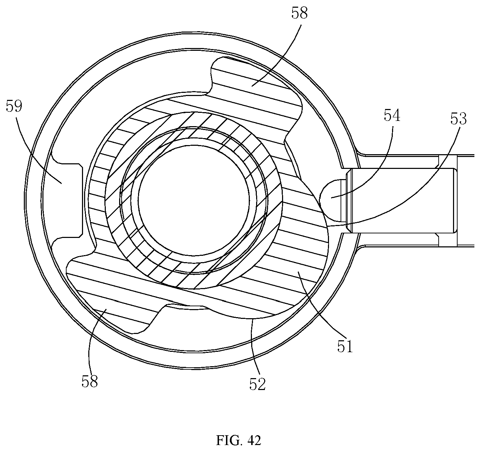

In the first state, one of the limit members 58 cooperates with the limit component 59 to limit the display unit 12 at one end of the movement stroke, and the telescopic member 54 contacts the first side 52, as shown in FIG. 40. When the display unit 12 switches from the first state to the second state, the cam 56 rotates clockwise, and in the first movement stage, the position where the telescopic member 54 contacts the first side 52 approaches the vertex of the protrusion 51. When the telescopic member 54 reaches the vertex of the protrusion 51, the display unit 12 is in the critical position, as shown in FIG. 41. After the display unit 12 passes the critical position, in the second movement stage, the telescopic member 54 contacts the second side 53, as shown in FIG. 42, and the telescopic member 54 drives the cam 56 to continue to rotate clockwise under the action of the rebound force. When the other limit member 58 cooperates with the limit component 59 to limit, the display unit 12 reaches the other end of the movement stroke, that is, the display unit 12 switches to the second state.

In some embodiments, the telescopic direction of the telescopic member 54 is the axial direction A2 of the adapter structure 18.

In this way, the state of the display unit 12 may be switched by the force of the axial direction A2 of the adapter structure 18.

Specifically, the telescopic direction of the telescopic member 54 is the axial direction A2 of the adapter structure 18, and the direction of the force applied by the telescopic member 54 to the protrusion 51 is always along the direction of the rotation axis T of the display unit 12. The state of the display unit 12 is switched by the force of the telescopic member 54 on the protrusion 51 along the axial direction A2 of the adapter structure 18.

In some embodiments, the second member 26 is provided with a plurality of protrusions 51, which are arranged at intervals along the circumferential direction of the second member. The telescopic component 50 is provided with a plurality of telescopic members 54, which are arranged at intervals along the circumferential direction of the telescopic component 50, and the plurality of telescopic members 54 are engaged with the plurality of protrusions 51 one by one.

In this way, the state switching of the display unit 12 along the axial direction of the adapter structure 18 is realized by engaging the plurality of telescopic parts 54 with the plurality of protrusions 51 one by one.

Specifically, along the axial direction of the adapter structure 18, the plurality of telescopic members 54 may be located below or above the plurality of protrusions 51, which is not specifically limited here.

In some embodiments, the first member 25 includes a first convex-concave structure 60 and an elastic member 61, and the second member 26 includes a second convex-concave structure 62. The first convex-concave structure 60 and the second convex-concave structure 62 are arranged oppositely along the axial direction of the adapter structure 18. The elastic member 61 is used to provide a rebound force for the first convex-concave structure 60 in the axial direction of the adapter structure 18. The first convex-concave structure 60 is the telescopic component 50, the convex parts of the first convex-concave structure 60 may be the plurality of telescopic members 54, and the second convex-concave structure 62 may be provided with the plurality of protrusions 51.

In this way, the first convex-concave structure 60 and the second convex-concave structure 62 may be used to switch the state of the display unit 12.

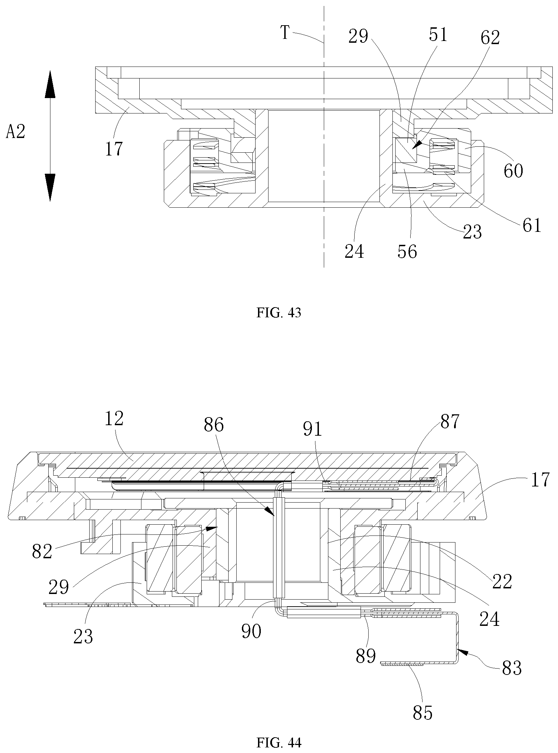

Specifically, as shown in FIG. 43, the adapter structure 18 includes a base 23, and the middle part of the base 23 has a second shaft 22. The second convex-concave structure 62 is connected to the shaft part 29. The second convex-concave structure 62 and the first convex-concave structure 60 may be sleeved on the second shaft 24, and along the axial direction A2 of the adapter structure 18, the second convex-concave structure 62 is located above the first convex-concave structure 60, and the elastic member 61 is located below the first convex-concave structure 60. The elastic member 61 presses the first convex-concave structure 60 upward, such that the protrusion 51 (the telescopic member 54) of the first convex-concave structure 60 applies a uniform force to the protrusion 51 of the second convex-concave structure 62. In one embodiment, the elastic member 61 may be a wave spring, the second convex-concave structure 62 may include a cam mover, and the first convex-concave structure 60 may include a cam stator.

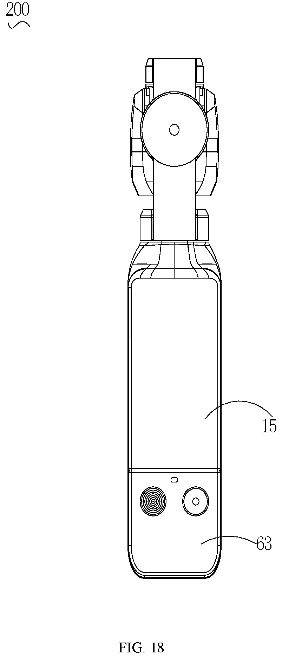

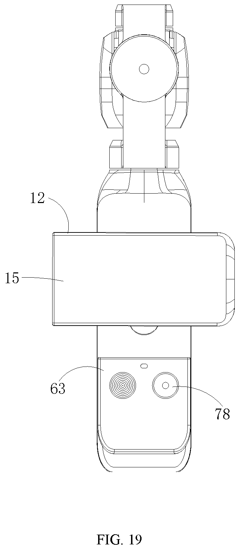

In some embodiments, as shown in FIG. 18 and FIG. 19, the handheld gimbal device 100 also includes an operation module 63, which is movably arranged at the handle 11. The operation module 63 is configured to drive the display unit 12 to switch between the first state and the second state when it moves.

In this way, the state of the display unit 12 may be switched by moving the operation module 63.

Specifically, the operation module 63 may include but is not limited to operation members 78 such as buttons, knobs, and touch screens. The user may send instructions to the handheld gimbal device 100 through the operation module 63. When the operation module 63 moves, it may drive the display unit 12 to switch states, and the relative position of the operation module 63 and the display unit 12 may also be adapted to the state of the display unit 12.

The movement mode of the operation module 63 may be rotation, translation, or a combination of rotation and translation. The movement mode of the operation module 63 may be the same as or different from the movement mode of the display unit 12, which is not specifically limited here.

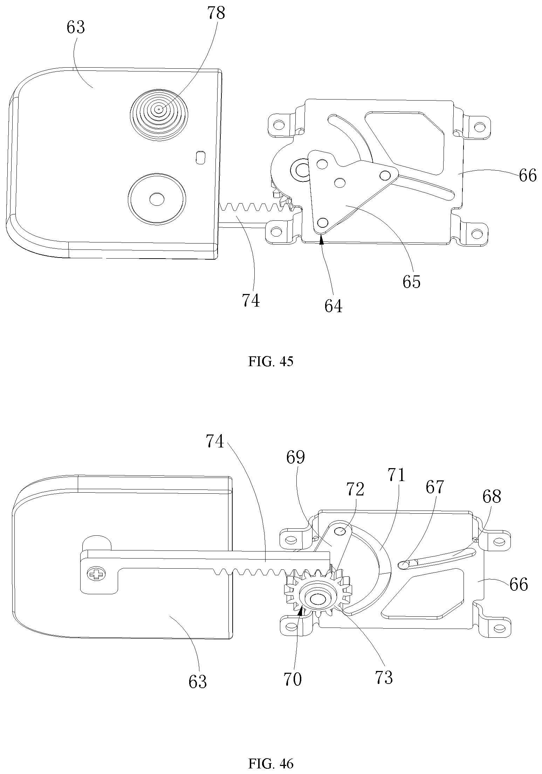

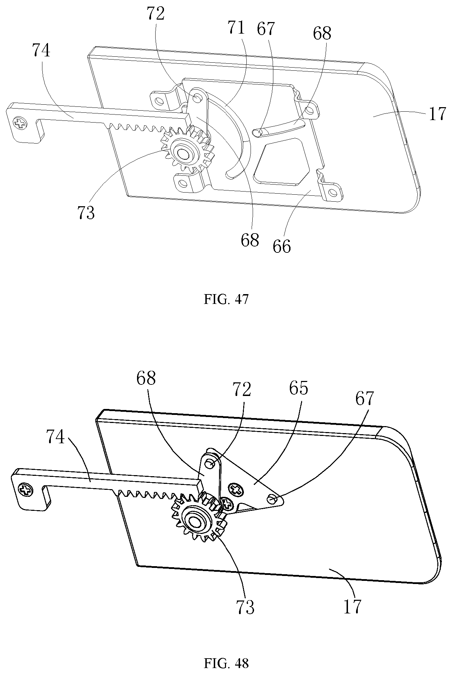

In some embodiments, as shown in FIG. 45 to FIG. 51, the display unit 12 is configured to rotate relative to the handle 11, and the display unit 12 is connected to the operation module 63 through a connection rod mechanism 64.

In this way, through the connection rod mechanism 64, the operation module 63 may drive the display unit 12 to move when it moves.

Specifically, the connection rod mechanism 64 includes a connection plate 65 and a track plate 66. The display unit 12 is connected to the connection plate 65, and the connection plate 65 is provided with a first guide column 67. The track plate 66 is provided with a limit guide groove 68, and the first guide column 67 is at least partially located in the limit guide groove 68. When the operation module 63 moves along the length direction of the handle 11, the connection plate 65 is rotated relative to the track plate 66 by the movement of the first guide column 67 in the limit guide groove 68. The limit guide groove 68 may guide the movement of the first guide column 67 and limit the movement trajectory of the first guide column 67, such that the movement of the operation module 63 and the display unit 12 is more stable. The track plate 66 may be arranged at the handle 11. The track plate 66 may be fixed in the handle 11. The connection plate 65 may be fixedly connected to the display unit frame 17.

Further, the connection rod mechanism 64 also includes a crank 69 and a transmission structure 70. The crank 69 is rotatably connected to the connection plate 65 and connected to the operation module 63 through the transmission structure 70. When the operation module 63 moves along the length direction of the handle 11, the transmission structure 70 drives the crank 69 and the connection plate 65 to rotate relative to the track plate 66. In this way, the display unit 12 may be driven to switch states when the operation module 63 moves. Specifically, one end of the crank 69 may be rotatably connected to the connection plate 65, and the other end may be fixedly connected to the transmission structure 70.

Preferably, the track plate 66 may be also provided with a track groove 71, and the connection plate 65 may also be provided with a second guide column 72. The second guide column 72 may pass through the track groove 71 and may be rotatably connected to the crank 69. In this way, the movement stability of the operation module 63 and the display unit 12 may be further improved.

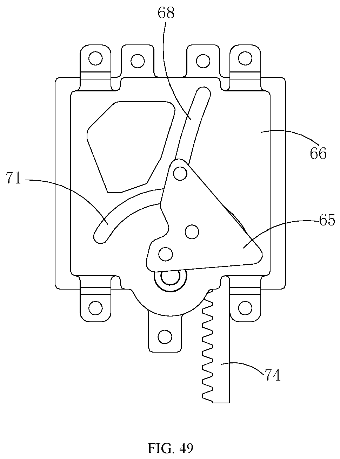

As shown in FIG. 49 to FIG. 50, the limit guide groove 68 is located above the track groove 71. As shown in FIG. 18 and FIG. 49, when the operation module 63 moves upward along the length direction of the handle 11, the second guide column 72 moves counterclockwise in the track groove 71. The movement of the second guide column 72 drives the connection plate 65 and the display unit 12 to rotate around one end of the crank 69 connected to the transmission structure. At the same time, the connection point between the second guide column 72 and the crank 69 moves upward, such that the connection plate 65 drives the first guide column 67 to move upward in the limit guide groove 68 and the display unit 12 also moves upward with the connection plate 65, thereby realizing that the display unit 12 moves upward while rotating.

In some embodiments, the transmission structure 70 may include a gear 73 and a rack 74. The rack 74 may be connected to the operation module 63 and the gear 73, and the gear 73 may be connected the crank 69. In this way, the transmission structure 70 may be simple and the transmission may be stable.

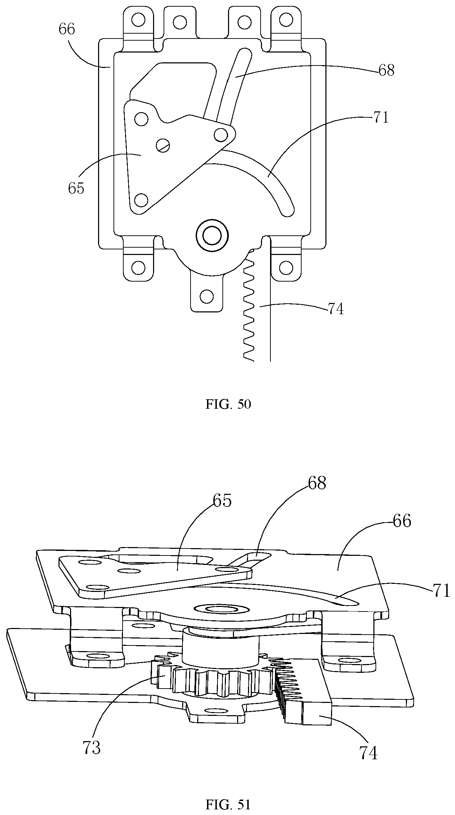

Specifically, the length direction of the rack 74 may be along the length direction of the handle 11, and the rack 74 may be meshed with the gear 73. The gear 73 may be fixedly connected to one end of the crank 69, and the other end of the crank 69 may be rotatably connected to the second guide column 72. As shown in FIG. 18 and FIG. 49, initially, the display unit 12 is in the first state, the operation module 63 is located below the display unit 12, and the second guide column 72 is located at the right end of the track groove 71. When the display unit 12 switches from the first state to the second state, the operation module 63 moves upward along the length direction of the handle 11, and the operation module 63 drives the rack 74 to move upward, and the rack 74 drives the gear 73 to rotate counterclockwise, thereby driving the crank 69 to rotate counterclockwise to drive the second guide column 72 to rotate counterclockwise in the track groove 71, such that the display unit 12 rotates and moves upward, until the second guide column 72 moves to the left end of the track groove 71 and the display unit 12 reaches the second state, as shown in FIG. 19 and FIG. 50.

When the display unit 12 switches from the second state to the first state, the operation module 63 moves downward along the length direction of the handle 11, the operation module 63 drives the rack 74 to move downward, and the rack 74 drives the gear 73 to rotate clockwise, thereby driving the crank 69 to rotate clockwise to drive the second guide column 72 to rotate clockwise in the track groove 71, such that the display unit 12 rotates and moves downward until the second guide column 72 moves to the right end of the track groove 71 and the display unit 12 reaches the first state.

In some embodiments, the operation module 63 may be configured to be connected to the connection rod mechanism 64 through the transmission structure 70, such that the display unit 12 and the operation module 63 do not physically interfere with each other during the linkage process. Specifically, the operation module 63 may not interfere with the rotation of the display unit 12 during the movement, such that the respective movements of the display unit 12 and the operation module 63 during the linkage process are ensured to be uninterrupted.

Specifically, the display unit 12 and the operation module 63 may be prevented from physically interfering during the linkage process by setting the arc length and radian of the track groove 71, the arc length and radian of the limit guide groove, the gear 73, the rack 74 length, the crank 69 length and other structural parameters.

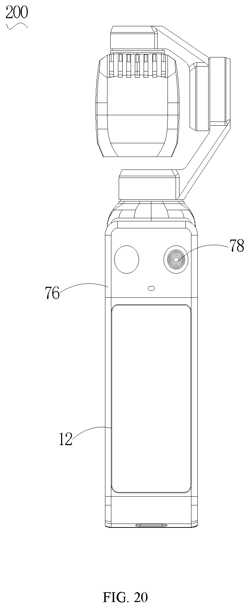

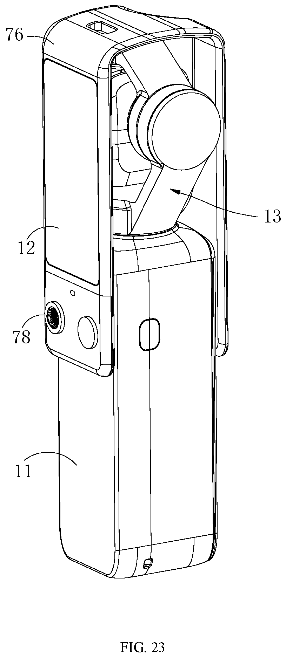

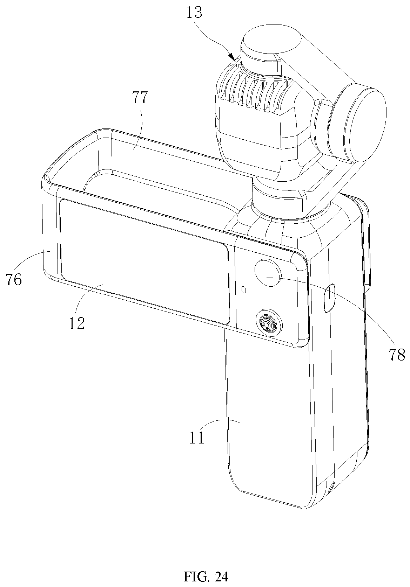

In some embodiments, as shown in FIG. 20 to FIG. 24, the handheld gimbal device 100 also includes a bracket 76 rotatably arranged at the handle 11. The display unit 12 may be arranged at the outer wall of the bracket 76, the bracket 76 may be configured to rotate to drive the display unit 12 to switch between the first state and the second state, and the bracket 76 may be provided with a receiving groove 77. In the first state, the handle 11 may be located in the receiving groove 77, and, in the second state, the handle 11 may be located outside the receiving groove 77.

In this way, the bracket 76 may be used to drive the display unit 12 to switch states.

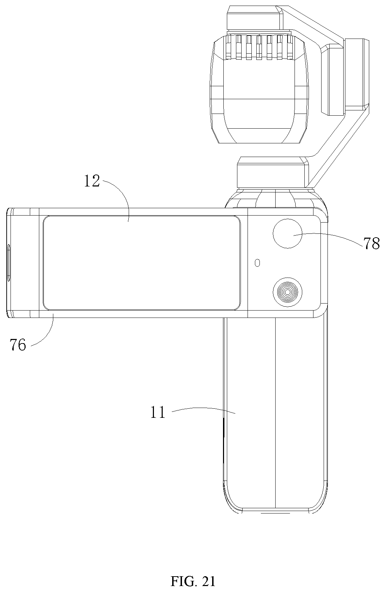

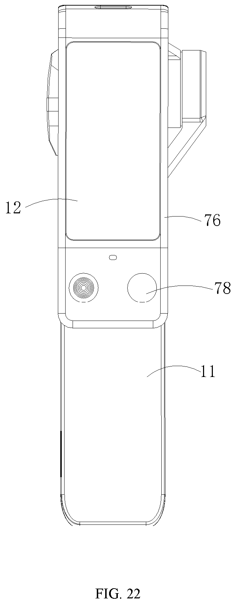

Specifically, one end of the bracket 76 may be rotatably connected to the handle 11. In the first state, the handle 11 may be located in the receiving groove 77, and the handle 11 may be relatively regular as a whole. As shown in FIG. 20, the length direction of the handle 11 is along the length direction of the bracket 76. In the second state, the length direction of the handle 11 may form a non-zero angle with the length direction of the bracket 76. As shown in FIG. 21, the angle formed by the length direction of the handle 11 and the length direction of the bracket 76 is 90 degrees. The display unit 12 may be arranged at the outer wall of the bracket 76, and the state of the display unit 12 may be switched by rotating the bracket 76. The length direction of the handle 11 forms an angle of 180 degrees with the length direction of the bracket 76, as shown in FIG. 22. The gimbal 13 may be accommodated in the receiving groove 77 to protect the gimbal 13. At this time, the attitude of the gimbal 13 may be the attitude of the gimbal 13 when it is in the storage state.

When the angle formed by the length direction of the handle 11 and the length direction of the bracket 76 is 180 degrees, the gimbal 13 may be accommodated in the receiving groove 77, and the bracket 76 may protect the gimbal 13.

Preferably, the receiving groove 77 may be roughly U-shaped.

In some embodiments, the bracket 76 may be further provided with an operation member 78, and the operation member 78 and the display unit 12 may be located at the same outer wall of the bracket 76. In this way, it may be convenient for the user to operate the operation member 78.

Specifically, the operation member 78 and the display unit 12 may be located at the same outer wall of the bracket 76, and the relative position of the operation member 78 and the display unit 12 may remain unchanged. Therefore, whether the display unit 12 is in the first state or the second state, or when switching between the first state and the second state, the relative position of the operation member 78 and the display unit 12 may not change, which may be convenient for the user to operate the operation member 78.

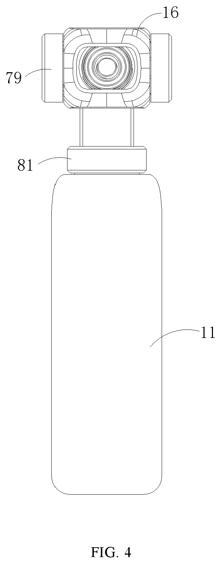

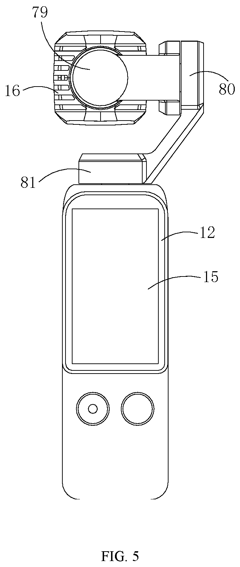

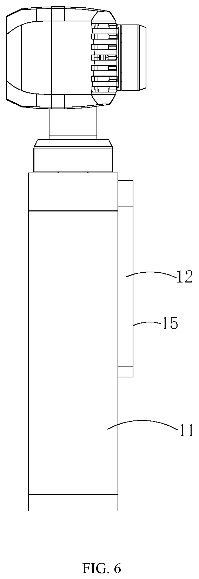

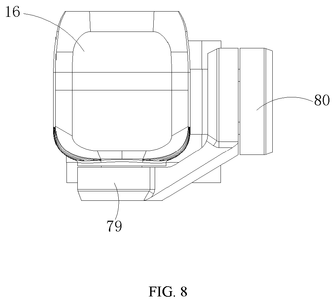

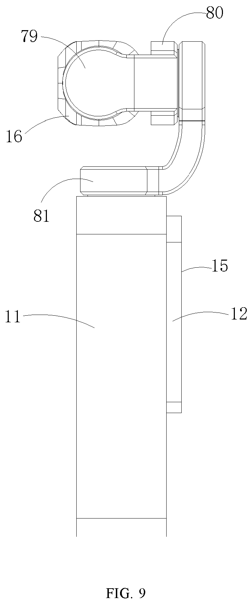

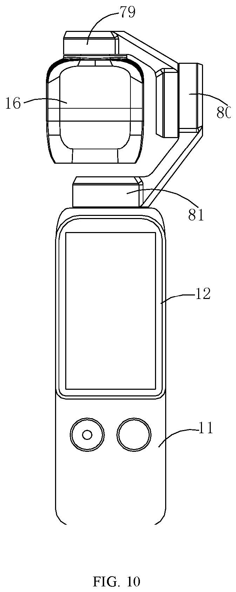

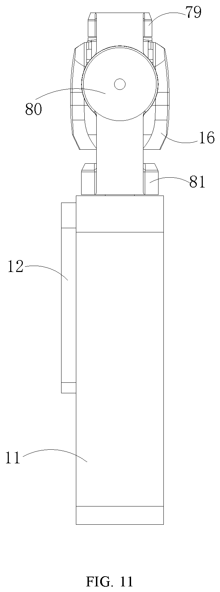

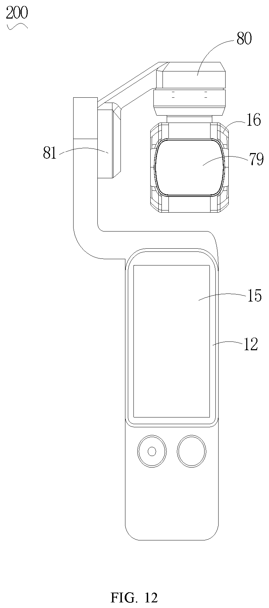

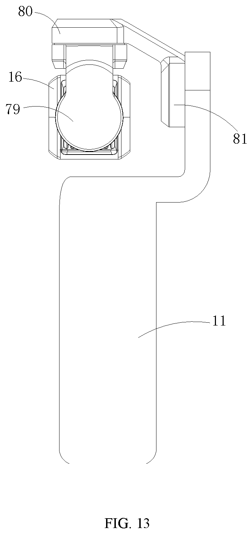

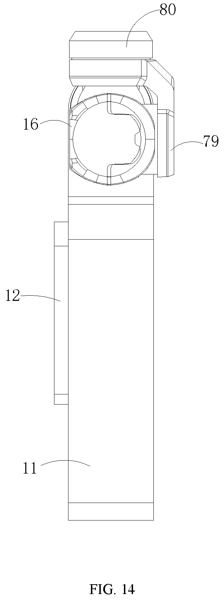

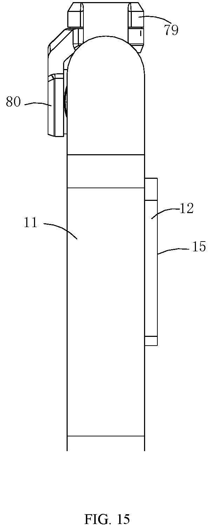

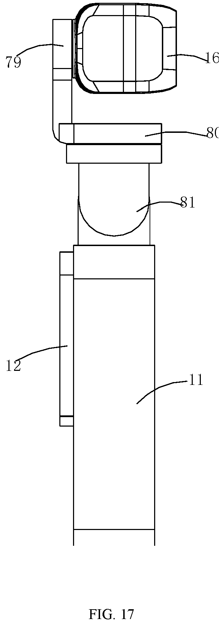

In some embodiments, the gimbal 13 may include a first axis assembly 79, a second axis assembly 80, and a third axis assembly 81 connected in sequence. The first axis assembly 79 may be used to connect to the load, and the third axis assembly 81 may be connected to the handle 11. The angle of the photographing module 16 may be adjusted by the first axis assembly 79, the second axis assembly 80, and the third axis assembly 81. As shown in FIG. 5 to FIG. 11, the first axis assembly 79 may be a roll axis assembly, the second axis assembly 80 may be a pitch axis assembly, and the third axis assembly 81 may be a yaw axis assembly. Or, as shown in FIG. 12 to FIG. 17, the first axis assembly 79 may be a roll axis assembly, the second axis assembly 80 may be a yaw axis assembly, and the third axis assembly 81 may be a pitch axis assembly. Or, as shown in FIG. 1 to FIG. 4, the first axis assembly 79 may be a pitch axis assembly, the second axis assembly 80 may be a roll axis assembly, and the third axis assembly 81 may be a yaw axis assembly. In this way, a three-axis gimbal 13 may be realized.

Specifically, in one embodiment, the load may be a photographing module 16.

In one embodiment, as shown in FIG. 1 to FIG. 4, from the load to the handle 11, the gimbal 13 includes a pitch axis assembly, a roll axis assembly, and a yaw axis assembly in sequence, and the gimbal 13 may be connected to the handle 11 through the yaw axis assembly.

In one embodiment, as shown in FIG. 5 to FIG. 11, from the load to the handle 11, the gimbal 13 includes a roll axis assembly, a pitch axis assembly and a yaw axis assembly in sequence, and the gimbal 13 may be connected to the handle 11 through the yaw axis assembly.

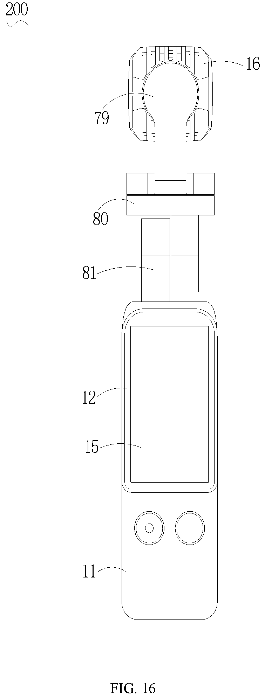

In one embodiment, as shown in FIG. 12 to FIG. 17, from the load to the handle 11, the gimbal 13 includes a roll axis assembly, a yaw axis assembly and a pitch axis assembly in sequence, and the gimbal 13 may be connected to the handle 11 through the pitch axis assembly and the connection arm. Among them, the gimbals in FIG. 12 to FIG. 15 may be offset gimbals. The gimbals in FIG. 16 to FIG. 17 may be folding gimbals.

In some embodiments, the display unit 12 may have at least one of the functions of controlling the photographing mode of the handheld gimbal device 100, controlling the working parameters of the handheld gimbal device 100 (including the working parameters of the gimbal 13, the working parameters of the handle 11, or the parameters of other external devices, etc., as explained in the specification), displaying the working parameters of the handheld gimbal device 100 (including the working parameters of the gimbal 13, the working parameters of the handle 11, or the parameters of other external devices, etc., as explained in the specification), and displaying the photographing picture of the gimbal 13.

In this way, the state switching of the display unit 12 may trigger at least one of the above multiple functions to improve the user experience.

Specifically, the state switching of the display unit 12 may be linked with at least one of the above functions. The handheld gimbal device 100 may include a controller, and a corresponding trigger may be set at a position corresponding to the first state and the second state of the display unit 12. When the display unit 12 is in the first state, the display unit 12 may trigger one of the triggers to generate a first electrical signal, and the controller may control the handheld gimbal device 100 to implement at least one of the above functions according to the first electrical signal. When the display unit 12 is in the second state, the display unit 12 may trigger another trigger to generate a second electrical signal, and the controller may control the handheld gimbal device 100 to implement at least one of the above functions according to the second electrical signal. The controller may be set on the handle 11, or the gimbal 13. Or the controller may include multiple control components, one or more control components may be located in the handle 11, and one or more control components may be located in the gimbal 13.

In one embodiment, the working parameters of the handheld gimbal device 100 may include but may be not limited to the working parameters of the gimbal 13, the working parameters of the handle 11, or the parameters of other external devices. When the display unit 12 switches from the first state to the second state, the controller may obtain the movement position (such as the rotation angle) of the display unit 12 in real time through a sensor, and control the adjustment of the parameters through the rotation angle. For example, when the display unit 12 switches from the first state to the second state, as the rotation angle of the display unit 12 increases, the value of the parameters may increase. For example, when the display unit 12 switches from the first state to the second state, one of the two parameters may be selected, etc.

In one embodiment, the working parameters of the handheld gimbal device 100 include but may be not limited to the working parameters of the gimbal 13, the working parameters of the handle 11, or the parameters of other external devices. The display unit 12 may display the working parameters of the handheld gimbal device 100, such that the user may understand the working status of the handheld gimbal device 100 in a timely manner.

In one embodiment, the display unit 12 may display the photographing picture of the gimbal 13, such that the user may conveniently observe the photographing picture of the gimbal 13, adjust the attitude of the gimbal 13 in a timely manner, and improve the user experience.

In one embodiment, the photographing mode of the handheld gimbal device 100 may include a first photographing mode and a second photographing mode. The first photographing mode may be a vertical photographing mode, and the second photographing mode may be a horizontal photographing mode. In the vertical photographing mode, the photographing picture presented on the display unit 12 may be a vertical picture. In the horizontal photographing mode, the photographing picture presented on the display unit 12 may be a horizontal picture. The first photographing mode and the second photographing mode may be linked with the first state and the second state.

In some embodiments, a joystick may be provided at the handle 11, and the joystick may be configured to receive instructions to achieve at least one of the following functions: controlling the rotation of the gimbal 13, controlling the switching between different photos on the display unit 12, and controlling the switching between photographing modes of the gimbal 13.

In this way, the joystick may facilitate the user to operate the handheld gimbal device 100.

Specifically, in one embodiment, the operation member 78 may include a joystick. The joystick may achieve the functions of up, down, left, right, upper left, upper right, lower left, lower right or downward pressing. When the user operates, the thumb may be used to operate the joystick, for example, to control the direction of the joystick to control the rotation of the gimbal 13, to control the direction of the joystick to control the switching between different photos on the display unit 12, or to control the direction of the joystick to control the switching between the photographing modes of the gimbal 13. The photographing mode of the gimbal 13 may include a horizontal photographing mode or a vertical photographing mode.

In some embodiments, as shown in FIG. 44, FIG. 52 to FIG. 55, the display unit 12 may be connected to the handle 11 through an adapter structure 18, and the adapter structure 18 includes a shaft 82. The handheld gimbal device 100 includes a flexible cable 83, and a circuit board 84 may be provided in the handle 11. The flexible cable 83 may pass through the shaft 82 and connect the display unit 12 and the circuit board 84. The flexible cable 83 includes a first end component 85, a connection component 86 and a second end component 87. The connection component 86 connects the first end component 85 and the second end component 87, and the connection component 86 may be formed by folding at least two layers of cables 88.

In this way, the reliability of the electrical connection between the display unit 12 and the circuit board 84 may be improved.

Specifically, the first end component 85 may be electrically connected to the circuit board 84, and the second end component 87 may be electrically connected to the display unit 12. When the display unit 12 moves (such as rotating), it may move with the flexible cable 83. The connection component 86 may be formed by folding at least two layers of cables 88, so that the stacking of the connection component 86 may be compact and small in size. In addition, the connection component 86 may have high reliability and may meet the durability requirements (such as the requirement of more than 50k cycles), and meet the requirements of the flexible cable 83 for anti-bending performance. The flexible cable 83 may be passed through the rotation shaft 82, which makes full use of the internal space of the handheld gimbal device 100.

Compared with the coaxial cable, the flexible cable 83 may also have the advantage of low cost. As shown in FIG. 44, the rotation shaft 82 may include at least one of the first shaft 22, the second shaft 24 and the shaft 29.

In some embodiments, the connection component 86 may be bent into a first section 89, a connection section 90, and a second section 91, the connection section 90 may connect the first section 89 and the second section 91. The first section 89 may be connected to the first end component 85, the second section 91 may be connected to the second end component 87, and the connection section 90 may be located in the rotation shaft 82.

In this way, the reliability of the connection component 86 connection the display unit 12 and the circuit board 84 may be guaranteed.

Specifically, the first section 89, the connection section 90, and the second section 91 may be all formed by folding at least two layers of cables 88, which ensures the anti-bending performance of the first section 89, the connection section 90, and the second section 91, during the movement of the display unit 12, thereby ensuring the reliability of the connection component 86 connection the display unit 12 and the circuit board 84.

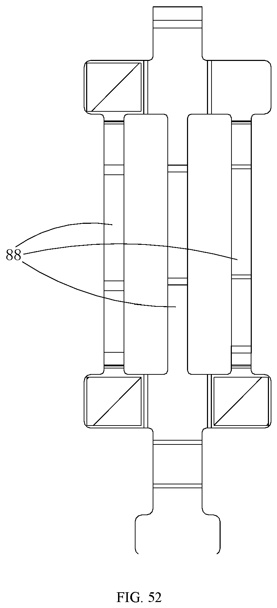

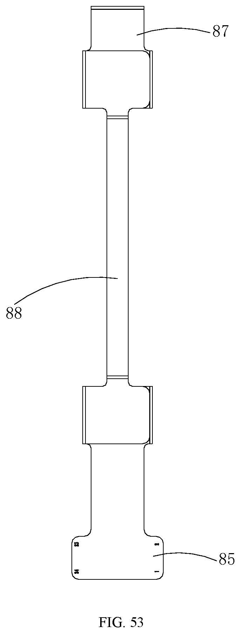

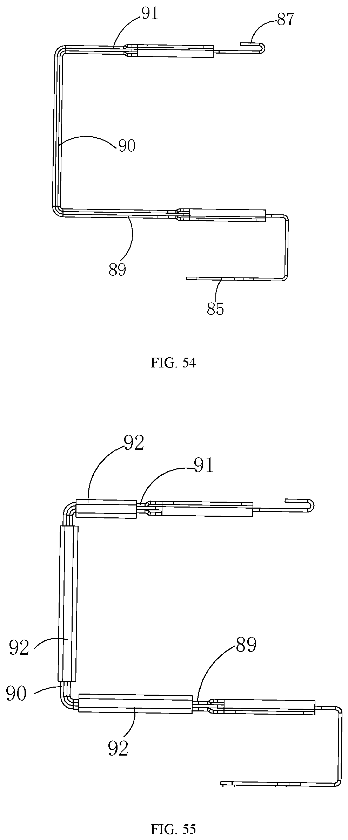

In one embodiment, as shown in FIG. 52 to FIG. 55, FIG. 52 shows the structure of the flexible cable 83 before folding, FIG. 53 shows the structure of the flexible cable 83 after folding, where the connection component 86 is formed by folding the three-layer cable 88, and FIG. 55 shows the structure of the connection component 86 bent into the first section 89, the connection section 90, and the second section 91. FIG. 55 shows the structure of the first section 89, the connection section 90, and the second section 91 wrapped with a protective layer 92.

In some embodiments, at least one of the first section 89, the connection section 90, and the second section 91 may be wrapped with a protective layer 92. In this way, the connection component 86 may be protected and the service life of the connection component 86 may be improved.

Specifically, in one embodiment, the first section 89, the connection section 90, and the second section 91 may be all wrapped with a protective layer 92. The protective layer 92 may be an insulating protective layer 92. In one example, the protective layer 92 may be acetate cloth, and the first section 89, the connection section 90, and the second section 91 may be wrapped with acetate cloth.

It may be understood that in other embodiments, one or two of the first section 89, the connection section 90, and the second section 91 may be wrapped with a protective layer 92.

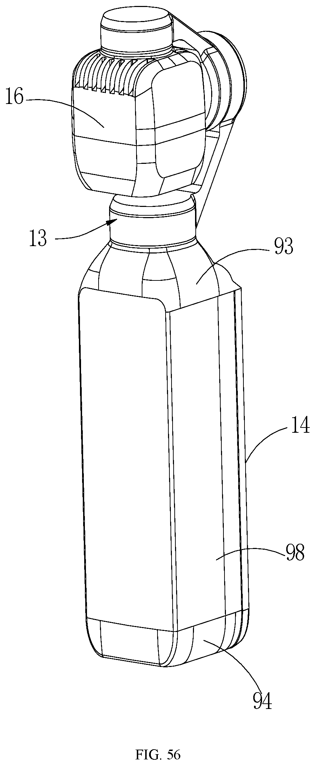

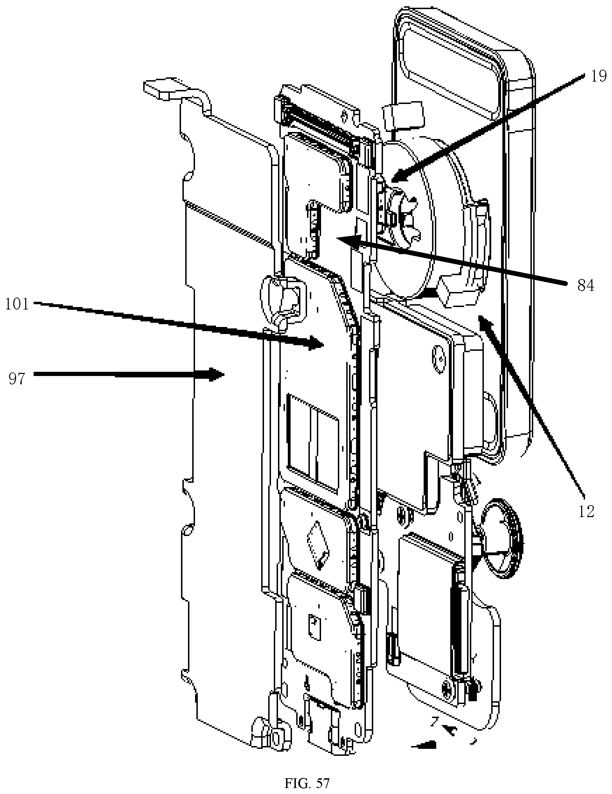

In some embodiments, as shown in FIG. 56 to FIG. 59, the handle 11 also includes an upper cover 93, a bottom cover 94, a heating element 96, and a first heat sink 97. A accommodation space 95 may be provided in the handle 11. The heating element 96 may be located in the accommodation space 95. The first heat sink 97 may be thermally connected to the heating element 96 and thermally connected to at least one of the upper cover 93 or the bottom cover 94. The first heat sink 97 may be configured to conduct the heat emitted by the heating element 96 to at least one of the upper cover 93 and the bottom cover 94.

In this way, the heat of the heating element 96 in the handle 11 may be conducted to at least one of the upper cover 93 and the bottom cover 94, such that the temperature in the middle of the handle 11 may be lower, the hot feeling of holding may be improved, the demand for long-term video recording may be met, and the user experience may be improved.

Specifically, the handle 11 may include a grip member 98, the grip member 98 may be connected to the upper cover 93 and the bottom cover 94, and a storage space 95 may be provided in the grip member 98. In one embodiment, the first heat sink 97 may be thermally connected to the upper cover 93 and the bottom cover 94, and the first heat sink 97 may be configured to conduct the heat emitted by the heating element 96 to the upper cover 93 and the bottom cover 94. In this way, the first heat sink 97, the upper cover 93 and the bottom cover 94 may be integrally connected to form an "I"-shaped heat dissipation structure to enhance the heat dissipation effect of the heating element 96. In one embodiment, the first heat sink 97 may be thermally connected to the upper cover 93 or the bottom cover 94, and the first heat sink 97 may be configured to conduct the heat emitted by the heating element 96 to the upper cover 93 or the bottom cover 94. The first heat sink 97 may be connected to the upper cover 93 in a thermally conductive manner, and the first heat sink 97 may be integrally connected to the upper cover 93 to form a "T"-shaped heat dissipation structure. The first heat sink 97 may be connected to the bottom cover 94 in a thermally conductive manner, and the first heat sink 97 may be integrally connected to the bottom cover 94 to form a "T"-shaped heat dissipation structure.

**In** one embodiment, the upper cover 93 may be made of metal, and the bottom cover 94 and the grip 98 may be made of plastic. The upper cover 93 made of metal may be not often held and touched, and may better transfer heat. The bottom cover 94 and the grip 98 made of plastic may reduce the weight of the handheld gimbal device 100, making the handheld gimbal device 100 lighter. **In** another embodiment, the upper cover 93, the bottom cover 94 and the grip 98 may be made of metal. The upper cover 93 made of metal, the bottom cover 94 made of metal and the grip 98 made of metal may be strong and durable, and may effectively avoid cracking and deformation due to bumps. **In** other embodiments, the upper cover 93, the bottom cover 94 and the gripping portion 98 may be not limited to the above materials, but may also be other materials, which may be not specifically limited here.

The grip member 98 may include a top and a bottom, the top of the grip member 98 may be connected to the upper cover 93, and the bottom of the grip member 98 may be connected to the bottom cover 94. The grip member 98 may be connected to the upper cover 93 and the bottom cover 94 in a detachable manner such as screwing, snapping, or latching. The grip member 98 may also be connected to the upper cover 93 and the bottom cover 94 in a fixed connection manner such as bonding or welding, which may be not specifically limited here. The grip member 98 may be connected to the upper cover 93 and the bottom cover 94 in a detachable manner, which may be convenient for the maintenance and replacement of the components in the accommodation space 95 of the handheld gimbal device 100.

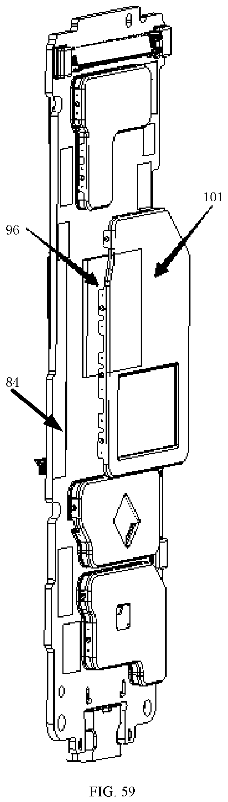

The grip member 98 may be provided with the accommodation space 95, and the heating element 96 may be located in the accommodation space 95. In one embodiment, the heating element 96 may include a processing chip, which may be used as the main chip of the handheld gimbal device 100, and the main chip may be installed on the circuit board 84 (as shown in FIG. 59). When the main chip is in working state, the main chip may generate heat, and the heat may cause local hot spots in the handheld gimbal device 100. The first heat sink 97 may be thermally connected to the heating element 96, that is, the first heat sink 97 may be thermally connected to the main chip, and the first heat sink 97 may be thermally connected to at least one of the upper cover 93 and the bottom cover 94, such that the first heat sink 97 may be thermally connected to the heating element 96 (the main chip), the upper cover 93 and/or the bottom cover 94 to achieve heat transfer contact. The first heat sink 97 may conduct the heat generated by the heating element 96 to at least one of the upper cover 93 and the bottom cover 94, avoiding the occurrence of local hot spots in the grip member 98 near the heating element 96. The heat may be mainly directed to the upper cover 93 and/or the bottom cover 94, reducing the temperature of the grip member 98, which may be conducive to improving the grip experience of the handheld gimbal device 100 without affecting portability, and improving the user's experience.

It may be worth mentioning that the processing chip may include a central processing chip, a graphics processing chip, etc. It may be understood that in other embodiments, the heating element 96 may be not limited to the processing chip, but may also be other types of heating elements 96, which may be not specifically limited here.

In some embodiments, the upper cover 93 and the first heat sink 97 may be connected by a first heat conductive member, and/or the bottom cover 94 and the first heat sink 97 may be connected by a second heat conductive member.

In this way, the heat conduction efficiency may be improved.

Specifically, in one embodiment, the upper cover 93 and the first heat sink 97 may be connected by a first heat conductive member, and the bottom cover 94 and the first heat sink 97 may be connected by a second heat conductive member.

The upper cover 93 may be connected to the first heat sink 97 through a first heat conductive member, and the first heat conductive member may have a better heat conduction function, such that the heat generated by the heating element 96 may be directed to the first heat sink 97, and then the heat may be directed to the first heat conductive member through the first heat sink 97. The first heat conductive member may transfer the heat to the upper cover 93, thereby reducing the hot spot temperature of the grip member 98 and improving the hot feeling experience of the grip member 98. The first heat conductive member may achieve heat transfer contact between the upper cover 93 and the first heat sink 97.

The bottom cover 94 may be connected to the first heat sink 97 through the second heat conductive member, which has a better heat conductive function. In this way, the heat generated by the heating element 96 may be directed to the first heat sink 97, and then the heat may be directed to the second heat conductive member through the first heat sink 97. The second heat conductive member transfers the heat to the bottom cover 94, reducing the hot spot temperature of the grip 98 and improving the hot feeling of the grip member 98. The second heat conductive member achieves heat transfer contact between the bottom cover 94 and the first heat sink 97.

In one embodiment, the upper cover 93 and the first heat sink 97 may be connected by a first heat conductive member, or the bottom cover 94 and the first heat sink 97 may be connected by a second heat conductive member.

In some embodiments, the first heat conductive member may include a heat conductive gel, a heat conductive pad, or a graphite sheet; and the second heat conductive member may include a heat conductive gel, a heat conductive pad or a graphite sheet. In this way, the selection of the first heat conductive member and the second heat conductive member may be flexible, and the cost may be reduced.

Specifically, both the heat conductive gel and the heat conductive pad may achieve heat conduction. When the first heat conductive member is a heat conductive gel, the heat conductive gel may enhance the stability of the connection between the upper cover 93 and the first heat sink 97, increase the heat conduction area between the upper cover 93 and the first heat sink 97, and improve the heat conduction efficiency. When the first heat conductive member is a heat conductive pad, the heat conductive pad may be arranged between the upper cover 93 and the first heat sink 97 to avoid direct friction between the upper cover 93 and the first heat sink 97, and avoid collision between the upper cover 93 and the first heat sink 97. The heat conductive pad may not only have a heat conduction effect but also have a buffering effect.

When the first heat conductive member is a graphite sheet, the graphite sheet may have the characteristics of high thermal conductivity, and the graphite sheet may achieve uniform heat in the plane direction. The first heat sink 97 may improve thermal conductivity by achieving heat transfer contact with the upper cover 93 through the graphite sheet, and may quickly reduce the temperature of the grip 98, improving the hot feeling experience of the grip 98 and enhancing the user experience.

When the second heat conductive member is a thermally conductive gel, the thermally conductive gel may enhance the stability of the connection between the bottom cover 94 and the first heat sink 97, increase the heat conduction area between the bottom cover 94 and the first heat sink 97, and improve the heat conduction efficiency. When the second heat conductive member is a thermal pad, the thermal pad may be arranged between the bottom cover 94 and the first heat sink 97 to avoid direct friction between the bottom cover 94 and the first heat sink 97, and avoid collision between the bottom cover 94 and the first heat sink 97. The thermal pad may have not only a heat conduction effect but also a buffering effect.

When the second heat conductive member is a graphite sheet, the graphite sheet may have the characteristics of high thermal conductivity, and the graphite sheet may achieve uniform heat in the plane direction. The first heat sink 97 may improve thermal conductivity by achieving heat transfer contact with the bottom cover 94 through the graphite sheet, may quickly reduce the temperature of the grip 98, improving the hot feeling of the grip 98, and enhancing the user experience.

In some embodiments, the first heat sink 97 may include a heat spreader or a heat pipe. In this way, the thermal conductivity efficiency may be improved.

Specifically, in one embodiment, the first heat sink 97 may include a heat spreader, which may evenly dissipate the heat of the heating element 96 to all parts of the heat spreader, thereby increasing the heat dissipation area. In addition, the connection area between the heat spreader and the upper cover 93 and the connection area with the bottom cover 94 may be large, such that the heat may be quickly transferred to the upper cover 93 and/or the bottom cover 94, thereby improving the thermal conductivity efficiency.

In one embodiment, the first heat sink 97 may include a heat pipe (Vapor Chambers, VC), which may be a planar heat pipe. The planar heat pipe may have the advantages of high heat conduction efficiency, low impedance, and flexible design of finished product size and appearance. The heat of the heating element 96 may be quickly transferred to the upper cover 93 and/or the bottom cover 94, thereby improving the heat conduction efficiency.

In some embodiments, an accommodation space 95 may be provided in the handle 11, and a heating element 96 may be placed in the accommodation space 95. The display unit 12 may be connected to the handle 11 through an adapter structure 18. The display unit 12 may be provided with a second heat sink 99, and the heating element 96 may be thermally connected to the second heat sink 99 through the adapter structure 18.

In this way, the second heat sink 99 may be used to dissipate heat from the heating element 96, thereby improving the hot feeling of the handle 11 when being hold and improving the user experience.

Specifically, the heating element 96 may include a circuit board 84 and a processing chip arranged at the upper circuit board 84, and a shield cover 101 may be provided at the processing chip. The shield cover 101 may be mounted on the circuit board 84. The heat generated by the heating element 96 when it is in the working state may be conducted by the circuit board 84 to the shield cover 101 through the thermal conductive gel, and the shield cover 101 may conduct the heat to the adapter structure 18, and the adapter structure 18 may conduct the heat to the second heat sink 99, which may be dissipated by the second heat sink 99, thereby reducing the temperature of the handle 11, improving the hot feeling of the handle 11, and improving the user experience.

In some embodiments, as shown in FIG. 58, along the length direction of the display unit 12, a plurality of second heat sinks 99 may be provided inside the display unit 12.

In this way, the heat dissipation efficiency may be further improved.

Specifically, the plurality of second heat sinks 99 may extend along the length direction of the display unit 12, and plurality of second heat sinks 99 may be arranged in parallel inside the display unit 12. The adapter structure 18 may guide the heat generated by the heating element 96 to the plurality of second heat sinks 99, which may be dissipated by the plurality of second heat sinks 99, further improving the heat dissipation efficiency.

In some embodiments, the display unit 12 may be connected to a back shell 102, and the second heat sink 99 may be attached to the back shell 102.

In this way, the heat dissipation efficiency may be further improved.

Specifically, the back shell 102 of the display unit 12 may be a shell facing away from the user, and the back shell 102 of the display unit 12 may have a larger area, which may increase the heat dissipation area. Preferably, the back shell 102 of the display unit 12 may be made of metal. The second heat sink 99 may be attached to the back shell 102, and the heat conduction area of the two may also be increased, further improving the heat dissipation efficiency. The display unit frame 17 includes the back shell 102.

In some embodiments, the second heat sink 99 includes a stacked metal plate 103 and a graphite sheet 104. In this way, the heat dissipation effect of the second heat sink 99 may be good.

Specifically, the graphite sheet 104 may be located between the metal plate 103 and the back shell 102 of the display unit 12, and the metal plate 103 may be connected to the adapter structure 18 in a thermally conductive manner. The metal plate 103 may conduct heat to the graphite sheet 104, the graphite sheet 104 may conduct heat to the back shell 102, and the back shell 102 may dissipate heat to the external environment of the display unit 12. The graphite sheet 104 may be heat-conductively connected to the metal plate 103 and the back shell 102 of the display unit 12, which may increase the heat conduction area between the metal plate 103 and the back shell 102 of the display unit 12. The second heat sink 99 may have a good heat dissipation effect.

In one example, the thickness of the graphite sheet 104 may be 0.2 mm.

In some embodiments, the adapter structure 18 may include a first member 25 and a second member 26 that are rotatably engaged with each other. One of the first member 25 and the second member 26 may be fixed to the handle 11, and the other may be fixed to the display unit 12. The gap between the first member 25 and the second member 26 may be filled with thermal grease.

In this way, the thermal conductivity efficiency may be improved.

Specifically, in one embodiment, the first member 25 may be fixed to the handle 11, and the second member 26 may be fixed to the display unit 12. The first member 25 may include a base 19, which may serve as a bearing stator, and the second member 26 may include a shaft 29, which serves as a bearing rotor. The gap between the bearing stator and the bearing rotor may be filled with thermal grease, and the bearing rotor may be thermally connected to the second heat sink 99 (such as a metal plate 103). The heat of the heating element 96 may be transferred to the bearing stator through the shield cover 101, and then transferred to the bearing rotor through the thermal grease, and then transferred to the second heat sink 99, and finally dissipated to the external environment of the display unit 12 by the back shell 102 of the display unit 12.

In one example, the bearing stator and the bearing rotor may be both made of Al6061 aluminum alloy.

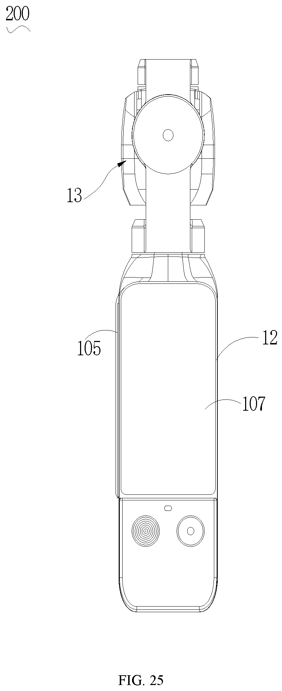

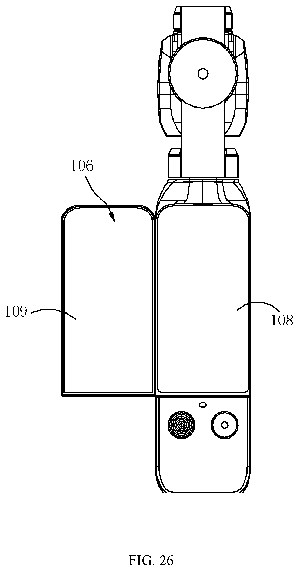

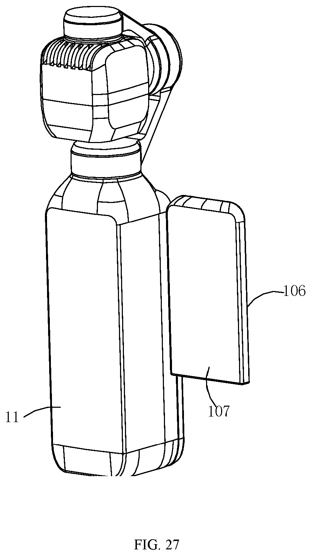

In some embodiments, as shown in FIG. 25 to FIG. 27, the display unit 12 is foldably arranged at the handle 11. Specifically, the display unit 12 may be connected to the handle 11 through the folding structure 105, such that the display unit 12 may be movable to switch between the first state and the second state.

In this way, the state switching of the display unit 12 may be realized.

Specifically, when the folding structure 105 moves, the display unit 12 may be driven to move, to realize the state switching of the display unit 12. The folding structure 105 may include structural parts such as a rotation shaft and a hinge.

In some embodiments, the display unit 12 may be configured to have a folded state and an unfolded state. The folded state may be the first state, and the unfolded state may be the second state. The display unit 12 may include a fixed screen 108 and a rotatable screen 109. The fixed screen 108 may be fixed to the side wall of the handle 11, and the rotatable screen 109 may be rotatably connected to one side of the fixed screen 108 through the folding structure 105. When the display unit 12 is in the folded state, the rotatable screen 109 may be stacked on the fixed screen 108 and the side 107 of the rotatable screen 109 away from the fixed screen 108 may be the display surface. When the display unit 12 is in the unfolded state, the rotatable screen 109 and the fixed screen 108 may be arranged side by side, and the rotatable screen 109 and the side 106 of the fixed screen 108 away from the mount surface 14 may be combined as the display surface.

In this way, the display unit 12 in different states may have different lateral dimensions. Specifically, in the folded state, the lateral dimension of the display unit 12 may be smaller, and in the unfolded state, the lateral dimension of the display unit 12 may be larger.

In some embodiments, within the unfolded angle range, the rotatable screen 109 may be suspended and fixed relative to the fixed screen 108 at different opening angles.

In this way, the user's viewing angle requirements for the display unit 12 may be met.

Specifically, in one embodiment, the unfolded angle range may be 0 degrees to 180 degrees. The user may manually or electrically rotate the rotatable screen 109 to a suitable angle through the operation member 78 of the handheld gimbal device 100 according to their own needs. After the adjustment is completed, the rotatable screen 109 may hover at the adjusted angle.

In one embodiment, the folding structure 105 may include a hinge and a damping member, and the hinge may connect the damping member and the rotatable screen 109, such that the rotatable screen 109 may be suspended at any angle within the unfolded angle range.

In some embodiments, the display unit 12 may be retractably connected to the handle 11, such that the display unit 12 may be movable to switch between the first state and the second state.

In this way, the state switching of the display unit 12 may be realized.

In some embodiments, the display unit 12 may be configured to have a storage state and an unfolded state. The storage state may be the first state, and the unfolded state may be the second state. The display unit 12 may include at least two sub-screens, and the at least two sub-screens may slide relative to each other. When the at least two sub-screens slide to the unfolded state, the display surfaces 15 of the at least two sub-screens may be flush, and when at least two sub-screens slide to the storage state, at least two sub-screens may be overlapped.

In this way, the display unit 12 may have different lateral sizes in different states.

Specifically, in the storage state, the at least two sub-screens may be overlapped, and one sub-screen at the top may be used as a display screen, and the display surface 15 of a single sub-screen may be smaller. The handheld gimbal device 100 may use the top sub-screen to realize the functions of displaying parameters and states, displaying photographing images, and inputting commands (when the external screen 107 may be a touch display screen).

In the unfolded state, the display surfaces 15 of the at least two sub-screens may be flush, forming a larger display surface 15 as a whole. The handheld gimbal device 100 may use the display surface 15 to realize the functions of displaying parameters and states, displaying photographing images, and inputting commands (when the external screen 107 may be a touch display screen).

The display unit 12 may be connected to the handle 11 through a telescopic structure. The telescopic structure may be arranged at the handle 11. In one embodiment, the telescopic structure may include at least two telescopic arms, each of which may be connected to a sub-screen. The telescopic arm may have two telescopic directions, one of which may be a horizontal telescopic direction, and the other may be a vertical telescopic direction. Initially, the display unit 12 may be in the storage state, and the sub-screens may be arranged overlappingly. When switching from the storage state to the unfolded state, the telescopic arm may extend in the horizontal telescopic direction, which may drive the overlapping sub-screens to stagger. When the sub-screens are completely staggered, the telescopic arm connected to the sub-screen with a higher height may be retracted in the vertical telescopic direction, and the telescopic arm connected to the sub-screen with a lower height may be extended in the vertical telescopic direction, so that the display surfaces 15 of at least two sub-screens may be flush. The horizontal telescopic direction may be a direction parallel to the side wall of the handle 11, and the vertical telescopic direction may be a direction perpendicular to the side wall of the handle 11.

In some embodiments, the handheld gimbal device 100 may also include a controller. In response to the display unit 12 switching between the first state and the second state, the controller may control the operation state change of the handheld gimbal device 100.

In this way, the operation state of the handheld gimbal device 100 and the state of the display unit 12 may be linked.

Specifically, it may be preset that one operation state of the handheld gimbal device 100 corresponds to the first state of the display unit 12, and another operation state of the handheld gimbal device 100 corresponds to the second state of the display unit 12. By switching the display unit 12 between the first state and the second state, the controller may control the change of the operation state of the handheld gimbal device 100.

In some embodiments, in response to the display unit 12 switching from the first state to the second state, the controller may control the handheld gimbal device 100 in the power-off or dormant state to turn on; and/or, in response to the display unit 12 switching from the second state to the first state, the controller may control the handheld gimbal device 100 in the powered-on state to remain powered-on or powered-off or dormant.

In this way, the handheld gimbal device 100 may be controlled to turn on or off or sleep by switching the state of the display unit 12.

Specifically, it may be preset that the power-off or dormant state of the handheld gimbal device 100 corresponds to the first state of the display unit 12, and the power-on state of the handheld gimbal device 100 corresponds to the second state of the display unit 12. Initially, the display unit 12 may be in the first state, and the handheld gimbal device 100 may be in the power-off or dormant state. When the display unit 12 switches from the first state to the second state, the controller may control the handheld gimbal device 100 in the power-off or dormant state to turn on in response to the above operation. When the display unit 12 switches from the second state to the first state, in response to the above operation, the controller may control the handheld gimbal device 100 in the power-on state to remain in the power-on state or to turn off or dormant.

Further, in response to the display unit 12 switching from the first state to the second state, the controller may control the handheld gimbal device 100 in the power-off or dormant state to turn on and start the photographing or recording function, such that the fast photographing or fast recording function may be realized.

In some embodiments, the handheld gimbal device 100 may include a first interactive module. After the first interactive module is triggered, in response to the display unit 12 switching from the second state to the first state, the controller may control the handheld gimbal device 100 to remain in the power-on state.

Specifically, when the handheld gimbal device 100 is turned on, to prevent the handheld gimbal device 100 from being turned off or put into sleep mode during switching of the display unit 12 from the second state to the first state, the user or the handheld gimbal device may trigger the first interactive module to select the first interactive module. When the display unit 12 switches from the second state to the first state, the controller may respond to the above operation and control the handheld gimbal device 100 to remain in the power-on state, such that the user may continue to use the handheld gimbal device 100 for photographing. When the first interactive module is not triggered, by switching the display unit 12 from the second state to the first state, the controller may control the handheld gimbal device 100 in the power-on state to be turned off or put into sleep mode.

In some embodiments, the graphical user interface of the display unit 12 may be provided with prompt information. In response to the display unit 12 switching from the second state to the first state, the prompt information may be used to prompt the user whether to turn off or enter the sleep mode.

In this way, when the state of the display unit 12 is switched, the user may be prompted to decide whether to shut down or sleep, thereby improving the user experience.

Specifically, the prompt information may be presented in the form of a pop-up window. When the display unit 12 switches from the second state to the first state, the controller may control the graphical user interface of the display unit 12 to display the prompt information in response to the above operation. The prompt information may include a selection button. The user may choose to shut down or not shut down by triggering the selection button or the physical button. The controller may control the handheld gimbal device 100 to shut down or keep the handheld gimbal device 100 in the power-on state, according to the user's instructions.

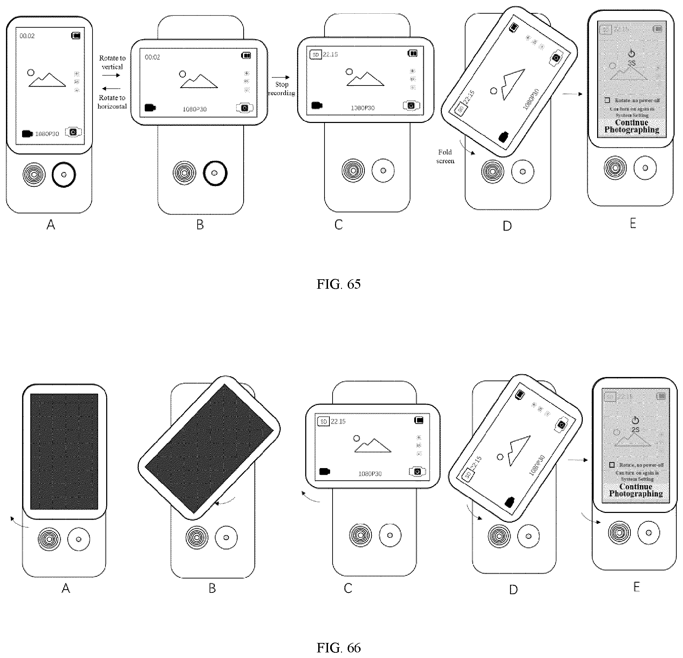

Specifically, as shown in FIG. 66, when the handheld gimbal device 100 is in the power-off state (A of FIG. 66), the display unit 12 may be rotated and switched to the horizontal screen state (B of FIG. 66). At this time, the handheld gimbal device 100 may be turned on (C of FIG. 66), and the handheld gimbal device 100 may be set to start the photographing or recording function, such that the fast photographing or fast recording function may be realized. When the display unit 12 may be rotated to the vertical screen state again (D in FIG. 66), the graphical user interface of the display unit 12 may display a prompt message to prompt the user whether to shut down or sleep, and the handheld gimbal device 100 may enter the power-off or sleep countdown (E in FIG. 66), or directly operate the first interactive module, such as the buttons such as "continue photographing" or "do not shut down" presented by the operation, to control the handheld gimbal device 100 to remain in the power-on state, such that the user may continue to use the handheld gimbal device 100 for photographing.

In some embodiments, in response to the handheld gimbal device 100 being turned on, the controller may control the attitude of the gimbal 13 to be the unfolded attitude; and/or, in response to the handheld gimbal device 100 being turned off or sleeping, the controller may control the attitude of the gimbal 13 to be the storage attitude.

In this way, the attitude of the gimbal 13 may be linked to the power on/off state of the handheld gimbal device 100, which is convenient for users to use.

Specifically, in one embodiment, in response to the handheld gimbal device 100 being turned on, the controller may control the attitude of the gimbal 13 to be the unfolded attitude, and in response to the handheld gimbal device 100 being turned off, the controller may control the attitude of the gimbal 13 to be the storage attitude.

The storage attitude of the gimbal 13 may be that the motor angle of each axis component of the gimbal 13 is the storage angle. For example, the storage angle may be defined as 0 degrees, as shown in FIG. 1. The unfolded attitude of the gimbal 13 may be that the motor angle of each axis component of the gimbal 13 is the unfolded angle. For example, the unfolded angle may be defined as 90 degrees, as shown in FIG. 2.

When the handheld gimbal device 100 is turned off or in sleep mode, the attitude of the gimbal 13 may be the storage attitude. In response to the display unit 12 switching from the first state to the second state, the controller may control the handheld gimbal device 100 to turn on, and further, in response to the handheld gimbal device 100 turning on, the controller may control the attitude of the gimbal 13 to switch from the storage attitude to the unfolded attitude.

When the handheld gimbal device 100 is turned on, the attitude of the gimbal 13 may be the unfolded attitude. In response to the display unit 12 switching from the second state to the first state, the controller may control the handheld gimbal device 100 to shut down or sleep, and further, in response to the handheld gimbal device 100 turning off or sleeping, the controller may control the attitude of the gimbal 13 to switch from the unfolded state to the storage attitude.

In some embodiments, the photographing mode of the handheld gimbal device 100 may include at least a first photographing mode and a second photographing mode. In response to the display unit 12 switching from the first state to the second state, the controller may control the handheld gimbal device 100 to be set to the second photographing mode; and, in response to the display unit 12 switching from the second state to the first state, the controller may control the handheld gimbal device 100 to be set to the first photographing mode.

In this way, the photographing mode of the handheld gimbal device 100 may be linked to the state of the display unit 12, which is convenient for users to use.

Specifically, the first state of the display unit 12 may correspond to the first photographing mode of the handheld gimbal device 100, and the second state of the display unit 12 may correspond to the second photographing mode of the handheld gimbal device 100. By switching the display unit 12 back and forth between the first state and the second state, it may be convenient for users to switch the photographing mode of the handheld gimbal device 100 between the first photographing mode and the second photographing mode.

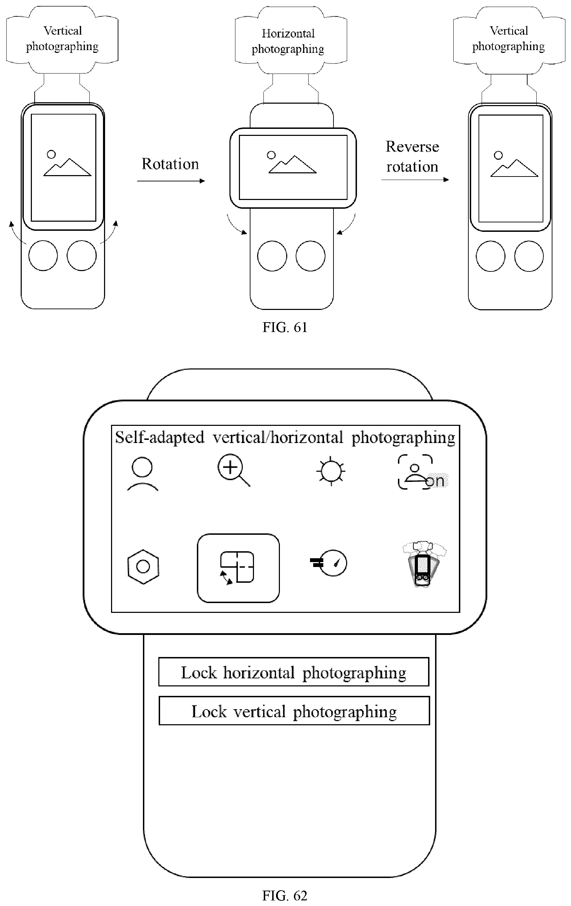

In one embodiment, the first photographing mode may be a vertical photographing mode, and the second photographing mode may be a horizontal photographing mode. The vertical photographing mode means that the photographing frame may be vertical, and the height of the frame may be greater than the width, as shown in A and C in FIG. 61, and the horizontal photographing mode means that the photographing frame may be horizontal and the height of the frame may be less than the width, as shown in B in FIG. 61. In FIG. 61, switching from the vertical photographing mode to the horizontal photographing mode, or from the horizontal photographing mode to the vertical photographing mode may be achieved by rotating the display unit 12.

In some embodiments, the controller may control the attitude change of the gimbal 13 such that the handheld gimbal device switches between the first photographing mode and the second photographing mode.

In this way, the handheld gimbal device 100 may be switched between the first photographing mode and the second photographing mode by changing the attitude of the gimbal 13.

Specifically, the photographing module 16 may be installed on the first axis component 79 of the gimbal 13 as a load. For the three-axis gimbal 13, the controller may control at least one of the first axis component 79, the second axis component 80 and the third axis component 81 to rotate such that the photographing module 16 may be vertically or horizontally shot.

In some embodiments, when the attitude of the gimbal 13 does not change, the controller may control the image sensor of the photographing module 16 to rotate such that the handheld gimbal device 100 switches between the first photographing mode and the second photographing mode.

In this way, the handheld gimbal device 100 may be switched between the first photographing mode and the second photographing mode by rotating the image sensor.

Specifically, the photographing module 16 may be installed on the first axis component 79 of the gimbal 13 as a load, and the photographing module 16 may include an image sensor inside. A rotating mechanism may be provided in the photographing module 16, and the controller may control the rotating mechanism to drive the image sensor to rotate. When the length direction of the image sensor is along the length direction of the handle 11, the photographing mode of the handheld gimbal device 100 may be the first photographing mode or the second photographing mode. When the length direction of the image sensor is perpendicular to the length direction of the handle 11, the photographing mode of the handheld gimbal device 100 may be the second photographing mode or the first photographing mode.

In some embodiments, the controller may control the display frame to change such that the handheld gimbal device 100 adapts to the first photographing mode and the second photographing mode when switching between the first photographing mode and the second photographing mode. For example, the frame may be cropped to adapt to the horizontal screen or the vertical screen, such that the frame fills the display interface without black edges.

Specifically, in one embodiment, the first state of the display unit 12 may be a portrait state, and the second state may be a landscape state. In the portrait state, exemplarily, the ratio of the width and height of the picture may be 9:16, and the picture displayed by the display unit 12 may basically fill the entire display surface 15. In the landscape state, exemplarily, the ratio of the width and height of the picture may be 16:9, and the picture displayed by the display unit 12 may basically fill the entire display surface 15, such that the display of the picture fully utilizes the area of the display surface 15, and there may be no black border when the picture may be displayed.

In some embodiments, when the handheld gimbal device 100 is in a turn-off or sleep state, in response to the display unit 12 switching from the first state to the second state, the controller may control the handheld gimbal device 100 to turn on and set it to the second photographing mode; and, in response to the display unit 12 switching from the second state to the first state, and when the handheld gimbal device 100 remains in the turn-on state, if a user's instruction not to shut down or sleep is received, the controller may control the handheld gimbal device 100 to switch from the second photographing mode to the first photographing mode.

In this way, the state of the display unit 12 may be linked to the turn on/off states, the sleep state, and photographing modes of the handheld gimbal device 100, to facilitate user use.

Specifically, when the handheld gimbal device 100 is in the turn-off state, the display unit 12 may be in the first state, and the display unit 12 may switch from the first state to the second state. The controller may control the handheld gimbal device 100 to turn on and enter the second photographing mode in response to the above operation.

When the handheld gimbal device 100 is in the turn-on state, the display unit 12 may be in the second state. When the display unit 12 switches from the second state to the first state, the controller may respond to the above operation and control the graphical user interface of the display unit 12 to display the prompt information, which is used to prompt the user whether to shut down or sleep. When the handheld gimbal device 100 remains in the power-on state, and the user's information of not shutting down or not sleeping is received, the controller may control the handheld gimbal device 100 to switch from the second photographing mode to the first photographing mode.

In some embodiments, the handheld gimbal device 100 may include a second interactive module. After the second interactive module is triggered, the controller may control the photographing mode of the handheld gimbal device 100 not to change with the switching of the display unit 12 between the first state and the second state. In this way, the photographing mode of the handheld gimbal device 100 may be locked.

Specifically, the user or the system of the handheld gimbal device 100 may trigger the second interactive module such that the second interactive module is selected. After the second interactive module is triggered, the photographing mode of the handheld gimbal device 100 may be locked, and the photographing mode of the handheld gimbal device 100 may not change with the state switching of the display unit 12, to realize the photographing mode locking function.

For example, when the second interactive module is a control for locking vertical photographing, the control may be triggered, which means that when the display unit 12 switches between the first state (such as the vertical screen state) and the second state (the horizontal screen state), the frames in the display unit 12 may all be vertical frames; and, when the second interactive module is a control for locking horizontal photographing, the control may be triggered, which means that when the display unit 12 switches between the first state (such as the vertical screen state) and the second state (the horizontal screen state), the frames in the display unit 12 may all be horizontal frames. When the second interactive module is not triggered, or the third interactive module is triggered where the third interactive module is an adaptive horizontal and vertical photographing control, it may mean that the photographing mode changes with the display unit 12, that is, the vertical screen may correspond to the vertical photographing mode and the horizontal screen may correspond to the horizontal photographing mode. It should be noted that the control for locking vertical photographing, the control for locking horizontal photographing, and the control for adaptive horizontal and vertical photographing may be three different controls, or may be functions represented by one control at different times. For example, it may be set to a specific icon, and the first trigger is the lock vertical photographing function, the second trigger is the lock horizontal photographing function, and the third trigger is the adaptive horizontal and vertical photographing function, etc., which may be set according to actual needs. In FIG. 62, as an example, the adaptive horizontal and vertical photographing control is displayed on the graphical user interface of the display unit 12. The control for locking vertical photographing and the control for locking horizontal photographing may be physical buttons or touch buttons set below the display unit.

In some embodiments, in response to the handheld gimbal device 100 being in a recording state, the controller may controls the photographing mode of the handheld gimbal device 100 not to change as the display unit 12 switches between the first state and the second state. In this way, the photographing mode of the handheld gimbal device 100 may be locked when the handheld gimbal device 100 is in a recording state.

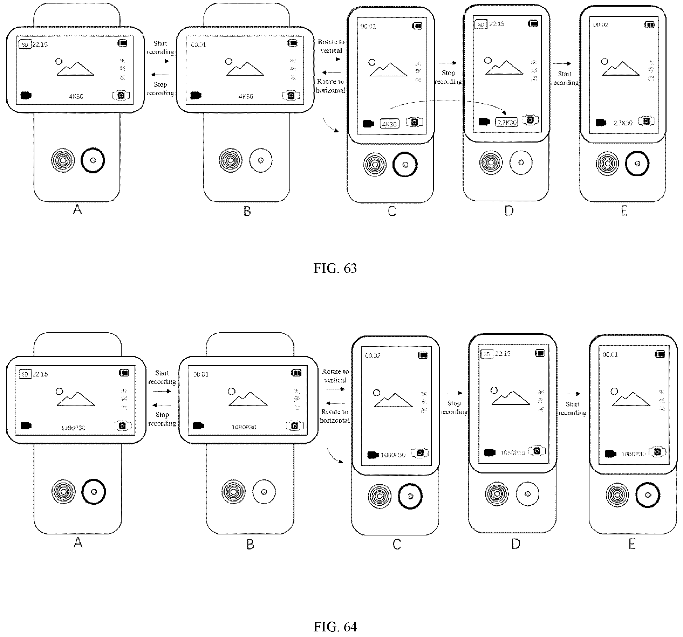

For example, as shown FIG. 63 and FIG. 64, when the handheld gimbal device 100 is in the recording state and is in the horizontal photographing mode (B of FIG. 63 and B of FIG. 64), the display unit 12 is rotated to switch to the vertical screen state. At this time, the horizontal photographing mode is still retained (C of FIG. 63 and C of FIG. 64). After the recording is completed, it may be set to automatically switch to the vertical photographing mode (D of FIG. 63), and the next recording is the vertical photographing mode (E of FIG. 63); or the horizontal photographing mode is still maintained (D of FIG. 64), and the next recording is the horizontal photographing mode (E of FIG. 64).

When the handheld gimbal device 100 is in the recording state and is in the vertical photographing mode (A of FIG. 65), the display unit 12 is rotated to switch to the horizontal screen state. At this time, the vertical photographing mode is still retained (B of FIG. 65). After the recording is completed, it may be set to automatically switch to the horizontal photographing mode (C of FIG. 65). At this time, when the display unit 12 is rotated to the vertical screen state again, the image user interface of the display unit 12 displays a prompt message to prompt the user whether to power off or sleep, and the handheld gimbal device 100 enters the power-off or sleep countdown (E of FIG. 65).

In some embodiments, in response to the number of times the display unit 12 switches between the first state and the second state, the controller may control the gimbal 13 to change between the front shot and the Selfie.

In this way, the front shot and the Selfie of the gimbal 13 may be linked with the number of state switching of the display unit 12, which is convenient for users to use.

Specifically, the correspondence between the number of times the display unit 12 switches between the first state and the second state and the front shot and the self-timer of the gimbal 13 may be preset and stored. For example, a single switch may control the gimbal 13 to photograph forward, and a double reciprocating switch may control the gimbal 13 to photograph Selfie. For example, when the number of switches is an odd number, the gimbal 13 may photographs forward; and, when the number of switches is an even number, the gimbal 13 may photograph Selfie. As another example, when the number of switching reaches a certain value or values, the gimbal 13 may photographs forward; and, when the number of switching reaches another value or values, the gimbal 13 may photograph Selfie.

The gimbal 13 takes a forward shot, which may be understood as rotating the gimbal 13 such that the lens of the photographing module 16 on the gimbal 13 faces the front side of the user. The gimbal 13 takes a selfie, which may be understood as rotating the gimbal 13 such that the lens of the photographing module 16 on the gimbal 13 faces the user.

In some embodiments, the display unit 12 may rotate relative to the handle 11, and the controller may control the gimbal 13 to rotate to a corresponding angle according to the rotation angle of the display unit 12.

In this way, the rotation of the display unit 12 may be linked with the rotation of the gimbal 13, which may be convenient for users.

Specifically, the controller may obtain the rotation angle of the display unit 12, and adapt the trajectory of the gimbal 13 according to the rotation angle of the display unit 12, to realize the linkage between the display unit 12 and the gimbal 13.

The rotation of the above-mentioned gimbal 13 may be synchronous or asynchronous with the rotation of the display unit 12, which is not specifically limited here.

In some embodiments, as shown in FIG. 60, the handheld gimbal device 100 also includes a position sensor 110, which may be used to detect the position of the display unit 12, and the controller may control the operating state of the handheld gimbal device 100 according to the position information of the display unit 12.

In this way, the position of the display unit 12 may be obtained according to the position sensor 110. The position of the display unit 12 may include the rotation angle of the display unit 12, the translation distance, or other position information.

The position sensor 110 may include a trigger switch, which may include at least one of an in-place switch, a Hall sensor, or a photoelectric sensor. In response to the display unit 12 switching from the first state to the second state, the trigger switch may be triggered, and the controller may control the handheld gimbal device 100 in the power-off or dormant state to turn on according to the triggered signal of the trigger switch. The position sensor 110 may be set on the handle 11, and the display unit 12 may be provided with a corresponding trigger member. During the movement of the display unit 12, the trigger member and the trigger switch may be adapted for use.

For example, as show in FIG. 60, the trigger switch of the position sensor 110 may be an in-place switch. The adapter structure 18 includes a base 19 and a pressure cover 20. The pressure cover 20 includes a fixation plate 21 and a first shaft 22. The first shaft 22 may be connected to the fixation plate 21, the fixation plate 21 may be fixed in the display unit frame 17, and the first shaft 22 passes through the display unit frame 17. The base 19 includes a base body 23 and a second shaft 24. The base body 23 may be fixed on the handle 11, and the in-position switch may be installed in the base body 23. The second shaft 24 may be connected to the base 23. The second shaft 24 may be sleeved outside the first shaft 22, and the first shaft 22 and the second shaft 24 may be rotatably connected. The display unit frame 17 may include a trigger member on the surface facing the handle 11, and the trigger member may partially extend into the base 23. When the display unit 12 reaches the first state or the second state, the trigger member may trigger the in-position switch, and then the controller may obtain the current position of the display unit 12. In the drawings, the first shaft 22 and the second shaft 24 may be both hollow shafts, which facilitates the installation of the flexible cable 83.

In other embodiments, the position sensor 100 may also include an angle detection sensor for identifying the rotation angle of the display unit 12, to control the operating state of the handheld gimbal device 100 according to the rotation angle, such as to control the gimbal 13 to rotate a corresponding angle, etc. The angle detection sensor may include at least one of a Hall sensor, a photoelectric sensor, etc. It should be noted that the position sensor 100 may be set as a trigger switch alone, or as an angle detection sensor alone, or include both a trigger switch and an angle detection sensor, or the position sensor may also be set as an integrated part of a trigger switch and an angle detection sensor.

In some embodiments, the handheld gimbal device 100 may also include a controller. In response to the gimbal 13 reaching any attitude, the controller may control the gimbal 13 to photograph in multiple orientations around the current attitude and combine them into a panoramic image.

Specifically, the multiple orientations may include but are not limited to multiple directions and/or multiple angles, and the multiple directions may include but are not limited to up, down, left, or right. The multiple angles include but are not limited to one or more angles in one direction, such as photographing at one or more angles above and photographing at one or more angles to the left. The directions and angles may refer to the directions and angles determined by the lens of the photographing module 16 on the gimbal 13 according to the geodetic coordinates.

The graphical user interface of the display unit 12 may be provided with a fourth interactive module. When the fourth interactive module is triggered, the controller may turn on the synthesis function of the panoramic image. When the gimbal 13 reaches any attitude, the controller may control the photographing module 16 on the gimbal 13 to photograph in multiple orientations, obtain one or more images in each orientation, and use the images corresponding to the multiple orientations to synthesize a panoramic image. It should be noted that the first interactive module, the second interactive module, the third interactive module and the fourth interactive module may be physical buttons set on the handle 11, or icons set on the display unit 12 which may be a pop-up window or a drop-down menu or a graphical user interface set on the display unit in other ways such as clicking to select.

On the other hand, in some other embodiments, the handheld gimbal device 100 may include a handle 11, a display unit 12, a gimbal 13, and a controller. The handle 11 may be provided with a mount surface 14. The display unit 12 may be set on the mount surface 14, and the display unit 12 has a first state and a second state. The display unit 12 may be configured to move to reversibly switch between the first state and the second state, and a dimension of the display unit 12 in the first state along a lateral direction of the handle 11 may be smaller than the dimension of the display unit 12 in the second state along the handle 11. The gimbal 13 may be set on the handle 11. In response to the display unit 12 switching between the first state and the second state, the controller may control the operation state of the handheld gimbal device 100 to change.

In the above-mentioned handheld gimbal device 100, the display unit 12 may be movable, which may reduce the influence of the size of the handle 11 on the size of the display unit 12, such that the display unit 12 may provide a larger picture or display more content, thereby improving the user experience. In addition, since the display unit 12 may be movable, the influence of the size of the handle 11 on the size of the display unit 12 may be reduced, such that the display unit 12 may be made larger, which may improve the defects of the traditional display unit being small and weak in interaction, thereby improving the user experience. At the same time, the operation state of the handheld gimbal device 100 and the state of the display unit 12 may also be linked.

It should be noted that the above explanation of the implementation and beneficial effects of the handheld gimbal device 100 may be also applicable to the handheld gimbal device 100 of the present embodiment. To avoid redundancy, it will not be elaborated in detail here.

In some embodiments, in response to the display unit 12 switching from the first state to the second state, the controller may control the handheld gimbal device 100 in the power-off or sleep state to turn on; and/or, in response to the display unit 12 switching from the second state to the first state, the controller may control the handheld gimbal device 100 in the power-on state to remain in the power-on state or power off or sleep.

In this way, the handheld gimbal device 100 may be controlled to power on, power off or sleep by switching the state of the display unit 12.

In some embodiments, in response to the display unit 12 switching from the first state to the second state, the controller may control the handheld gimbal device 100 in the power-off or sleep state to power on and start the photographing or recording function.

In this way, the fast photographing or fast recording function may be realized.

In some embodiments, the handheld gimbal device 100 may include a first interactive module. After the first interactive module is triggered, in response to the display unit 12 switching from the second state to the first state, the controller may control the handheld gimbal device 100 to remain in the power-on state.

In this way, the handheld gimbal device 100 may be prevented from being turned off or put into sleep when the display unit 12 switches from the second state to the first state.

In some embodiments, the graphical user interface of the display unit 12 may be configured to provide the prompt information. In response to the display unit 12 switching from the second state to the first state, the prompt information may be used to prompt the user whether to power off or sleep.

In this way, when the state of the display unit 12 is switched, the user may be prompted whether to power off or sleep, thereby improving the user experience.

In some embodiments, in response to the handheld gimbal device 100 powering on, the controller may control the attitude of the gimbal 13 to be the unfolded attitude; and/or, in response to the handheld gimbal device 100 powering off or sleeping, the controller may control the attitude of the gimbal 13 to be the retracted attitude.

In this way, the attitude of the gimbal 13 may be linked to the power on/off state of the handheld gimbal device 100, which may be convenient for users to use.

In some embodiments, the photographing mode of the handheld gimbal device 100 may include at least a first photographing mode and a second photographing mode. In response to the display unit 12 switching from the first state to the second state, the controller may control the handheld gimbal device 100 to be set to the second photographing mode; and, in response to the display unit 12 switching from the second state to the first state, the controller may control the handheld gimbal device 100 to be set to the first photographing mode.

In this way, the photographing mode of the handheld gimbal device 100 may be linked with the state of the display unit 12, which may be convenient for users to use.

In some embodiments, the first photographing mode may be a vertical photographing mode, and the second photographing mode may be a horizontal photographing mode.

In this way, the state of the display unit 12 may be switched according to the requirements of the vertical photographing mode or the horizontal photographing mode.

In some embodiments, the controller may be used to control the attitude change of the gimbal 13 such that the handheld gimbal device 100 switches between the first photographing mode and the second photographing mode.

In this way, the handheld gimbal device 100 may be switched between the first photographing mode and the second photographing mode by changing the attitude of the gimbal 13.

In some embodiments, when the attitude of the gimbal 13 remains unchanged, the controller may control the image sensor of the photographing module 16 to rotate such that the handheld gimbal device 100 switches between the first photographing mode and the second photographing mode.

In this way, the handheld gimbal device 100 may switch between the first photographing mode and the second photographing mode by rotating the image sensor.

In some embodiments, the controller may control the display frame to change to adapt to the first photographing mode and the second photographing mode.

In this way, the frame may be cropped to adapt to the horizontal screen or the vertical screen, such that the frame may fill the display interface without black edges.

In some embodiments, when the handheld gimbal device 100 may be in the power-off or dormant state, in response to the display unit 12 rotating from the first state to the second state, the controller may control the handheld gimbal device 100 to power on and be in the second photographing mode; in response to the display unit 12 rotating from the second state to the first state, and when the handheld gimbal device 100 remains in the on state, such as receiving a non-offline instruction or a non-dormant instruction from the user, the controller may control the handheld gimbal device 100 to switch from the second photographing mode to the first photographing mode.

In this way, the state of the display unit 12 and the power on/off state, sleep state, and photographing mode of the handheld gimbal device 100 may be linked to facilitate user use.

In some embodiments, the handheld gimbal device 100 may also include a second interactive module. After the second interactive module is triggered, the controller may control the photographing mode of the handheld gimbal device 100 not to change with the switching of the display unit 12 between the first state and the second state.

In this way, the photographing mode of the handheld gimbal device 100 may be locked.

In some embodiments, in response to the handheld gimbal device 100 being in a recording state, the controller may control the photographing mode of the handheld gimbal device 100 not to change with the switching of the display unit 12 between the first state and the second state.

In this way, the photographing mode of the handheld gimbal device 100 may be locked when the handheld gimbal device 100 is in the recording state.

In some embodiments, in response to the number of times the display unit 12 switches between the first state and the second state, the controller may control the gimbal 13 to change between front photographing and Selfie.

In this way, the front shot and Selfie of the gimbal 13 may be linked with the number of state switching of the display unit 12, which may be convenient for users.

In some embodiments, the display unit 12 may rotate relative to the handle 11, and the controller may be used to control the gimbal 13 to rotate to the corresponding angle according to the rotation angle of the display unit 12.

In this way, the rotation of the display unit 12 may be linked with the rotation of the gimbal 13, which may be convenient for users.

In some embodiments, the handheld gimbal device 100 may also include a position sensor 110. The position sensor 10 may be used to detect the position of the display unit 12, and the controller may be used to control the operating state of the handheld gimbal device 100 according to the position information of the display unit 12.

In this way, the position of the display unit 12 may be obtained according to the position sensor 110110.

In some embodiments, the position sensor 110 may include a trigger switch. In response to the display unit 12 switching from the first state to the second state, the trigger switch may be triggered, and the controller may control the handheld gimbal device 100 in the power-off or dormant state to start according to the triggered signal of the trigger switch.

In this way, the handheld gimbal device 100 in the power-off or dormant state may be powered on by triggering the trigger switch.

In some embodiments, in response to the gimbal 13 reaching any attitude, the controller may control the gimbal 13 to photograph in multiple orientations around the current attitude and combine them into a panoramic image.

In existing technologies, the handheld gimbal device includes an interactive apparatus provided at the handle, and, because of the size of the handle, the operable space of the interactive apparatus is limited, resulting in a poor user operation experience.

Based on this, in some other embodiments, as shown in FIG. 1 and FIG. 2, the handheld gimbal device 100 includes a handle 11, a display unit 12 and a gimbal 13. The handle 11 may be provided with a mount surface 14 and a first interactive apparatus 111 for receiving user instructions. The display unit 12 may be rotatably arranged at the mount surface 14 such that the display unit 12 is able to reversibly switch between the first state and the second state. The display unit 12 may be provided with a display surface 15. The rotation axis of the display unit 12 may be perpendicular to the display surface 15. In the first state and the second state, the display surface 15 may face away from the mount surface 14. The distance between the lower edge of the display unit 12 in the first state and the first interactive apparatus 111 may be smaller than the distance between the lower edge of the display unit 12 in the second state and the first interactive apparatus 111. The gimbal 13 may be arranged at the handle 11.

In the above-mentioned handheld gimbal device 100, the distance between the lower edge of the display unit 12 in the second state and the first interactive apparatus 111 may be relatively large. When the display unit 12 is in the second state, it may provide more operating space for the first interactive apparatus 111, thereby improving the convenience of the user to operate the first interactive apparatus 111.

Specifically, the first interactive apparatus 111 may include an operation member 78, and the operation member 78 may include but may be not limited to components such as buttons, knobs, or touch screens.

As shown in FIG. 1, the distance between the lower edge of the display unit 12 in the first state and the first interactive apparatus 111 is d1. As shown in FIG. 2, the distance between the lower edge of the display unit 12 in the second state and the first interaction device 111 is d2, and d1<d2. Therefore, in the second state, the distance between the display unit 12 and the first interaction device 111 may be larger, which may provide more operation space for the first interaction device 111 and improve the user experience.

In some embodiments, the handle 11 may be also provided with a second interaction device 112 for receiving user instructions. In the first state, the second interaction device 112 may be arranged at the back of the display unit 12; and, in the second state, the second interaction device 112 may be arranged at the lower side of the display unit 12, such that the second interaction device 112 may be exposed.

In this way, more operations may be provided to the user.

Specifically, in the first state, the second interaction device 112 may be arranged at the back of the display unit 12, and the display unit 12 may block the second interaction device 112. The user may operate the first interaction device 111 to interact with the handheld gimbal device 100.

In the second state, the second interaction device 112 may be arranged at the lower side of the display unit 12, such that the second interaction device 112 is exposed, and the second interaction device 112 may also include an operation member. The user may further operate the exposed second interactive apparatus 112. The functions of the operation members of the first interactive apparatus 111 and the second interactive apparatus 112 may be the same or different, or part of the functions may be the same and part of the functions may be different, which is not specifically limited here.

When the functions of the operation members of the first interactive apparatus 111 and the second interactive apparatus 112 are the same, the user may operate the first interactive apparatus 111 or the second interactive apparatus 112 in the second state according to their own needs.

When the functions of the operation members of the first interactive apparatus 111 and the second interactive apparatus 112 are different, the user may operate the first interactive apparatus 111 or the second interactive apparatus 112 in the second state according to the control requirements of the handheld gimbal device 100.

When some functions of the operation members of the first interactive apparatus 111 and the second interactive apparatus 112 are different or part of the functions are the same, the user may operate the operation members of the same functions but located in different interactive apparatuses in the second state according to their own needs, or may operate the operation members of the first interactive apparatus 111 or the second interactive apparatus 112 in the second state according to the control requirements of the handheld gimbal device 100.

It should be noted that the above explanation of the implementation method and beneficial effects of the handheld gimbal device 100 may be also applicable to the handheld gimbal device 100 of this embodiment. To avoid redundancy, it will not be elaborated here.

In some embodiments, in the first state, the length direction of the display unit 12 may be along the length direction of the handle 11, and in the second state, the length direction of the display unit 12 may form an angle greater than zero with the length direction of the handle 11.

Thus, in the first state, the structure of the handheld gimbal device 100 may be more compact, and in the second state, the display unit 12 may be unfolded to display more content or present a larger picture.

In some embodiments, the first state may be the state in which the display unit 12 is in a vertical screen, and the second state may be the state in which the display unit 12 is in a horizontal screen.

Thus, the display unit 12 in the vertical screen state may make the structure of the handheld gimbal device 100 more compact and reduce the space occupied by the handheld gimbal device 100. The display unit 12 in the horizontal screen state may increase the viewing angle range, display more content, or enlarge the small banner screen on the original vertical screen to the converted horizontal screen such that it fills the horizontal screen. Therefore, the user may watch more clearly and comfortably, which may be more in line with the user's habit of watching the content displayed by the display unit 12 and improve the user experience.

In some embodiments, the display unit 12 may have a length dimension and a width dimension that may be smaller than the length dimension. In the first state, the width direction of the display unit 12 may be arranged along the lateral direction of the handle 11, and in the second state, the length direction of the display unit 12 may be arranged along the lateral direction of the handle 11.

In this way, the display unit 12 in the second state may display more content in the lateral direction of the handle 11.

In some embodiments, in the first state, the periphery of the display unit 12 may be flush with the periphery of the mount surface 14, or the display unit 12 may be located inside the mount surface 14; and, in the second state, the display unit 12 may extend out of the mount surface 14 at two ends of the lateral direction of the handle 11.

In this way, in the first state, the space occupied by the handheld gimbal device 100 may be reduced, and in the second state, the display unit 12 may display more content 14 in the lateral direction of the handle 11.

In some embodiments, the rotation stroke of the display unit 12 may include a first movement stage from the first state to the critical position, and a second movement stage from the critical position to the second state. In response to the display unit 12 switching from the first state to the second state, the display unit 12 may automatically reach the second state after passing the critical position; and, in response to the display unit 12 switching from the second state to the first state, the display unit 12 may automatically reach the first state after passing the critical position.

In this way, the rotation stroke of the display unit 12 may be divided into two movement stages.

In some embodiments, the display unit 12 may be connected to the handle 11 through the adapter structure 18, and the adapter structure 18 may enable the display unit 12 to automatically reach the first state or the second state reversibly.

In this way, the state switching of the display unit 12 may be convenient.

In some embodiments, the adapter structure 18 may include a first member 25 and a second member 26 that may be rotatably engaged with each other. The first member 25 may be connected to the handle 11, and the second member 26 may be connected to the display unit 12. The direction of the force between the first member 25 and the second member 26 may be configured to change during the rotation of the display unit 12. Therefore, when the display unit 12 switches from the first state to the second state, the first member 25 may apply a movement resistance to the second member 26 in the first movement stage, and the first member 25 may apply a driving force to the second member 26 in the second movement stage. When the display unit 12 switches from the second state to the first state, in the second movement stage, the first member 25 may apply a movement resistance to the second member 26; and in the first movement stage, the first member 25 may apply a driving force to the second member 26.

In this way, the state switching of the display unit 12 may be controlled by the first member 25 and the second member 26.

In some embodiments, the force between the first member 25 and the second member 26 may be a magnetic force.

In this way, the cost and structural complexity of the handheld gimbal device 100 may be reduced.

In some embodiments, the first member 25 may include a first magnet 27, the second member 26 may include a second magnet 28, and the first magnet 27 and the second magnet 28 may be arranged opposite to each other. A repulsive force may be generated between the first magnet 27 and the second magnet 28, and the critical position may be the angle when the magnetization direction of the first magnet 27 and the magnetization direction of the second magnet 28 are along the same straight line.

In this way, the display unit 12 may automatically reach the second state or the first state after passing the critical position through the first magnet 27 and the second magnet 28.

In some embodiments, in the first movement stage, the magnetization direction of the first magnet 27 may be staggered with the magnetization direction of the second magnet 28, and the first magnet 27 may apply a movement resistance or a driving force to the second magnet 28. In the second movement stage, the magnetization direction of the first magnet 27 may be staggered with the magnetization direction of the second magnet 28, and the first magnet 27 may apply a driving force or a movement resistance to the second magnet 28.

In this way, the interaction between the first magnet 27 and the second magnet 28 may be used to form a driving force or a movement resistance.

In some embodiments, the first magnet 27 may be annular, and the second magnet 28 may be annular. The first magnet 27 may be sleeved on the outside of the second magnet 28, or the second magnet 28 may be sleeved on the outside of the first magnet 27.

In this way, the space utilization rate of the handheld gimbal device 100 may be improved.

In some embodiments, the first magnet 27 and the second magnet 28 may be at least partially staggered along the axial direction of the adapter structure 18.

In this way, it may be ensured that the display unit 12 does not produce axial movement during the rotation process.

In some embodiments, the handheld gimbal device 100 may be provided with a limit structure 45 located at two ends of the rotation stroke.

In this way, the rotation stroke of the display unit 12 may be limited.

In some embodiments, the handle 11 or the first member 25 may be provided with a first guide member 46, the display unit 12 or the second member 26 may be provided with a second guide member 47, the first guide member 46 and the second guide member 47 may be engaged with each other for guiding, and the limit structure 45 may include limit members located at two ends of the first guide member 46 or the second guide member 47.

In this way, the display unit 12 may be limited by the limit members on the first guide member 46 and the second guide member 47.

In some embodiments, the display unit 12 may have at least one of the functions including: controlling the photographing mode of the handheld gimbal device 100, controlling the working parameters of the handheld gimbal device 100, displaying the working parameters of the handheld gimbal device 100, or displaying the photographing picture of the gimbal 13.

In this way, the state switching of the display unit 12 may trigger at least one of the above multiple functions to improve the user experience.

In some embodiments, the handheld gimbal device 100 may also include a controller, and in response to the display unit 12 switching between the first state and the second state, the controller may control the operation state of the handheld gimbal device 100 to change.

In this way, the operation state of the handheld gimbal device 100 and the state of the display unit 12 may be linked.

In some embodiments, in response to the display unit 12 switching from the first state to the second state, the controller may control the handheld gimbal device 100 in the power-off or sleep state to power on; and/or, in response to the display unit 12 switching from the second state to the first state, the controller may control the handheld gimbal device 100 in the power-on state to remain in the power-on state or power off or sleep.

In this way, the handheld gimbal device 100 may be controlled to power on, power off or sleep by switching the state of the display unit 12.

In some embodiments, in response to the display unit 12 switching from the first state to the second state, the controller may control the handheld gimbal device 100 in the power-off or sleep state to power on and start the photographing or recording function.

In this way, a fast photographing or fast recording function may be realized.

In some embodiments, the handheld gimbal device 100 may also include a first interaction module. After the first interaction module is triggered, in response to the display unit 12 switching from the second state to the first state, the controller may control the handheld gimbal device 100 to remain in the power-on state.

In this way, the handheld gimbal device 100 may be prevented from being powered off or sleeping when the display unit 12 switches from the second state to the first state.

In some embodiments, the graphical user interface of the display unit 12 may be provided with the prompt information. In response to the display unit 12 switching from the second state to the first state, the prompt information may be used to prompt the user whether to power off or sleep.

In this way, when the state of the display unit 12 is switched, the user may be prompted whether to power off or sleep, thereby improving the user experience.

In some embodiments, the photographing mode of the handheld gimbal device 100 may include at least a first photographing mode and a second photographing mode. In response to the display unit 12 switching from the first state to the second state, the controller may control the handheld gimbal device 100 to be set to the second photographing mode; and, in response to the display unit 12 switching from the second state to the first state, the controller may control the handheld gimbal device 100 to be set to the first photographing mode.

In this way, the photographing mode of the handheld gimbal device 100 may be linked with the state of the display unit 12, which may be convenient for users to use.

In some embodiments, the first photographing mode may be a vertical photographing mode, and the second photographing mode may be a horizontal photographing mode.

In this way, the switching between the vertical photographing mode and the horizontal photographing mode may be realized.

In some embodiments, the controller may control the attitude change of the gimbal 13 such that the handheld gimbal device 100 switches between the first photographing mode and the second photographing mode.

In this way, the handheld gimbal device 100 may be switched between the first photographing mode and the second photographing mode by changing the attitude of the gimbal 13.

In some embodiments, when the attitude of the gimbal 13 remains unchanged, the controller may control the image sensor of the photographing module 16 to rotate such that the handheld gimbal device 100 switches between the first photographing mode and the second photographing mode.

In this way, the handheld gimbal device 100 may be switched between the first photographing mode and the second photographing mode by rotating the image sensor.

In some embodiments, the controller may control the display frame to change to adapt to the first photographing mode and the second photographing mode.

In this way, the frame may be cropped to adapt to the horizontal screen or the vertical screen, such that the frame may fill the display interface without black edges.

In some embodiments, when the handheld gimbal device 100 is in the power-off or sleep state, in response to the display unit 12 switching from the first state to the second state, the controller may control the handheld gimbal device 100 to power on and enter the second photographing mode; in response to the display unit 12 switching from the second state to the first state, and when the handheld gimbal device 100 remains in the powered-on state, if a non-power-off command or a non-sleep command is received from the user, the controller may control the handheld gimbal device 100 to switch from the second photographing mode to the first photographing mode.

In this way, the state of the display unit 12 and the power on/off state, the sleep state, and the photographing mode of the handheld gimbal device 100 may be linked to facilitate user use.

In some embodiments, the handheld gimbal device 100 may also include a second interactive module. After the second interactive module is triggered, the controller may control the photographing mode of the handheld gimbal device 100 not to change with the switching of the display unit 12 between the first state and the second state.

In this way, the photographing mode of the handheld gimbal device 100 may be locked.

In some embodiments, in response to the handheld gimbal device 100 being in a recording state, the controller may control the photographing mode of the handheld gimbal device 100 not to change as the display unit 12 switches between the first state and the second state.

In this way, the photographing mode of the handheld gimbal device 100 may be locked when the handheld gimbal device 100 is in the recording state.

In some embodiments, the handheld gimbal device 100 may also include a position sensor 110. The position sensor 110 may be used to detect the position of the display unit 12, and the controller may control the operating state of the handheld gimbal device 100 according to the position information of the display unit 12.

In this way, the position of the display unit 12 may be obtained according to the position sensor 110110.

In some embodiments, the position sensor 110 may include a trigger switch, and in response to the display unit 12 switching from the first state to the second state, the trigger switch may be triggered, and the controller may control the handheld gimbal device 100 in the power-off or dormant state to power on according to the triggered signal of the trigger switch.

In this way, the handheld gimbal device 100 in the power-off or dormant state may be controlled to power on by triggering the trigger switch.

A photographing assembly 200 provided by one embodiment of the present disclosure may include a handheld gimbal device 100 and a photographing module 16 provided by any of the above embodiments, and the photographing module 16 may be arranged at the gimbal 13.

In the above photographing assembly 200, the display unit 12 may be movable, which may reduce the influence of the size of the handle 11 on the size of the display unit 12, such that the display unit 12 may provide a larger picture or display more content, thereby improving the user experience.

In the present disclosure, the description with reference to the terms "one embodiment," "some embodiments," "illustrative embodiments," "one example," "specific examples," or "some examples" means that the specific features, structures, materials, or characteristics described in conjunction with the embodiments or examples are included in at least one embodiment or example of the present application. In the present disclosure, the schematic representation of the above terms does not necessarily refer to the same embodiment or example. Moreover, the specific features, structures, materials, or characteristics described may be combined in any one or more embodiments or examples in a suitable manner.

Although embodiments of the present disclosure have been shown and described, those of ordinary skill in the art will understand that various changes, modifications, substitutions, and alterations can be made to these embodiments without departing from the principles and spirit of the present disclosure. The scope of the present application is defined by the claims and their equivalents.

## Claims

1. A handheld gimbal device comprising:
a handle including a mount surface;
a display unit rotatably arranged at the mount surface such that the display unit is able to reversibly switch between a first state and a second state, wherein: the display unit includes a display surface, a rotation axis of the display unit is perpendicular to the display surface, the display surface faces away from the mount surface in both the first state and the second state, and a dimension of the display unit in the first state along a lateral direction of the handle is smaller than the dimension of the display unit in the second state along the lateral direction of the handle; and
a gimbal arranged at the handle.

2. The handheld gimbal device according to claim 1, wherein:
in the first state, a length direction of the display unit is along a length direction of the handle; and, in the second state, the length direction of the display unit and the length direction of the handle form an angle larger than zero.

3. The handheld gimbal device according to claim 1 or 2, wherein:
the first state is a state in which the display unit is in a vertical screen state, and the second state is a state in which the display unit is in a horizontal screen state.

4. The handheld gimbal device according to claim 1, wherein:
the display unit has a length dimension and a width dimension smaller than the length dimension;
in the first state, the width direction of the display unit is arranged along the lateral direction of the handle; and
in the second state, the length direction of the display unit is arranged along the lateral direction of the handle.

5. The handheld gimbal device according to claim 1 or 4, wherein:
in the first state, a periphery of the display unit is flush with the periphery of the mount surface, or the display unit is located within the mount surface; and
in the second state, the display unit extends out of the mount surface along two lateral ends of the handle.

6. The handheld gimbal device according to claim 1, wherein:
a rotational stroke of the display unit includes a first movement stage from the first state to a critical position, and a second movement stage from the critical position to the second state;
in response to the display unit switching from the first state to the second state, the display unit is able to automatically reach the second state after passing the critical position; and
in response to the display unit switching from the second state to the first state, the display unit is able to automatically reach the first state after passing the critical position.

7. The handheld gimbal device according to claim 6, wherein:
the display unit is connected to the handle via an adapter structure, and the adapter structure enables the display unit to automatically and reversibly reach the first state or the second state.

8. The handheld gimbal device according to claim 7, wherein:
the adapter structure includes a first member and a second member that are rotatably engaged with each other;
the first member is connected to the handle, and the second member is connected to the display unit;
a direction of the force between the first member and the second member is configured to change during the rotation of the display unit, such that: when the display unit switches from the first state to the second state, the first member applies a movement resistance to the second member in the first movement stage, and the first member applies a driving force to the second member in the second movement stage; and, when the display unit switches from the second state to the first state, the first member applies a movement resistance to the second member in the second movement stage, and the first member applies a driving force to the second member in the first movement stage.

9. The handheld gimbal device according to claim 8, wherein:
the force between the first member and the second member is a magnetic force.

10. The handheld gimbal device according to claim 9, wherein:
the first member includes a first magnet, and the second member includes a second magnet, wherein the first magnet and the second magnet are arranged opposite to each other;
a repulsive force is generated between the first magnet and the second magnet; and
the critical position is an angle when the magnetization direction of the first magnet and the magnetization direction of the second magnet are along a same straight line.

11. The handheld gimbal device according to claim 10, wherein:
in the first movement stage, the magnetization direction of the first magnet is staggered with the magnetization direction of the second magnet, and the first magnet applies the movement resistance or the driving force to the second magnet; and
in the second movement stage, the magnetization direction of the first magnet is staggered with the magnetization direction of the second magnet, and the first magnet applies the driving force or the movement resistance to the second magnet.

12. The handheld gimbal device according to claim 10 or 11, wherein:
the first magnet is in a circular ring shape, and the second magnet is in a circular ring shape; and
the first magnet is sleeved on the outside of the second magnet, or the second magnet is sleeved on the outside of the first magnet.

13. The handheld gimbal device according to claim 12, wherein:
the first magnet and the second magnet are at least partially staggered in the axial direction of the adapter structure.

14. The handheld gimbal device according to claim 8, further comprising:
a limit structure at two ends of the rotation stroke.

15. The handheld gimbal device according to claim 14, wherein:
the handle or the first member is provided with a first guide member, the display unit or the second member is provided with a second guide member, wherein the first guide member and the second guide member are engaged with each other for guiding; and
the limit structure includes limit members located at two ends of the first guide member or the second guide member.

16. The handheld gimbal device according to claim 1, wherein:
the display unit has at least one of functions of: controlling a photographing mode of the handheld gimbal device, controlling working parameters of the handheld gimbal device, displaying the working parameters of the handheld gimbal device, or displaying the photographing picture of the gimbal.

17. The handheld gimbal device according to claim 1, further comprising:
a controller, configured to: in response to the display unit switching between the first state and the second state, control an operation state of the handheld gimbal device to change.

18. The handheld gimbal device according to claim 17, wherein:
in response to the display unit switching from the first state to the second state, the controller controls the handheld gimbal device in the power-off or sleep state to power on; and/or, in response to the display unit switching from the second state to the first state, the controller controls the handheld gimbal device in the power-on state to remain in the power-on state or to power off or sleep.

19. The handheld gimbal device according to claim 17, wherein:
in response to the display unit switching from the first state to the second state, the controller controls the handheld gimbal device in the power-off or sleep state to power on and start the photographing or recording function.

20. The handheld gimbal device according to claim 18, further comprising:
a first interactive module;
wherein after the first interactive module is triggered, in response to the display unit switching from the second state to the first state, the controller controls the handheld gimbal device to remain in the power-on state.

21. The handheld gimbal device according to claim 18 or 20, wherein:
a graphical user interface of the display unit is provided with prompt information; and
in response to the display unit switching from the second state to the first state, the prompt information is used to prompt the user whether to power off or sleep.

22. The handheld gimbal device according to claim 17, wherein:
the photographing modes of the handheld gimbal device include at least a first photographing mode and a second photographing mode;
in response to the display unit switching from the first state to the second state, the controller controls the handheld gimbal device to be set to the second photographing mode; and
in response to the display unit switching from the second state to the first state, the controller controls the handheld gimbal device to be set to the first photographing mode.

23. The handheld gimbal device according to claim 22, wherein:
the first photographing mode is a vertical photographing mode, and the second photographing mode is a horizontal photographing mode.

24. The handheld gimbal device according to claim 22, wherein:
the controller controls the attitude change of the gimbal such that the handheld gimbal device switches between the first photographing mode and the second photographing mode; or
when the attitude of the gimbal remains unchanged, the controller controls an image sensor of the photographing module to rotate such that the handheld gimbal device switches between the first photographing mode and the second photographing mode; or
the controller controls a display frame to change to adapt to the first photographing mode and the second photographing mode.

25. The handheld gimbal device according to claim 22, wherein:
when the handheld gimbal device is in the power-off or sleep state, in response to the display unit switching from the first state to the second state, the controller controls the handheld gimbal device to power on and enter the second photographing mode; and
in response to the display unit switching from the second state to the first state, and when the handheld gimbal device remains in the power-on state, the controller controls the handheld gimbal device to switch from the second photographing mode to the first photographing mode.

26. The handheld gimbal device according to claim 17 or 22, further comprising:
a second interactive module;
wherein after the second interactive module is triggered, the controller controls the photographing mode of the handheld gimbal device not to change as the display unit switches between the first state and the second state.

27. The handheld gimbal device according to claim 17 or 22, wherein:
in response to the handheld gimbal device being in a recording state, the controller controls the photographing mode of the handheld gimbal device not to change as the display unit switches between the first state and the second state.

28. The handheld gimbal device according to claim 17, further comprising:
a position sensor;
wherein the position sensor is configured to detect the position of the display unit, and the controller controls the operation state of the handheld gimbal device according to the position information of the display unit.

29. The handheld gimbal device according to claim 28, wherein:
the position sensor includes a trigger switch; and
in response to the display unit switching from the first state to the second state, the trigger switch is triggered, and the controller controls the handheld gimbal device in the power-off or sleep state to power on according to the triggered signal of the trigger switch.

30. A handheld gimbal device comprising:
a handle including a mount surface;
a display unit arranged at the mount surface, wherein: the display unit has a first state and a second stage; the display unit is movable such that the display unit is able to reversibly switch between the first state and the second state; a dimension of the display unit in the first state along a lateral direction of the handle is smaller than the dimension of the display unit in the second state along the lateral direction of the handle; and the display surface of the display unit faces away from the mount surface in the first state and the second state; and
a gimbal arranged at the handle.

31. The handheld gimbal device according to claim 30, wherein:
in the first state, a length direction of the display unit is along a length direction of the handle; and, in the second state, the length direction of the display unit and the length direction of the handle form an angle larger than zero.

32. The handheld gimbal device according to claim 30 or 31, wherein:
the first state is a state in which the display unit is in a vertical screen state, and the second state is a state in which the display unit is in a horizontal screen state.

33. The handheld gimbal device according to claim 30, wherein:
the display unit has a length dimension and a width dimension smaller than the length dimension;
in the first state, the width direction of the display unit is arranged along the lateral direction of the handle; and
in the second state, the length direction of the display unit is arranged along the lateral direction of the handle.

34. The handheld gimbal device according to claim 30 or 33, wherein:
in the first state, a periphery of the display unit is flush with the periphery of the mount surface, or the display unit is located within the mount surface; and
in the second state, the display unit extends out of the mount surface along two lateral ends of the handle.

35. The handheld gimbal device according to claim 30, wherein:
the display unit is rotatably, telescopically, or foldably arranged at the mount surface.

36. The handheld gimbal device according to claim 30, wherein:
the display unit is rotatably arranged at the mount surface, and a rotation axis of the display unit is perpendicular to the display surface.

37. The handheld gimbal device according to claim 30, wherein:
a movement stroke of the display unit includes a first movement stage from the first state to a critical position, and a second movement stage from the critical position to the second state;
in response to the display unit switching from the first state to the second state, the display unit is able to automatically reach the second state after passing the critical position; and
in response to the display unit switching from the second state to the first state, the display unit is able to automatically reach the first state after passing the critical position.

38. The handheld gimbal device according to claim 37, wherein:
the display unit is connected to the handle via an adapter structure, and the adapter structure enables the display unit to automatically and reversibly reach the first state or the second state.

39. The handheld gimbal device according to claim 38, wherein:
the adapter structure includes a first member and a second member that are engaged with each other;
the first member is connected to the handle, and the second member is connected to the display unit;
a direction of the force between the first member and the second member is configured to change during the rotation of the display unit, such that: when the display unit switches from the first state to the second state, the first member applies a movement resistance to the second member in the first movement stage, and the first member applies a driving force to the second member in the second movement stage; and, when the display unit switches from the second state to the first state, the first member applies a movement resistance to the second member in the second movement stage, and the first member applies a driving force to the second member in the first movement stage.

40. The handheld gimbal device according to claim 39, wherein:
the force between the first member and the second member is a magnetic force.

41. The handheld gimbal device according to claim 40, wherein:
the first member and the second member are rotatable relative to each other;
the first member includes a first magnet, and the second member includes a second magnet, wherein the first magnet and the second magnet are arranged opposite to each other;
a repulsive force is generated between the first magnet and the second magnet; and
the critical position is an angle when the magnetization direction of the first magnet and the magnetization direction of the second magnet are along a same straight line.

42. The handheld gimbal device according to claim 41, wherein:
in the first movement stage, the magnetization direction of the first magnet is staggered with the magnetization direction of the second magnet, and the first magnet applies the movement resistance or the driving force to the second magnet; and
in the second movement stage, the magnetization direction of the first magnet is staggered with the magnetization direction of the second magnet, and the first magnet applies the driving force or the movement resistance to the second magnet.

43. The handheld gimbal device according to claim 41, wherein:
the first magnet is in a circular ring shape, and the second magnet is in a circular ring shape; and
the first magnet is sleeved on the outside of the second magnet, or the second magnet is sleeved on the outside of the first magnet.

44. The handheld gimbal device according to claim 41, wherein:
the first magnet and the second magnet are at least partially staggered in the axial direction of the adapter structure.

45. The handheld gimbal device according to claim 39, wherein:
the first member and the second member are rotatable relative to each other;
the first member includes a third magnet, and the second member includes a fourth magnet, wherein the third magnet and the fourth magnet are arranged opposite to each other;
the critical position is an angle when the magnetization direction of the third magnet and the magnetization direction of the fourth magnet are along a same straight line;
the third magnet includes a plurality of third sub-magnets, wherein the plurality of third sub-magnets are arranged at intervals along the circumferential direction; and
the fourth magnet includes a plurality of fourth sub-magnets, wherein the plurality of fourth sub-magnets are arranged at intervals along the circumferential direction.

46. The handheld gimbal device according to claim 45, wherein:
in the first movement stage, the magnetization directions of the plurality of third sub-magnets are staggered with the magnetization directions of the plurality of fourth sub-magnets, and the plurality of third sub-magnets applies the movement resistance or the driving force to the plurality of fourth sub-magnets; and
in the second movement stage, the magnetization directions of the plurality of third sub-magnets are staggered with the magnetization directions of the plurality of fourth sub-magnets, and the plurality of third sub-magnets applies the driving force or the movement resistance to the plurality of fourth sub-magnets.

47. The handheld gimbal device according to claim 46, wherein:
magnetic poles of two adjacent third sub-magnets are in opposite directions, and magnetic poles of two adjacent fourth sub-magnets are in opposite directions.

48. The handheld gimbal device according to claim 39, wherein:
the first member and the second member are rotatable relative to each other; and
one of the first member and the second member is provided with a circular ring magnet, and the other is provided with a yoke pair, wherein the yoke pair is arranged at the outer side of the magnet along the circumferential direction of the adapter structure.

49. The handheld gimbal device according to claim 48, wherein:
the yoke pair includes two yokes, wherein: each yoke is provided with a pole shoe at each of two ends; two pole shoes on one yoke correspond to the first state and the second state respectively; and the critical position is the middle angle between the first state and the second state.

50. The handheld gimbal device according to claim 39, wherein:
the first member and the second member are rotatable relative to each other; and
one of the first member and the second member is provided with a fifth magnet, and the other is provided with a sixth magnet located at two ends of the movement stroke, wherein an attraction force is generated between the fifth magnet and the sixth magnet.

51. The handheld gimbal device according to claim 39, wherein:
the first member and the second member are rotatable relative to each other; and
one of the first member and the second member is provided with a magnet, and the other is provided with yokes located at two ends of the movement stroke, wherein the magnet generates an attraction force to the yokes.

52. The handheld gimbal device according to claim 39, further comprising:
a limit structure at two ends of the rotation stroke.

53. The handheld gimbal device according to claim 52, wherein:
the handle or the first member is provided with a first guide member, the display unit or the second member is provided with a second guide member, wherein the first guide member and the second guide member are engaged with each other for guiding; and
the limit structure includes limit members located at two ends of the first guide member or the second guide member.

54. The handheld gimbal device according to claim 39, wherein:
the first member includes a telescopic component;
during the movement of the display unit, the second member is configured to compress the telescopic component when being driven by an external force; and
after passing the critical position, when the external force disappears, the telescopic component is configured to automatically rebound and extend, thereby driving the second member.

55. The handheld gimbal device according to claim 54, wherein:
the first member and the second member are rotatable relative to each other;
the second member is provided with a protrusion, wherein the protrusion includes a first side and a second side located at two sides of its apex respectively;
the telescopic component is provided with a telescopic member;
in the first active stage, the first side is in contact with the telescopic member and the second member compresses the telescopic member during rotation; and
in the second active stage, the second side is in contact with the telescopic member, and the telescopic member drives the second member to rotate under the action of the rebound force.

56. The handheld gimbal device according to claim 55, wherein:
a telescopic direction of the telescopic member is the radial direction of the adapter structure.

57. The handheld gimbal device according to claim 56, wherein:
the telescopic component includes the telescopic member and an elastic member, wherein the telescopic member is connected to the elastic member and the elastic member is used to provide a rebound force for the telescopic member in the radial direction of the adapter structure.

58. The handheld gimbal device according to claim 55, wherein:
the second member includes a cam, wherein: the cam includes a mount member, and a protrusion and two limit members at the mount member;
the mount member is rotatably connected to the first member; and
the first member is provided with a limit piece, wherein the limit piece is located between the two limit members and is used to limit the rotation stroke of the second member.

59. The handheld gimbal device according to claim 55, wherein:
a telescopic direction of the telescopic member is the axial direction of the adapter structure.

60. The handheld gimbal device according to claim 59, wherein:
the second member is provided with a plurality of protrusions, wherein the plurality of protrusions is arranged at intervals along the circumferential direction of the second member; and
the telescopic component includes a plurality of telescopic members, wherein the plurality of telescopic members are arranged at intervals along the circumferential direction of the telescopic component and the plurality of telescopic members are engaged with the plurality of protrusions one by one.

61. The handheld gimbal device according to claim 60, wherein:
the first member includes a first convex-concave structure and an elastic member, and the second member includes a second convex-concave structure;
the first convex-concave structure and the second convex-concave structure are arranged relatively to each other along the axial direction of the adapter structure;
the elastic member is used to provide a rebound force for the first convex-concave structure in the axial direction of the adapter structure; and
the first convex-concave structure is the telescopic component, wherein convex parts of the first convex-concave structure are used as the plurality of telescopic members and the second convex-concave structure is provided with the plurality of protrusions.

62. The handheld gimbal device according to claim 30, further comprising:
an operation module;
wherein the operation module is movably arranged at the handle, and is configured to drive the display unit to move to switch between the first state and the second state when the operation module moves.

63. The handheld gimbal device according to claim 62, wherein:
the display unit is configured to rotate relative to the handle, and the display unit is connected to the operation module via a connection rod mechanism.

64. The handheld gimbal device according to claim 63, wherein:
the connection rod mechanism includes a connection plate and a track plate;
the display unit is connected to the connection plate;
the connection plate is provided with a first guide column;
the track plate is provided with a limit guide groove;
the first guide column is at least partially located in the limit guide groove; and
when the operation module moves along the length direction of the handle, the connection plate is rotated relative to the track plate by the movement of the first guide column in the limit guide groove.

65. The handheld gimbal device according to claim 64, wherein:
the connection rod mechanism further includes a crank and a transmission structure;
the crank is rotatably connected to the connection plate and is connected to the operation module through the transmission structure; and
when the operation module moves along the length direction of the handle, the crank and the connection plate are driven to rotate relative to the track plate through the transmission structure.

66. The handheld gimbal device according to claim 65, wherein:
the track plate is also provided with a track groove, and the connection plate is also provided with a second guide column, wherein the second guide column passes through the track groove and is rotatably connected with the crank.

67. The handheld gimbal device according to claim 65, wherein:
the transmission structure includes a gear and a rack, wherein: the rack connects the operation module and the gear, and the gear is connected to the crank.

68. The handheld gimbal device according to claim 65, wherein:
the operation module is configured to be connected to the connection rod mechanism through the transmission structure, such that there is no physical interference between the display unit and the operation module during the linkage process.

69. The handheld gimbal device according to claim 30, further comprising:
a bracket;
wherein:
the bracket is rotatably arranged at the handle;
the display unit is arranged at an outer wall of the bracket;
the bracket is configured to rotate to switch between the first state and the second state;
the bracket is provided with an accommodation groove;
in the first state, the handle is located in the accommodation groove; and
in the second state, the handle is located outside the accommodation groove.

70. The handheld gimbal device according to claim 69, wherein:
the accommodation groove is generally U-shaped.

71. The handheld gimbal device according to claim 69, wherein:
the bracket is also provided with an operation member, and the operation member and the display unit are located at the same outer wall of the bracket.

72. The handheld gimbal device according to claim 30, wherein:
the gimbal includes a first axis assembly, a second axis assembly and a third axis assembly which are connected in sequence, wherein:
the first axis assembly is used to connect to a load, and the third axis assembly is connected to the handle; and
the first axis assembly is a roll axis assembly, the second axis assembly is a pitch axis assembly, and the third axis assembly is a yaw axis assembly; or, the first axis assembly is a roll axis assembly, the second axis assembly is a yaw axis assembly, and the third axis assembly is a pitch axis assembly; or the first axis assembly is a pitch axis assembly, the second axis assembly is a roll axis assembly, and the third axis assembly is a yaw axis assembly.

73. The handheld gimbal device according to claim 30, wherein:
the display unit has at least one of functions of: controlling a photographing mode of the handheld gimbal device, controlling working parameters of the handheld gimbal device, displaying the working parameters of the handheld gimbal device, or displaying the photographing picture of the gimbal.

74. The handheld gimbal device according to claim 30, wherein:
the handle is provided with a joystick, wherein the joystick is configured to receive instructions to achieve at least one of the following functions of: controlling the rotation of the gimbal, controlling the switch between different photos on the display unit, or controlling the switch between photographing modes of the gimbal.

75. The handheld gimbal device according to claim 30, wherein:
the display unit is connected to the handle via an adapter structure;
the adapter structure includes a rotation shaft;
the handheld gimbal device includes a flexible cable;
a circuit board is provided in the handle;
the flexible cable passes through the rotation shaft and connects the display unit to the circuit board;
the flexible cable includes a first end member, a connection member and a second end member; and
the connection member connects the first end member and the second end member, and the connecting member is formed by folding at least two layers of the cable.

76. The handheld gimbal device according to claim 75, wherein:
the connection member is bent into a first section, a connection section, and a second section, wherein: the connection section connects the first section and the second section, the first section is connected to the first end member, the second section is connected to the second end member, and the connection section is located inside the rotation shaft.

77. The handheld gimbal device according to claim 76, wherein:
at least one of the first section, the connection section and the second section is wrapped with a protective layer.

78. The handheld gimbal device according to claim 30, wherein:
the handle further includes:
an upper cover and a bottom cover, wherein an accommodation space is provided in the handle;
a heating element, wherein the heating element is located in the accommodation space; and
a first heat sink, wherein: the first heat sink is heat-conductively connected to the heating element and heat-conductively connected to at least one of the upper cover or the bottom cover, and the first heat sink is configured to conduct heat emitted by the heating element to at least one of the upper cover or the bottom cover.

79. The handheld gimbal device according to claim 78, wherein:
the upper cover is connected to the first heat sink via a first heat conducting member, and/or the bottom cover is connected to the first heat sink via a second heat conducting member.

80. The handheld gimbal device according to claim 79, wherein:
the first heat-conducting member includes a heat-conducting gel, a heat-conducting pad or a graphite sheet; and
the second heat-conducting member includes a heat-conducting gel, a heat-conducting pad or a graphite sheet.

81. The handheld gimbal device according to claim 79, wherein:
the first heat sink includes a heat spreader or a heat pipe.

82. The handheld gimbal device according to claim 30, wherein:
the handle is provided with an accommodation space;
a heating element is arranged in the accommodation space;
the display unit is connected to the handle via an adapter structure;
the display unit is provided with second heat sinks; and
the heating element is thermally connected to the second heat sinks via the adapter structure.

83. The handheld gimbal device according to claim 82, wherein:
a plurality of second heat sinks are disposed inside the display unit along the length direction of the display unit.

84. The handheld gimbal device according to claim 82, wherein:
the display unit is connected to a back shell, and the second heat sinks are attached to the back shell.

85. The handheld gimbal device according to claim 82, wherein:
the second heat sinks include a metal plate and a graphite sheet which are stacked.

86. The handheld gimbal device according to claim 82, wherein:
the adapter structure includes a first member and a second member that are rotatably engaged with each other;
one of the first member and the second member is fixed to the handle, and the other is fixed to the display unit; and
a gap between the first member and the second member is filled with thermal conductive grease.

87. The handheld gimbal device according to claim 30, wherein:
the display unit is configured to be foldably provided at the handle such that the display unit is movable to switch between the first state and the second state.

88. The handheld gimbal device according to claim 87, wherein:
the display unit is configured to have a folded state and an unfolded state;
the folded state is the first state, and the unfolded state is the second state;
the display unit includes a fixed screen and a rotatable screen;
the fixed screen is fixed to the side wall of the handle, and the rotatable screen is rotatably connected to one side of the fixed screen through a folding structure;
when the display unit is in the folded state, the rotatable screen is superimposed on the fixed screen and the side of the rotatable screen facing away from the fixed screen is the display surface; and
when the display unit is in the unfolded state, the rotatable screen and the fixed screen are arranged side by side and the rotatable screen and the side of the fixed screen facing away from the mount surface are combined to form the display surface.

89. The handheld gimbal device according to claim 30, wherein:
the display unit is configured to be retractably arranged at the handle such that the display unit is movable to switch between the first state and the second state.

90. The handheld gimbal device according to claim 89, wherein:
the display unit is configured to have a storage state and an expanded state, wherein the storage state is the first state and the expanded state is the second state;
the display unit includes at least two sub-screens, and the at least two sub-screens are able to slide relative to each other;
when the at least two sub-screens slide to the expanded state, the display surfaces of the at least two sub-screens are flush; and
when the at least two sub-screens slide to the storage state, the at least two sub-screens are arranged to overlap.

91. The handheld gimbal device according to claim 30, further comprising:
a controller, configured to: in response to the display unit switching between the first state and the second state, control an operation state of the handheld gimbal device to change.

92. The handheld gimbal device according to claim 91, wherein:
in response to the display unit switching from the first state to the second state, the controller controls the handheld gimbal device in the power-off or sleep state to power on; and/or, in response to the display unit switching from the second state to the first state, the controller controls the handheld gimbal device in the power-on state to remain in the power-on state or to power off or sleep.

93. The handheld gimbal device according to claim 92, wherein:
in response to the display unit switching from the first state to the second state, the controller controls the handheld gimbal device in the power-off or sleep state to power on and start the photographing or recording function.

94. The handheld gimbal device according to claim 92, further comprising:
a first interactive module;
wherein after the first interactive module is triggered, in response to the display unit switching from the second state to the first state, the controller controls the handheld gimbal device to remain in the power-on state.

95. The handheld gimbal device according to claim 92 or 94, wherein:
a graphical user interface of the display unit is provided with prompt information; and
in response to the display unit switching from the second state to the first state, the prompt information is used to prompt the user whether to power off or sleep.

96. The handheld gimbal device according to claim 91, wherein:
in response to the handheld gimbal device being powered on, the controller controls the attitude of the gimbal to be the unfolded attitude; and/or, in response to the handheld gimbal device being powered off or in sleep mode, the controller controls the attitude of the gimbal to be the retracted attitude.

97. The handheld gimbal device according to claim 91, wherein:
the photographing modes of the handheld gimbal device include at least a first photographing mode and a second photographing mode;
in response to the display unit switching from the first state to the second state, the controller controls the handheld gimbal device to be set to the second photographing mode; and
in response to the display unit switching from the second state to the first state, the controller controls the handheld gimbal device to be set to the first photographing mode.

98. The handheld gimbal device according to claim 97, wherein:
the first photographing mode is a vertical photographing mode, and the second photographing mode is a horizontal photographing mode.

99. The handheld gimbal device according to claim 97, wherein:
the controller controls the attitude change of the gimbal such that the handheld gimbal device switches between the first photographing mode and the second photographing mode; or
when the attitude of the gimbal remains unchanged, the controller controls an image sensor of the photographing module to rotate such that the handheld gimbal device switches between the first photographing mode and the second photographing mode; or
the controller controls a display frame to change to adapt to the first photographing mode and the second photographing mode.

100. The handheld gimbal device according to claim 97, wherein:
when the handheld gimbal device is in the power-off or sleep state, in response to the display unit switching from the first state to the second state, the controller controls the handheld gimbal device to power on and enter the second photographing mode; and
in response to the display unit switching from the second state to the first state, and when the handheld gimbal device remains in the power-on state, the controller controls the handheld gimbal device to switch from the second photographing mode to the first photographing mode.

101. The handheld gimbal device according to claim 91 or 97, further comprising:
a second interactive module;
wherein after the second interactive module is triggered, the controller controls the photographing mode of the handheld gimbal device not to change as the display unit switches between the first state and the second state.

102. The handheld gimbal device according to claim 91 or 97, wherein:
in response to the handheld gimbal device being in a recording state, the controller controls the photographing mode of the handheld gimbal device not to change as the display unit switches between the first state and the second state.

103. The handheld gimbal device according to claim 91, wherein:
in response to the number of times the display unit switches between the first state and the second state, the controller controls the gimbal to change between a front photographing and selfie.

104. The handheld gimbal device according to claim 91, wherein:
the display unit is rotatable relative to the handle, and the controller controls the gimbal to rotate to a corresponding angle according to the rotation angle of the display unit.

105. The handheld gimbal device according to claim 91, further comprising:
a position sensor;
wherein the position sensor is configured to detect the position of the display unit, and the controller controls the operation state of the handheld gimbal device according to the position information of the display unit.

106. The handheld gimbal device according to claim 105, wherein:
the position sensor includes a trigger switch; and
in response to the display unit switching from the first state to the second state, the trigger switch is triggered, and the controller controls the handheld gimbal device in the power-off or sleep state to power on according to the triggered signal of the trigger switch.

107. The handheld gimbal device according to claim 30, further comprising:
a controller;
wherein in response to the gimbal reaching any attitude, the controller controls the gimbal to photograph in multiple directions around the current attitude and combine them into a panoramic image.

108. A handheld gimbal device comprising:
a handle including a mount surface;
a display unit arranged at the mount surface, wherein: the display unit has a first state and a second data; the display unit is configured to be movable such that it is able to reversibly switch between a first state and a second state; and a dimension of the display unit in the first state along a lateral direction of the handle is smaller than the dimension of the display unit in the second state along the lateral direction of the handle;
a gimbal arranged at the handle; and
a controller configured to control the switch of the operation state of the handheld gimbal device in response to the display unit switching between the first state and the second state.

109. The handheld gimbal device according to claim 108, wherein:
in response to the display unit switching from the first state to the second state, the controller controls the handheld gimbal device in the power-off or sleep state to power on; and/or, in response to the display unit switching from the second state to the first state, the controller controls the handheld gimbal device in the power-on state to remain in the power-on state or to power off or sleep.

110. The handheld gimbal device according to claim 109, wherein:
in response to the display unit switching from the first state to the second state, the controller controls the handheld gimbal device in the power-off or sleep state to power on and start the photographing or recording function.

111. The handheld gimbal device according to claim 109, further comprising:
a first interactive module;
wherein after the first interactive module is triggered, in response to the display unit switching from the second state to the first state, the controller controls the handheld gimbal device to remain in the power-on state.

112. The handheld gimbal device according to claim 109 or 111, wherein:
a graphical user interface of the display unit is provided with prompt information; and
in response to the display unit switching from the second state to the first state, the prompt information is used to prompt the user whether to power off or sleep.

113. The handheld gimbal device according to claim 108, wherein:
in response to the handheld gimbal device being powered on, the controller controls the attitude of the gimbal to be the unfolded attitude; and/or, in response to the handheld gimbal device being powered off or in sleep mode, the controller controls the attitude of the gimbal to be the retracted attitude.

114. The handheld gimbal device according to claim 108, wherein:
the photographing modes of the handheld gimbal device include at least a first photographing mode and a second photographing mode;
in response to the display unit switching from the first state to the second state, the controller controls the handheld gimbal device to be set to the second photographing mode; and
in response to the display unit switching from the second state to the first state, the controller controls the handheld gimbal device to be set to the first photographing mode.

115. The handheld gimbal device according to claim 114, wherein:
the first photographing mode is a vertical photographing mode, and the second photographing mode is a horizontal photographing mode.

116. The handheld gimbal device according to claim 114, wherein:
the controller controls the attitude change of the gimbal such that the handheld gimbal device switches between the first photographing mode and the second photographing mode; or
when the attitude of the gimbal remains unchanged, the controller controls an image sensor of the photographing module to rotate such that the handheld gimbal device switches between the first photographing mode and the second photographing mode; or
the controller controls a display frame to change to adapt to the first photographing mode and the second photographing mode.

117. The handheld gimbal device according to claim 114, wherein:
when the handheld gimbal device is in the power-off or sleep state, in response to the display unit rotating from the first state to the second state, the controller controls the handheld gimbal device to power on and enter the second photographing mode; and
in response to the display unit rotating from the second state to the first state, and when the handheld gimbal device remains in the power-on state, the controller controls the handheld gimbal device to switch from the second photographing mode to the first photographing mode.

118. The handheld gimbal device according to claim 114, further comprising:
a second interactive module;
wherein after the second interactive module is triggered, the controller controls the photographing mode of the handheld gimbal device not to change as the display unit switches between the first state and the second state.

119. The handheld gimbal device according to claim 114, wherein:
in response to the handheld gimbal device being in a recording state, the controller controls the photographing mode of the handheld gimbal device not to change as the display unit switches between the first state and the second state.

120. The handheld gimbal device according to claim 108, wherein:
in response to the number of times the display unit switches between the first state and the second state, the controller controls the gimbal to change between front photographing and Selfie photographing.

121. The handheld gimbal device according to claim 108, wherein:
the display unit is rotatable relative to the handle, and the controller is used to control the gimbal to rotate to a corresponding angle according to the rotation angle of the display unit.

122. The handheld gimbal device according to claim 108, further comprising:
a position sensor;
wherein the position sensor is configured to detect the position of the display unit, and the controller controls the operation state of the handheld gimbal device according to the position information of the display unit.

123. The handheld gimbal device according to claim 122, wherein:
the position sensor includes a trigger switch; and
in response to the display unit switching from the first state to the second state, the trigger switch is triggered, and the controller controls the handheld gimbal device in the power-off or sleep state to power on according to the triggered signal of the trigger switch.

124. The handheld gimbal device according to claim 108, wherein:
in response to the gimbal reaching any attitude, the controller controls the gimbal to photograph in multiple orientations around the current attitude and combine them into a panoramic image.

125. A handheld gimbal device comprising:
a handle including a mount surface and a first interactive apparatus for receiving user instructions;
a display unit rotatably arranged at the mount surface such that the display unit is able to reversibly switch between a first state and a second state, wherein: the display unit includes a display surface, a rotation axis of the display unit is perpendicular to the display surface, the display surface faces away from the mount surface in both the first state and the second state, and a distance between a lower edge of the display unit in the first state and the first interactive apparatus is smaller than the distance between the lower edge of the display unit in the second state and the first interactive apparatus; and
a gimbal arranged at the handle.

126. The handheld gimbal device according to claim 125, wherein:
the handle is further provided with a second interactive apparatus for receiving user instructions;
in the first state, the second interactive apparatus is arranged at the back of the display unit; and
in the second state, the second interactive apparatus is arranged at the lower side of the display unit, such that the second interactive apparatus is exposed.

127. The handheld gimbal device according to claim 125, wherein:
in the first state, a length direction of the display unit is along a length direction of the handle; and, in the second state, the length direction of the display unit and the length direction of the handle form an angle larger than zero.

128. The handheld gimbal device according to claim 125 or 127, wherein:
the first state is a state in which the display unit is in a vertical screen state, and the second state is a state in which the display unit is in a horizontal screen state.

129. The handheld gimbal device according to claim 125, wherein:
the display unit has a length dimension and a width dimension smaller than the length dimension;
in the first state, the width direction of the display unit is arranged along the lateral direction of the handle; and
in the second state, the length direction of the display unit is arranged along the lateral direction of the handle.

130. The handheld gimbal device according to claim 125 or 129, wherein:
in the first state, a periphery of the display unit is flush with the periphery of the mount surface, or the display unit is located within the mount surface; and
in the second state, the display unit extends out of the mount surface along two lateral ends of the handle.

131. The handheld gimbal device according to claim 125, wherein:
a rotational stroke of the display unit includes a first movement stage from the first state to a critical position, and a second movement stage from the critical position to the second state;
in response to the display unit switching from the first state to the second state, the display unit is able to automatically reach the second state after passing the critical position; and
in response to the display unit switching from the second state to the first state, the display unit is able to automatically reach the first state after passing the critical position.

132. The handheld gimbal device according to claim 129, wherein:
the display unit is connected to the handle via an adapter structure, and the adapter structure enables the display unit to automatically and reversibly reach the first state or the second state.

133. The handheld gimbal device according to claim 132, wherein:
the adapter structure includes a first member and a second member that are rotatably engaged with each other;
the first member is connected to the handle, and the second member is connected to the display unit;
a direction of the force between the first member and the second member is configured to change during the rotation of the display unit, such that: when the display unit switches from the first state to the second state, the first member applies a movement resistance to the second member in the first movement stage, and the first member applies a driving force to the second member in the second movement stage; and, when the display unit switches from the second state to the first state, the first member applies a movement resistance to the second member in the second movement stage, and the first member applies a driving force to the second member in the first movement stage.

134. The handheld gimbal device according to claim 133, wherein:
the force between the first member and the second member is a magnetic force.

135. The handheld gimbal device according to claim 134, wherein:
the first member includes a first magnet, and the second member includes a second magnet, wherein the first magnet and the second magnet are arranged opposite to each other;
a repulsive force is generated between the first magnet and the second magnet; and
the critical position is an angle when the magnetization direction of the first magnet and the magnetization direction of the second magnet are along a same straight line.

136. The handheld gimbal device according to claim 135, wherein:
in the first movement stage, the magnetization direction of the first magnet is staggered with the magnetization direction of the second magnet, and the first magnet applies the movement resistance or the driving force to the second magnet; and
in the second movement stage, the magnetization direction of the first magnet is staggered with the magnetization direction of the second magnet, and the first magnet applies the driving force or the movement resistance to the second magnet.

137. The handheld gimbal device according to claim 135 or 136, wherein:
the first magnet is in a circular ring shape, and the second magnet is in a circular ring shape; and
the first magnet is sleeved on the outside of the second magnet, or the second magnet is sleeved on the outside of the first magnet.

138. The handheld gimbal device according to claim 137, wherein:
the first magnet and the second magnet are at least partially staggered in the axial direction of the adapter structure.

139. The handheld gimbal device according to claim 129, further comprising:
a limit structure at two ends of the rotation stroke.

140. The handheld gimbal device according to claim 139, wherein:
the handle or the first member is provided with a first guide member, the display unit or the second member is provided with a second guide member, wherein the first guide member and the second guide member are engaged with each other for guiding; and
the limit structure includes limit members located at two ends of the first guide member or the second guide member.

141. The handheld gimbal device according to claim 125, wherein:
the display unit has at least one of functions of: controlling a photographing mode of the handheld gimbal device, controlling working parameters of the handheld gimbal device, displaying the working parameters of the handheld gimbal device, or displaying the photographing picture of the gimbal.

142. The handheld gimbal device according to claim 125, further comprising:
a controller, configured to: in response to the display unit switching between the first state and the second state, control an operation state of the handheld gimbal device to change.

143. The handheld gimbal device according to claim 142, wherein:
in response to the display unit switching from the first state to the second state, the controller controls the handheld gimbal device in the power-off or sleep state to power on; and/or, in response to the display unit switching from the second state to the first state, the controller controls the handheld gimbal device in the power-on state to power off or sleep.

144. The handheld gimbal device according to claim 142, wherein:
in response to the display unit switching from the first state to the second state, the controller controls the handheld gimbal device in the power-off or sleep state to power on and start the photographing or recording function.

145. The handheld gimbal device according to claim 143, further comprising:
a first interactive module;
wherein after the first interactive module is triggered, in response to the display unit switching from the second state to the first state, the controller controls the handheld gimbal device to remain in the power-on state.

146. The handheld gimbal device according to claim 143 or 145, wherein:
a graphical user interface of the display unit is provided with prompt information; and
in response to the display unit switching from the second state to the first state, the prompt information is used to prompt the user whether to power off or sleep.

147. The handheld gimbal device according to claim 142, wherein:
the photographing modes of the handheld gimbal device include at least a first photographing mode and a second photographing mode;
in response to the display unit switching from the first state to the second state, the controller controls the handheld gimbal device to be set to the second photographing mode; and
in response to the display unit switching from the second state to the first state, the controller controls the handheld gimbal device to be set to the first photographing mode.

148. The handheld gimbal device according to claim 147, wherein:
the first photographing mode is a vertical photographing mode, and the second photographing mode is a horizontal photographing mode.

149. The handheld gimbal device according to claim 147, wherein:
the controller controls the attitude change of the gimbal such that the handheld gimbal device switches between the first photographing mode and the second photographing mode; or
when the attitude of the gimbal remains unchanged, the controller controls an image sensor of the photographing module to rotate such that the handheld gimbal device switches between the first photographing mode and the second photographing mode; or
the controller controls a display frame to change to adapt to the first photographing mode and the second photographing mode.

150. The handheld gimbal device according to claim 147, wherein:
when the handheld gimbal device is in the power-off or sleep state, in response to the display unit switching from the first state to the second state, the controller controls the handheld gimbal device to power on and enter the second photographing mode; and
in response to the display unit switching from the second state to the first state, and when the handheld gimbal device remains in the power-on state, the controller controls the handheld gimbal device to switch from the second photographing mode to the first photographing mode.

151. The handheld gimbal device according to claim 142 or 147, further comprising:
a second interactive module;
wherein after the second interactive module is triggered, the controller controls the photographing mode of the handheld gimbal device not to change as the display unit switches between the first state and the second state.

152. The handheld gimbal device according to claim 142 or 147, wherein:
in response to the handheld gimbal device being in a recording state, the controller controls the photographing mode of the handheld gimbal device not to change as the display unit switches between the first state and the second state.

153. The handheld gimbal device according to claim 125, further comprising:
a position sensor;
wherein the position sensor is configured to detect the position of the display unit, and the controller controls the operation state of the handheld gimbal device according to the position information of the display unit.

154. The handheld gimbal device according to claim 153, wherein:
the position sensor includes a trigger switch; and
in response to the display unit switching from the first state to the second state, the trigger switch is triggered, and the controller controls the handheld gimbal device in the power-off or sleep state to power on according to the triggered signal of the trigger switch.

155. A photographing assembly comprising:
a handheld gimbal device according to any one of claims 1 to 154; and
a photographing module arranged at the gimbal.
